# EUROPÄISCHE PATENTSCHRIFT

(11) **EP 4 008 622 B1**
(45) Veröffentlichungstag und Bekanntmachung des Hinweises auf die Patenterteilung: **04.09.2024**
(21) Anmeldenummer: 21401052.2
(22) Anmeldetag: 02.12.2021
(51) Int. Cl.: B62M 9/125

(54) **HINTERES SCHALTWERK ZUR KOAXIALEN ANBINDUNG AN EINEM FAHRRAD-RAHMEN**
REAR DERAILLEUR FOR COAXIAL CONNECTION TO A BICYCLE FRAME
MÉCANISME DE COMMUTATION ARRIÈRE DESTINÉ À LA LIAISON COAXIALE À UN CADRE DE BICYCLETTE

(30) Priorität: 03.12.2020 DE 102020007377; 29.06.2021 DE 102021003319; 30.11.2021 DE 102021131414
(43) Veröffentlichungstag der Anmeldung: 08.06.2022
(73) Patentinhaber: SRAM Deutschland GmbH, 97424 Schweinfurt (DE)
(72) Erfinder: Braedt, Henrik, 97456 Dittelbrunn-OT Hambach (DE); Müller, Matthias, 97422 Schweinfurt (DE)

(56) Entgegenhaltungen:
- EP-A1- 3 712 052
- DE-A1- 102018 206 104
- DE-A1- 102020 201 229

## Beschreibung

### Technischer Hintergrund

Ein Fahrrad kann mit einer Antriebsanordnung, wie z.B. einem Kettenantrieb, ausgestattet sein. Fahrrad-Antriebsanordnungen können verwendet werden, um das Drehmoment von einem Fahrer auf ein hinteres Laufrad zu übertragen, um das Fahrrad anzutreiben. Eine Antriebsanordnung kann zum Beispiel das Drehmoment von einer vorderen Kettenradanordnung über eine Kette auf ein hinteres Kettenrad oder Ritzel, etwa ein Ritzel einer sog. Ritzelkassette oder eines sog. Ritzelpakets, übertragen, um ein hinteres Laufrad anzutreiben. Eine solche Antriebsanordnung kann als Antriebsstrang bezeichnet werden.

Kettenradbaugruppen für Fahrräder können ein oder mehrere einzelne Kettenräder aufweisen. Die vorderen Kettenräder werden allgemein als Kettenblätter bezeichnet. Kettenblätter können mit Hilfe verschiedenartiger Befestigungsvorrichtungen befestigt werden. Ein Kettenblatt kann z.B. mit Kettenblattschrauben befestigt oder direkt an der Kurbel eines Fahrrades montiert werden. Die hinteren Kettenräder werden häufig als Ritzel bezeichnet. Eine Mehrzahl von hinteren Kettenrädern oder Ritzeln kann als Kassette, Ritzelkassette oder Ritzelpaket bezeichnet werden. Eine solche Kassette ist typischerweise so konfiguriert, dass sie an einem Freilaufteil eines hinteren Laufrades befestigt werden kann. Eine Kassette kann z.B. an einem Freilaufkörper eines Hinterrades mit Hilfe einer Keil- und/oder Gewindeverbindung befestigt werden.

Die Ausrichtung einer vorderen Kettenblattgruppe mit einer hinteren Ritzelkassette beeinflusst die Leistung der Kette. Zum Beispiel kann eine vordere Kettenblattbaugruppe ein einziges Kettenblatt aufweisen, welches nach einem bestimmten Ritzel der hinteren Ritzelkassette ausgerichtet ist. Wenn die Kette das einzelne Kettenblatt mit diesem im Wesentlichen ausgerichteten einzelnen hinteren Ritzel verbindet, steht die Kette unter geringer oder keiner seitlichen Belastung. Wenn die Kette jedoch seitlich zu einem anderen Ritzel der Kassette bewegt wird, z.B. durch einen hinteren Umwerfer oder ein hinteres Schaltwerk einer Kettenschaltung des Antriebsstrangs, erfährt die Kette eine gewisse seitliche Belastung. Entsprechende seitliche Belastungen der Kette treten auf, wenn die vordere Kettenblattbaugruppe mehrere Kettenblätter aufweist, zwischen denen die Kette durch einen vorderen Umwerfer oder ein vorderes Schaltwerk der Kettenschaltung bewegt wird.

Für eine gute Leistung einer solchen Kettenschaltung ist die Funktions- und Leistungsfähigkeit des im Fachgebiet auch als hinterer Fahrradderailleur oder hinteres Schaltwerk bezeichneten hinteren Umwerfers von besonderer Bedeutung. Dieser dient nicht nur zum Durchführen von Schaltvorgängen durch Umwerfen der Kette zwischen mehreren benachbarten Ritzeln des Ritzelsatzes des Fahrrads. Eine weitere, ebenfalls sehr wichtige Funktion des hinteren Schaltwerks ist die Gewährleistung einer ausreichenden Kettenspannung. Ein hinteres Schaltwerk hat hierzu regelmäßig den folgenden Aufbau. Es ist ein in Fachgebiet auch als B-Knuckle bezeichnetes Basiselement vorgesehen, mit dem der Umwerfer an dem Fahrrad montiert wird. Ferner gibt es ein im Fachgebiet auch als P-Knuckle bezeichnetes bewegliches Element, welches beweglich an das Basiselement gekoppelt ist, und eine regelmäßig als sog. Kettenkäfig ausgeführte Kettenführung, die an das bewegliche Element zur Rotation bezüglich einer Rotationsachse beweglich gekoppelt ist. Das bewegliche Element ist in seitlicher (axialer) Richtung beweglich, um die Kettenführung entlang der Ritzel des Ritzelsatzes zu bewegen, so dass die Kette von einem Ausgangsritzel zu einem Zielritzel überführt werden kann. Die Kettenführung ist durch eine Spannfeder oder dergleichen elastisch in einer Rotationsrichtung vorgespannt, nämlich in Richtung einer Spannung der mittels der Kettenführung geführten Kette des Fahrrads, um die Kette im gespannten Zustand zu halten bzw. den gespannten Zustand nach vorangehendem Zustand der ungenügenden Kettenspannung wiederherzustellen.

Diese Rotations- oder Schwenkrichtung wird hier auch als "Kettenspannrichtung" angesprochen. Eine Verdrehung der Kettenführung in dieser Richtung erhöht die Kettenspannung und verringert gleichzeitig die Spannung der auf die Kettenführung wirkenden Spannfeder.

Je nach momentanem Ritzel des Ritzelsatzes, mit dem die Kette zu einem gegebenen Zeitpunkt eingreift, wird die Kettenführung unterschiedliche Schwenkpositionen relativ zum beweglichen Element bezüglich der Rotationsachse einnehmen.

Einwirkungen auf die Kette und die Kettenführung ergeben sich nicht nur aus dem Schalten der Kettenschaltung durch Überführung der Kette zwischen verschiedenen Ritzeln des Ritzelsatzes, sondern auch aus dem Fahrbetrieb selbst. So sind das Schaltwerk und die Kette etwa beim Fahren auf unebenem Gelände Schlägen und Erschütterungen ausgesetzt, die auf die Kettenführung in einer zur "Kettenspannrichtung" entgegengesetzten Schwenkrichtung wirken können. Eine Verdrehung der Kettenführung in dieser zur "Kettenspannrichtung" entgegengesetzten Richtung vergrößert die Spannung der auf die Kettenführung wirkenden Spannfeder und führt unmittelbar zu einer Reduzierung der Kettenspannung (etwa wenn eine unmittelbare Einwirkung auf die Kettenführung diese in dieser Richtung verdreht) oder zumindest zu einer erheblichen Gefahr einer nachfolgenden Reduzierung der Kettenspannung unter das notwendige Maß. Negative Folge können Spannungsabfälle der Kette mit unerwünschtem Spiel bzw. "Schlackern" der Kette sein, im Extremfall hin bis zu einem Abspringen der Kette von dem Ritzelsatz.

Im Falle einer reibschlüssigen Fixierung des hinteren Schaltwerks am Fahrradrahmen in Bezug auf die vorgesehene Winkelstellung des Schaltwerks, nämlich der in Bezug auf die Vorwärts- oder Rückwärts-Richtung des Fahrrads bzw. in der "Kettenspannrichtung" oder entgegen der "Kettenspannrichtung" Winkelstellung, können auf das hintere Schaltwerk etwa auf unebenen Gelände oder durch in den Fahrweg vorstehende Äste oder dergleichen oder bei Stürzen ausgeübte Schläge zu einer unerwünschten Verstellung der Winkelstellung des hinteren Schaltwerks führen, was aber gegenüber der Gefahr einer Beschädigung des Schaltwerks durch solche Schläge im Falle einer formschlüssigen Fixierung des hinteren Schaltwerks in Bezug auf diese Winkelstellung in der Regel zu bevorzugen ist.

Für eine gute Leistung einer solchen Kettenschaltung ist auch eine richtige Positionierung und Ausrichtung speziell des hinteren Schaltwerks am Rahmen des Fahrrads von großer Bedeutung. Es wurde erkannt, dass koaxiale Ausrichtungsmerkmale bei der Antriebsanordnung angewendet werden können. Beispielsweise kann eine einzelne Komponente als Referenz für die Ausrichtung verschiedener anderer Komponenten der Antriebsanordnung dienen. Beispielsweise können sowohl ein Schaltwerk als auch eine Kassette koaxial zu einer Achse ausgerichtet bzw. montiert sein. Die Ausrichtung einer Komponente des Antriebsstrangs, wie des Schaltwerks zu dieser Achse, kann die Ungenauigkeiten bei verschiedenen Anwendungen aufgrund von Toleranzvariationen der Räder oder des Rahmens reduzieren. Die koaxiale Ausrichtung des Schaltwerks mit der Radachse bzw. Kassette kann auch einen gleichmäßigen radialen Abstand zwischen Teilen des Schaltwerks und der Kassette über verschiedene Schwenkwinkel des Schaltwerks hinweg erleichtern.

Die Antriebsanordnung kann auch für Steifigkeit konfiguriert werden, um die Präzision zu erhöhen oder/und die relative Ausrichtung von Komponenten zu verbessern. Beispielsweise können einschlägige Komponenten und Elemente des hinteren Schaltwerks, der Hinterradachsanordnung mit der Hinterradnabe und der Ritzelkassette des hinteren Laufrads und die diesen zugeordneten Rahmenschnittstellen des Hinterbaus des Fahrradrahmens so in Bezug aufeinander konfiguriert werden, dass einerseits das Schaltwerk zuverlässig und in höchstens unschädlichem Ausmaß abhängig von Toleranzen richtig relativ zu der Ritzelkassette und der über diese laufende Kette am Rahmen positioniert und montiert ist und zugleich eine gute Steifigkeit erreicht wird, so dass diese richtige Positionierung auch im Fahrbetrieb trotz ggf. größerer und wechselnder Belastungen, je nach dem Untergrund auf dem gefahren wird, erhalten bleibt.

So ist eine entsprechend aufeinander abgestimmte Konfiguration des sog. B-Knuckle (oder Basiselements) eines hinteren Schaltwerks, also derjenigen Teilkomponente eines hinteren Schaltwerks, die an einer zugeordneten Rahmenschnittstelle montiert wird, des Hinterbaus des Fahrradrahmens und speziell dessen Rahmenschnittstellen, an denen die Hinterradachsordnung des hinteren Laufrads und das hintere Schaltwerk montiert wird, und der Hinterradachsanordnung möglich, um Anforderungen unter den angesprochenen Zielsetzungen der richtigen Positionierung und Ausrichtung, Präzision und Steifigkeit gerecht zu werden.

Vor diesem technischen Hintergrund betrifft die vorliegende Erfindung allgemein ein hinteres Schaltwerk einer Fahrradkettenschaltung und die Art und Weise der Montage des hinteren Schaltwerks in Relation zu einer Hinterradachse an einem Fahrradrahmen, und damit auch einen eine geeignete Rahmenschnittstelle für das hintere Schaltwerk aufweisenden Fahrradrahmen eines entsprechenden Fahrrads.

### Stand der Technik

Herkömmlich wurden hintere Schaltwerke am rechten Ausfallende des Hinterbaurahmens mit Hilfe eines gegenüber dem Rahmen gesonderten oder zum Hinterbaurahmen zugehörigen Schaltauges montiert, und zwar in radialer Richtung versetzt gegenüber der Hinterradachse und damit nicht-koaxial in Bezug auf die Hinterradachse. Das auch als "hanger" bekannte Schaltauge wird dazu an seinem einen Ende koaxial mit der Hinterradachse am Hinterbaurahmen festgelegt und an seinem anderen Ende mit dem Basiselement (B-Knuckle) des Schaltwerks verbunden. Das Basiselement ist relativ zum Schaltauge um die B-Achse drehbar.

Im Hinblick auf diverse Nachteile solch einer Montage des hinteren Schaltwerks am Rahmen mittels eines Schaltauges hat die Anmelderin SRAM Deutschland GmbH einen neuen Typ eines hinteren Schaltwerks zur in Bezug auf die Hinterradachse koaxialen Montage an einem Hinterbau eines entsprechend ausgestalteten Fahrradrahmens entwickelt, auf welches anhängige Patentanmeldungen gerichtet sind. Der Fahrradrahmen weist am Rahmenhinterbau eine spezielle Schnittstelle für das hintere Schaltwerk auf, die zugleich, unter Mitwirkung eines Rahmenadapters des hinteren Schaltwerks, als Rahmenschnittstelle für die Hinterachsanordnung auf der einen axialen Rahmenseite dient. Ferner sind diese Rahmenschnittstelle einschließlich dem Basiselement (B-Knuckle) und dem Rahmenadapter und die Rahmenschnittstelle auf der anderen axialen Rahmenseite für die Hinterachsanordnung einerseits und die Hinterachsanordnung anderseits bei diesem neuen Typ des hinteren Schaltwerks erstmalig besonders geeignet in Bezug aufeinander konfiguriert. Hierdurch werden nicht nur die verschiedenen Nachteile der Verwendung eines herkömmlichen Schaltauges überwunden, sondern es kann überdies eine hinreichende oder gar sehr gute Steifigkeit der Anordnung des Schaltwerks an seiner Rahmenschnittstelle erreicht werden. Es kann zuverlässig den eingangs angesprochenen Zielsetzungen der richtigen Positionierung, Ausrichtung und Präzision entsprochen werden.

Es wird diesbezüglich auf die als DE 10 2018 001 253 A1 (kurz DE'253) veröffentlichte Deutsche Patentanmeldung Az. 10 2018 001 253.1, die als EP 3 388 324 A2 veröffentlichte Europäische Patentanmeldung Az. 18 000 255.2, die als TW 2018 34 921 A veröffentlichte Taiwanesische Patentanmeldung Az. 107 107 712, die als CN 10 8622 302 A veröffentlichte Chinesische Patentanmeldung Az. 2018 1021 7966.9 und die als US 2018/0265169 A1 veröffentlichte US-Anmeldung Az. 15/926,194 verwiesen, die auf die SRAM Deutschland GmbH zurückgehen.

Aus diesen Druckschriften ist ein hinteres Schaltwerk zur in Bezug auf eine Hinterradachse koaxialen Montage an einem Hinterbaurahmen eines Fahrrads bekannt. Das bekannte Schaltwerk weist ein Basiselement, einen Schwenkmechanismus, ein bewegliches Element und eine Kettenführungsanordnung auf. Der Schwenkmechanismus verbindet das Basiselement mit dem beweglichen Element und die durch eine Kraftspeicheranordnung in eine Kettenspannrichtung vorgespannte oder vorspannbare Kettenführungsanordnung ist um eine Drehachse drehbar mit dem beweglichen Element verbunden. Das Basiselement umfasst ein erstes Anschlussende zur in Bezug auf die Hinterradachse koaxialen Montage an dem Hinterbaurahmen und ein zweites Anschlussende zur Kopplung mit dem Schwenkmechanismus. Das erste Anschlussende weist einen ersten Arm und einen zweiten Arm auf, die in axialer Richtung voneinander beabstandet angeordnet und zur Montage des Schaltwerks an einem zugeordneten Halterungsabschnitt (insbesondere Ausfallende oder Rahmenauge) eines Hinterbaurahmens mittels eines zugehörigen Adapters eingerichtet sind.

In einem definierten vormontierten Zustand und in einem fertig montierten Zustand befinden sich der erste Arm auf einer axialen Innenseite des Halterungsabschnitts und der zweite Arm auf einer axialen Außenseite des Halterungsabschnitts befinden. Der Adapter umfasst einen Adapterbolzen und eine zugehörige, mit dem Adapterbolzen verschraubbare Adaptermutter. In dem definierten vormontierten Zustand und in dem fertig montierten Zustand ist ein Bolzenkopf des Adapterbolzens auf der axialen Außenseite des Halterungsabschnitts angeordnet und ist die mit dem Adapterbolzen in Schraubeingriff befindliche Adaptermutter auf der axialen Innenseite des Halterungsabschnitts angeordnet.

In dem definierten vormontierten Zustand ist durch Verdrehen des Adapterbolzen in einer Festziehrichtung eine Drehkraft auf die Adaptermutter ausübbar, auf deren Grundlage über wenigstens eine Mitnahmeformation der Adaptermutter und wenigstens eine zugeordnete Gegen-Mitnahmeformation des Basiselements eine Folge-Drehkraft auf das im definierten vormontierten Zustand relativ zum Halterungsabschnitt verdrehbare Basiselement in einer der Festziehdrehrichtung entsprechenden ersten Drehrichtung ausübbar ist. Diese Folge-Drehkraft wirkt entgegen einer auf das Basiselement ausgeübten Gegen-Drehkraft, die unter Vermittlung einer durch die Kettenführungsanordnung geführten Fahrradkette der Fahrradkettenschaltung in einer zur ersten Drehrichtung entgegengesetzten zweiten Richtung auf das das Basiselement ausgeübt wird. Die erste Drehrichtung entspricht der vorstehend angesprochenen "Kettenspannrichtung".

In dem fertig montierten Zustand sind der Bolzenkopf und die Adaptermutter durch axiale Gewindekräfte mit dem Halterungsabschnitt verspannt. Die Adaptermutter ist an einer dem Halterungsabschnitt zugekehrten axialen Seite mit einer Rändelfläche ausgeführt, die in dem fertig montierten Zustand mit einer zugeordneten Anlagefläche an der axialen Innenseite des Halterungsabschnitts eingreift. Das Basiselement ist in dem fertig montierten Zustand an einem Einspannabschnitt seines ersten Arms zwischen dem Adapter und einer Statorbaugruppe einer einem hinteren Laufrad des Fahrrads zugehörigen Hinterradachsordnung axial eingespannt und reibschlüssig gegen Verdrehen fixiert.

Ein solches hinteres Schaltwerk, das dem Oberbegriff von Anspruch 1 zugrunde liegt, ist auch aus den Veröffentlichungen DE 10 2018 206 104 A1 (kurz DE'104), EP 3 556 643 A1, CN 11 0386 220 A, TW 2019 45 244 A und US 2019/0322333 A1 bekannt. Weiterentwicklungen und alternative Lösungen zu diesem hinteren Schaltwerk sind in den Veröffentlichungen DE 10 2020 201 229 A1, EP 3 712 052 A1, CN 11 1720 506 A, TW 2020 39 303 A und US 2020/0298933 A1 sowie in den Veröffentlichungen DE 10 2020 123 208 A1 (kurz DE'208), EP 3 838 731 A2, CN 11 3002 690 A, TW 2021 24 213 A und US 2021/0188396 A1 beschrieben.

Die für die koaxiale Anbringung eines solchen hinteren Schaltwerks ausgeführte Rahmen-Schnittstelle eines Fahrradrahmen-Hinterbaurahmens kann vorteilhaft zugleich dafür geeignet sein, dass alternativ ein herkömmliches Schaltwerk nicht-koaxial zum betreffenden Rahmenauge daran montiert wird, wie sich etwa aus der DE'104 und der DE'208 ergibt. Diese Montage erfolgt mittels eines angepassten Halterungselements, welches typischerweise als "Schaltauge" oder "hanger" bezeichnet wird, aber von herkömmlichen Schaltaugen wie vorstehend angesprochen zu unterscheiden ist.

Im Folgenden wird nur noch auf die kurz auch nur als DE'253 angesprochene Druckschrift DE 10 2018 001 253 A1 ausdrücklich Bezug genommen, auch als Repräsentantin der beiden angesprochenen Patentfamilien entsprechend DE'253 und DE'104. Die nachfolgende Beschreibung der Erfindung in ihren verschiedenen Aspekten und von diese konkretisierenden Ausführungsbeispielen greift auf die in der Druckschrift DE'253 geprägten Definitionen, Zusammenhänge und Begrifflichkeiten zurück, und der Inhalt dieser Druckschrift ist ausdrücklich ein Bestandteil der vorliegenden Erfindungsbeschreibung, nicht nur hinsichtlich der in der DE'253 geprägten Definitionen und technischen Zusammenhänge.

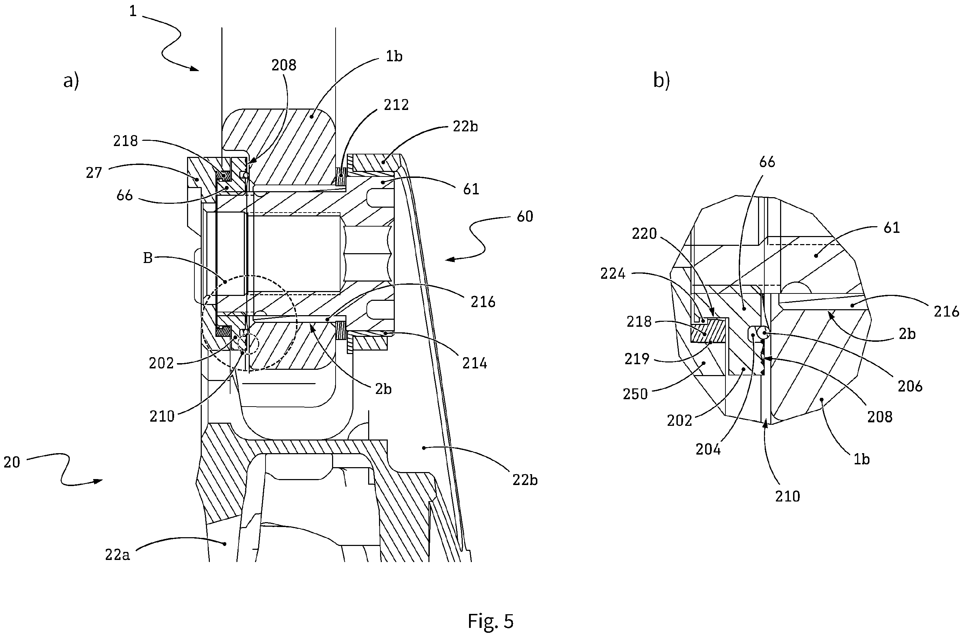

Gemäß der DE'253 wird, wie im Detail aus den dortigen Fig. 5 bis 8 ersichtlich, zur Montage des Schaltwerks 10 ein Rahmenadapter 60 verwendet. Der Rahmenadapter 60 wird mit einem rechten Ausfallende bzw. Rahmenauge des Hinterbaurahmens eines Fahrradrahmens so verschraubt, dass die zu dem Rahmenadapter 60 gehörige Rändelmutter bzw. Adaptermutter 66 (dort auch bezeichnet als Rändelscheibe bzw. Anschlagscheibe) mittels ihrer stirnseitigen Rändelung durch form- bzw. reibschlüssige Anlage an der Innenseite des rechten Rahmenauges eine definierte rotatorische Winkelstellung relativ zu dem Rahmenauge erhält.

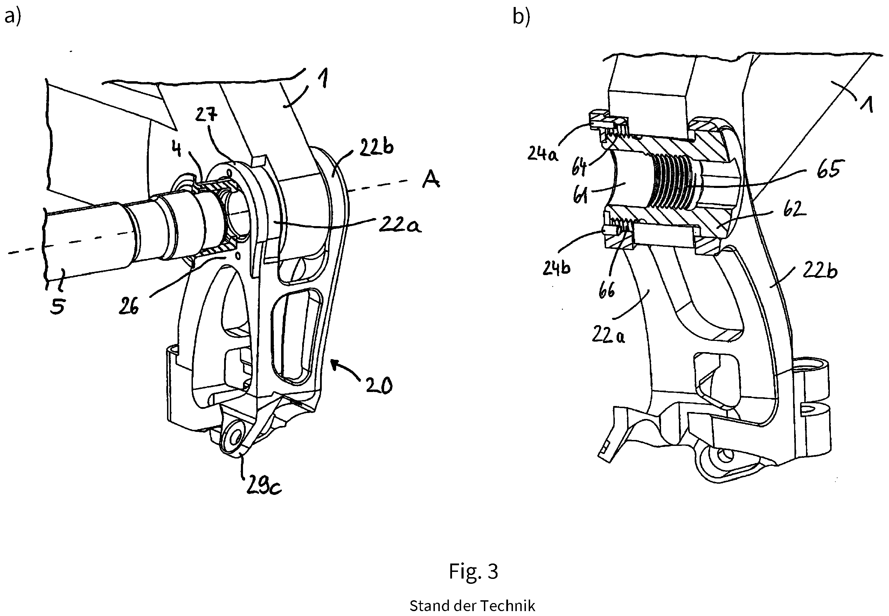

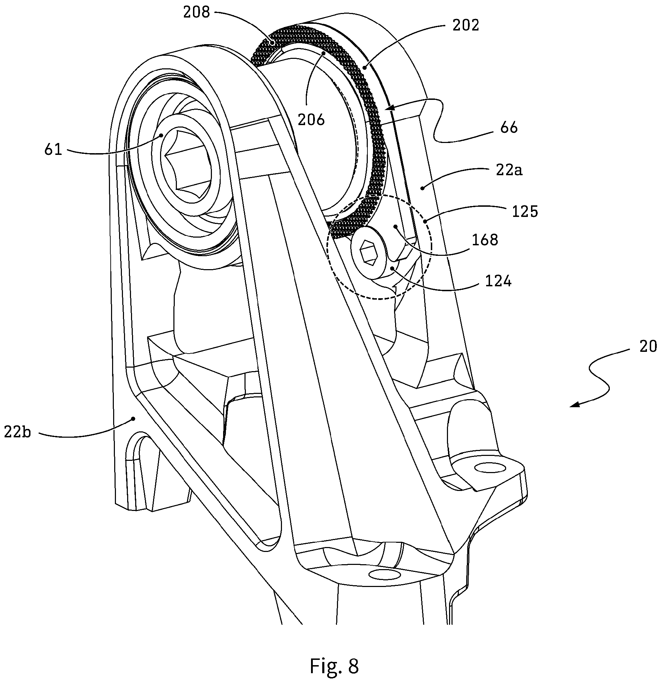

Mittels dieser definierten rotatorischen Winkelstellung der Adaptermutter 66 lässt sich durch Anschlag des Basiselements (sog. B-Knuckle) des Schaltwerks an rotatorischen Anschlagsvorsprüngen 68a/b der Adaptermutter 66 (vgl. Fig. 8 der DE'253) eine entsprechende rotatorische Schwenkposition des Schaltwerks 10 bezogen auf die Fahrrad-Hinterachse bzw. auf das Ausfallende einstellen und fixieren. Hierdurch erhält die Fahrradkette, mittels der in üblicher Weise zwischen dem schaltbeweglichen Element (sog. P-Knuckle 40, vgl. Fig. 3 der DE'253) und der Kettenführungsanordnung (sog. Kettenkäfig 50, vgl. Fig. 3 der DE'253) befindlichen Torsionsfeder die gewünschte bzw. für optimale Schaltfunktion erforderliche Kettenspannung.

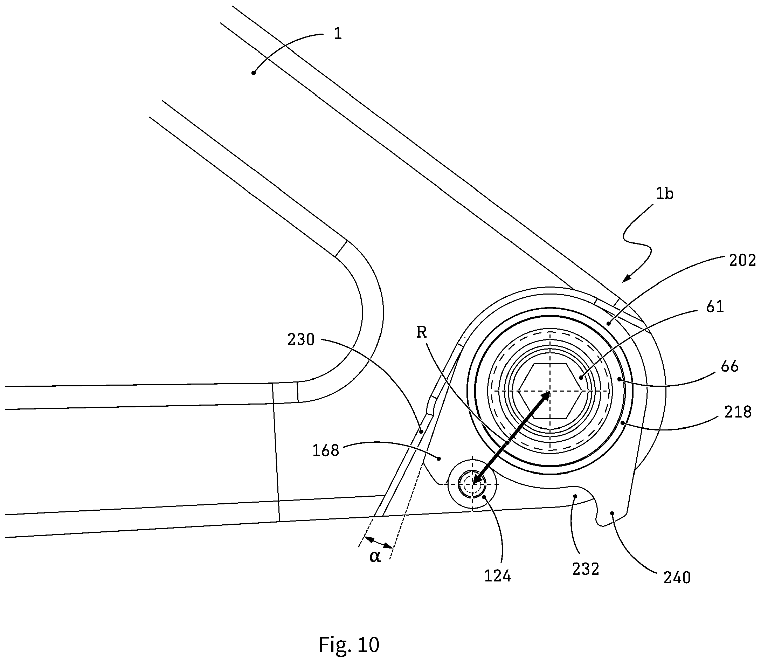

Ein Ablauf dieses Einstellvorgangs zur Herstellung der gewünschten Kettenspannung bzw. des hierzu erforderlichen sog. Chain-Gap (Abstand zwischen oberem Kettenführungsröllchen und Referenzritzel) ist in der DE'253 im Absatz [0090] im Detail in Bezug auf die dortigen Fig. 10 bis 12 beschrieben.

Ein Fahrradschaltwerk mit einer Einstellanzeige, die einen Drehwinkel zwischen einer P-Knuckle-Baugruppe und einer Käfigelement-Baugruppe anzeigt, ist aus der am 25.02.2021 veröffentlichten DE 10 2020 210 354 A1 bekannt. Diese Veröffentlichung enthält auch Informationen zur richtigen Einstellung eines sog. Chain Gap eines Fahrrad-Antriebsstrangs. Diesbezüglich kann auch noch auf die entsprechenden Veröffentlichungen EP 3 782 891 A1, CN 11 2407 136 A und US 2021/0054929 A1 verwiesen werden.

### Erfindung

Ausgehend von dem vorgenannten Stand der Technik stellt die vorliegende Erfindung alternative Lösungen und Weiterbildungen zu den bekannten Lösungen zur Hinterachs-koaxialen Anbindung eines Fahrrad-Schaltwerks an das rechte Rahmenauge oder Ausfallende eines Fahrradrahmen-Hinterbaus bereit, aus denen sich diverse Vorteile ergeben.

Es ist eine Aufgabe der vorliegenden Erfindung, eine in der Praxis benötigte Einstellbarkeit eines Basiselements eines hinteren Schaltwerks am Fahrradrahmen zu gewährleisten.

Es ist eine weitere Aufgabe der vorliegenden Erfindung, ein hohes Haltelement zwischen für die Montage am Rahmen wichtigen Komponenten einschließlich dem Rahmen zu erzielen.

Es ist eine weitere Aufgabe der vorliegenden Erfindung, unterschiedlichen Anforderungen durch alternative Ausgestaltungen wenigstens einer für die Montage am Rahmen wichtigen Komponente gerecht zu werden.

Es ist eine weitere Aufgabe der vorliegenden Erfindung, eine Fehlstellung des hinteren Schaltwerks am Fahrrahmen leicht erkennbar zu machen.

Zur Lösung wenigstens einer der genannten Aufgaben stellt die Erfindung nach einem ersten Aspekt den folgenden Gegenstand bereit:
Ein hinteres Schaltwerk einer Fahrradkettenschaltung zur in Bezug auf eine Hinterradachse koaxialen Montage an einem Hinterbaurahmen eines Fahrrads, aufweisend:
   - ein Basiselement,
   - einen Schwenkmechanismus,
   - ein bewegliches Element, und
   - eine Kettenführungsanordnung;
wobei der Schwenkmechanismus das Basiselement mit dem beweglichen Element verbindet, und die durch eine Kraftspeicheranordnung in eine Kettenspannrichtung vorgespannte oder vorspannbare Kettenführungsanordnung um eine Drehachse drehbar mit dem beweglichen Element verbunden ist;
wobei das Basiselement ein erstes Anschlussende zur in Bezug auf die Hinterradachse koaxialen Montage an dem Hinterbaurahmen und ein zweites Anschlussende zur Kopplung mit dem Schwenkmechanismus umfasst;
wobei das erste Anschlussende einen ersten Arm und einen zweiten Arm aufweist, die in axialer Richtung voneinander beabstandet angeordnet und zur Montage des Schaltwerks an einem zugeordneten Halterungsabschnitt des Hinterbaurahmens mittels eines zugehörigen Adapters eingerichtet sind;
wobei sich in einem definierten vormontierten Zustand und in einem fertig montierten Zustand der erste Arm auf einer axialen Innenseite des Halterungsabschnitts und der zweite Arm auf einer axialen Außenseite des Halterungsabschnitts befinden;
wobei der Adapter einen Adapterbolzen und eine zugehörige, mit dem Adapterbolzen verschraubbare Adaptermutter umfasst und in dem definierten vormontierten Zustand und in dem fertig montierten Zustand ein Bolzenkopf des Adapterbolzens auf der axialen Außenseite des Halterungsabschnitts angeordnet ist und die mit dem Adapterbolzen in Schraubeingriff befindliche Adaptermutter auf der axialen Innenseite des Halterungsabschnitts angeordnet ist; und
wobei in dem definierten vormontierten Zustand durch Verdrehen des Adapterbolzen in einer Festziehrichtung eine Drehkraft auf die Adaptermutter ausübbar ist, auf deren Grundlage über wenigstens eine Mitnahmeformation der Adaptermutter und wenigstens eine zugeordnete Gegen-Mitnahmeformation des Basiselements eine Folge-Drehkraft auf das im definierten vormontierten Zustand relativ zum Halterungsabschnitt verdrehbare Basiselement in einer der Festziehdrehrichtung entsprechenden ersten Drehrichtung ausübbar ist, welche entgegen einer auf das Basiselement ausgeübten Gegen-Drehkraft wirkt, die unter Vermittlung einer durch die Kettenführungsanordnung geführten Fahrradkette der Fahrradkettenschaltung in einer zur ersten Drehrichtung entgegengesetzten zweiten Richtung auf das das Basiselement ausgeübt wird.

Erfindungsgemäß ist dieser Gegenstand gekennzeichnet durch wenigstens ein einen mittelbaren reibschlüssigen Eingriff zwischen der Adaptermutter einerseits und wenigstens einem von a) dem ersten Arm des Basiselements, b) der axialen Innenseite des Halterungsabschnitts und c) dem Adapterbolzen andererseits vermittelndes Eingriffselement, welches im Sinne einer Vergrößerung der auf das Basiselement ausübbaren Folge-Drehkraft wirkt.

Weiterbildend wird vorgeschlagen, dass wenigstens ein für die Vermittlung eines mittelbaren reibschlüssigen Eingriffs zwischen der Adaptermutter einerseits und dem Adapterbolzen andererseits ausgeführtes und angeordnetes Eingriffselement vorgesehen ist, welches in dem definierten vormontierten Zustand im Sinne einer Vergrößerung der auf die Adaptermutter ausübbaren Drehkraft wirkt.

Ferner wird ergänzend oder alternativ vorgeschlagen, dass wenigstens ein für die Vermittlung eines mittelbaren reibschlüssigen Eingriffs zwischen der Adaptermutter einerseits und wenigstens einem von a) dem ersten Arm des Basiselements und b) der axialen Innenseite des Halterungsabschnitts andererseits ausgeführtes und angeordnetes Eingriffselement vorgesehen ist, welches in dem definierten vormontierten Zustand ein momentanes Verhältnis zwischen einer auf den Adapterbolzen in der Festziehrichtung ausgeübten und diesen relativ zum Halterungsabschnitt verdrehenden Ursprungs-Drehkraft und der resultierenden Folge-Drehkraft im Sinne einer Vergrößerung der Folge-Drehkraft beeinflusst.

Man kann vorsehen, dass in dem definierten vormontierten Zustand durch Verdrehen des Adapterbolzens die Drehkraft auf die Adaptermutter ausübbar ist, um diese zuerst mit ihrer Mitnahmeformation in einen Mitnahmeeingriff mit der Mitnahmeformation des Basiselements zu bringen und um dann die Folge-Drehkraft auf das Basiselement auszuüben, um dieses in der der Festziehdrehrichtung entsprechenden ersten Drehrichtung zu verdrehen.

Eine bevorzugte Ausführungsform zeichnet sich durch wenigstens ein für die Vermittlung eines mittelbaren reibschlüssigen Eingriffs ausgeführtes Eingriffselement aus, welches in dem definierten vormontierten Zustand zwischen der Adaptermutter und dem Adapterbolzen eingespannt ist und die Adaptermutter mit dem Adapterbolzen reibschlüssig koppelt, um eine reibschlüssige Drehmitnahme der Adaptermutter durch den Adapterbolzen vorzusehen.

Dabei kann man zweckmäßig vorsehen, dass das Eingriffselement als ein vorzugsweise aus Kunststoff hergestelltes Ringelement ausgeführt ist, welches in dem definierten vormontierten Zustand zwischen einem Innenumfang der Adaptermutter und einem Außenumfang des Adapterbolzens eingespannt ist.

Weiterbildend wird vorgeschlagen, dass das in eine Ringnut an dem Innenumfang der Adaptermutter aufgenommene Ringelement durch Einführen und Einschrauben des Adapterbolzens in die Adaptermutter zur Herstellung des definierten vormontierten Zustands elastisch verformt oder verformbar ist oder plastisch verformt oder verformbar ist oder elastisch und plastisch verformt oder verformbar ist, um im definierten vormontierten Zustand zwischen einem Boden der Ringnut und dem Außenumfang des Adapterbolzens radial und gewünschtenfalls zwischen axialen Begrenzungsflächen der Ringnut axial eingespannt zu sein.

Die oder eine bevorzugte Ausführungsform zeichnet sich (ferner) durch wenigstens ein für die Vermittlung eines mittelbaren reibschlüssigen Eingriffs ausgeführtes Eingriffselement aus, welches in dem definierten vormontierten Zustand ein dem ersten Arm des Basiselements und der Adaptermutter zugeordnetes, auftretende Reibung zwischen dem ersten Arm des Basiselements und der Adaptermutter reduzierendes Gleitlager bereitstellt, um einer Verdrehung der Adaptermutter in der ersten Drehrichtung entgegenwirkende Gegenkräfte zu reduzieren.

Dabei kann man vorsehen, dass das wenigstens eine Eingriffselement wenigstens eines von einem radialen Gleitlager und einem axialen Gleitlager bereitstellt.

Ferner kann man zweckmäßig vorsehen, dass in dem definierten vormontierten Zustand wenigstens ein aus einem Gleitlagerwerkstoff hergestelltes Ringelement zwischen einer Außenseite des ersten Arms des Basiselements und einer Innenseite der Adaptermutter angeordnet ist, um das Gleitlager bereitzustellen.

Weiterbildend wird vorgeschlagen, dass das Ringelement in dem definierten vormontierten Zustand axial zwischen einander zugekehrten, vorzugweise entgegengesetzt axial orientierten Oberflächenabschnitten des ersten Arms des Basiselements und der Adaptermutter angeordnet ist.

Eine zweckmäßige Ausgestaltung zeichnet sich dadurch aus, dass das Ringelement in dem definierten vormontierten Zustand radial zwischen einem einen Innenumfangsbereich bildenden Oberflächenabschnitt des ersten Arms des Basiselements und einem einen Außenumfangsbereich bildenden Oberflächenabschnitt der Adaptermutter angeordnet ist, wobei sich der Außenumfangsbereich der Adaptermutter mit dem Innenumfangsbereich des ersten Arms des Basiselements zumindest abschnittsweise axial überlappen.

Vorteilhaft kann man auch vorsehen, dass das Ringelement an einer radialen Presspassungsseite mit einem zugeordneten von dem Innenumfangsbereich und dem Außenumfangsbereich in Presspassungseingriff steht oder bringbar ist und eine radialen Spielpassungsseite des Ringelements dem anderen von dem Innenumfangsbereich und dem Außenumfangsbereich zugeordnet ist, wobei eine Spielpassung für das Ringelement in Bezug auf diesen zugeordneten anderen von dem Innenumfangsbereich und dem Außenumfangsbereich vorgesehen ist.

Weiterbildend wird vorgeschlagen, dass die Spielpassungsseite des Ringelements mit wenigstens einer Halteformation ausgeführt ist und der zugeordnete andere von dem Innenumfangsbereich und dem Außenumfangsbereich, vorzugsweise der Außenumfangsbereich der Adaptermutter, mit wenigstens einer Gegen-Halteformation ausgeführt ist, wobei im definierten vormontierten Zustand die Halteformation und die Gegen-Halteformation in Formschlusseingriff stehen oder bringbar sind, derart dass in dem definierten vormontierten Zustand die Adaptermutter vermittels des Ringelements an der Außenseite des ersten Arm des Basiselements gehaltert ist.

Hierzu wird weiter daran gedacht, dass von der Halteformation und der Gegen-Halteformation wenigstens eine radial vorstehend, gewünschtenfalls als radial vorstehender Ringbund, ausgeführt ist und sich im definierten vormontierten Zustand mit der anderen von der Halteformation und der Gegen-Halteformation radial überlappt, wobei zur Halterung der Adaptermutter an der Außenseite des ersten Arm des Basiselements von der Halteformation und der Gegen-Halteformation vorzugsweise eine in die andere oder hinter der anderen elastisch einschnappbar oder eingeschnappt ist.

Ferner wird vorgeschlagen, dass im Zustand der Halterung der Adaptermutter vermittels des Ringelements an der Außenseite des ersten Arms des Basiselements axiales Spiel zwischen der Halteformation und die Gegen-Halteformation vorgesehen ist, welches in dem definierten vormontierten Zustand durch Verdrehen des Adapterbolzens in der Festziehdrehrichtung aufbrauchbar ist.

Dabei kann man weiterbildend vorsehen, dass durch Verdrehen des Adapterbolzens in der Festziehdrehrichtung die Adaptermutter mit einer vorzugsweise als Rändelfläche ausgeführten Anlagefläche einer zugeordneten Anlagefläche an der axialen Innenseite des Halterungsabschnitts annäherbar und an dieser zur Anlage bringbar ist, wobei durch Verdrehen des Adapterbolzens in der Festziehdrehrichtung vorzugsweise zuerst das axiale Spiel zwischen der Halteformation und der Gegen-Halteformation aufbrauchbar ist bevor die Anlagefläche der Adaptermutter mit der zugeordneten Anlagefläche des Halterungsabschnitts in Anlageeingriff gelangt.

Zusätzliche Vorteile lassen sich erreichen, wenn nach der Herstellung des Anlageeingriffs durch weiteres Verdrehen des Adapterbolzens in der Festziehdrehrichtung über den gegenseitigen Formschlusseingriff der Halteformation und der Gegen-Halteformation eine axiale Zugkraft auf das Ringelement ausübbar ist und das Ringelement durch diese axiale Zugkraft eine definierte axiale Strecke aus der Presspassung mit dem zugeordneten von dem Innenumfangsbereich und dem Außenumfangsbereich herausziehbar ist.

Es wird ferner daran gedacht, dass die bevorzugte Ausführungsform oder eine alternative Ausführungsform sich durch wenigstens ein für die Vermittlung eines mittelbaren reibschlüssigen Eingriffs ausgeführtes und an der Adaptermutter gehaltenes und als axiales Abstandselement dienendes Eingriffselement auszeichnet, welches einer/der vorzugsweise als Rändelfläche ausgeführten Anlagefläche der Adaptermutter und einer/der Anlagefläche an der axialen Innenseite des Halterungsabschnitts zugeordnet ist und im definierten vormontierten Zustand als zwischen diesen wirksames Abstandelement wirkt, welches die Anlagefläche der Adaptermutter und die Anlagefläche des Halterungsabschnitts beim Verdrehen des Adapterbolzens in der Festziehdrehrichtung über einen vorgesehenen Drehwinkelbereich des Adapterbolzens axial beabstandet hält, bevor bei weiterem Verdrehen des Adapterbolzens in der Festziehdrehrichtung die Anlagefläche der Adaptermutter mit der zugeordneten Anlagefläche des Halterungsabschnitts in Anlageeingriff gelangt.

Weiterbildend wird vorgeschlagen, dass in dem definierten vormontierten Zustand die Adaptermutter mit ihrer Anlagefläche durch Verdrehen des Adapterbolzens in der Festziehdrehrichtung der zugeordneten Anlagefläche des Halterungsabschnitts annäherbar ist gegen eine überwindbare Gegenkraft des an der Anlagefläche des Halterungsabschnitts angreifenden, für eine gegenüber einem direkten Eingriff zwischen diesen Anlageflächen reduzierte mittelbare Reibung zwischen diesen Anlageflächen sorgenden Abstandselements, welches vorzugsweise elastisch oder plastisch oder elastisch und plastisch verformbar ist.

Dabei kann man vorteilhaft sehen, dass das Abstandselement als zumindest in axialer Richtung spannbares Federelement ausgeführt ist, beispielsweise als Stahlfeder.

Es wird daran gedacht, dass das Abstandselement in einer Nut, vorzugsweise in einer Ringnut oder einer kreissegmentförmigen Nut, in der Anlagefläche der Adaptermutter gehalten und im Zuge der Annäherung der einander zugeordneten Anlageflächen der Adaptermutter und des Halterungsabschnitts durch Verdrehen des Adapterbolzens in der Festziehdrehrichtung wenigstens ein aus der Nut vorstehender Abschnitt des Abstandselements durch die Anlagefläche des Halterungsabschnitts aus einem axialen Zwischenbereich zwischen den beiden Anlageflächen in die Nut verdrängbar ist.

Allgemein wird weiter vorgeschlagen, dass ein Außenflanschabschnitt der Adaptermutter die Mitnahmeformation der Adaptermutter bildet und ein von einer Außenseite des ersten Arms axial in Richtung zum zweiten Arm vorstehender, gewünschtenfalls als gesonderter Anschlagbolzen ausgeführter Vorsprung des Basiselements die Gegen-Mitnahmeformation bildet.

In der Regel werden in dem fertig montierten Zustand der Bolzenkopf und die Adaptermutter durch axiale Gewindekräfte mit dem Halterungsabschnitt verspannt sein. Zweckmäßig kann die Adaptermutter an einer dem Halterungsabschnitt zugekehrten axialen Seite mit einer/der Rändelfläche ausgeführt sein, die in dem fertig montierten Zustand mit einer zugeordneten Anlagefläche an der axialen Innenseite des Halterungsabschnitts eingreift.

Zur Lösung wenigstens einer der angesprochenen Aufgaben wird hierzu weiter vorgeschlagen, dass die Adaptermutter mit einem Außenflansch ausgeführt ist, der an einer dem Halterungsabschnitt zugekehrten axialen Seite eine Rändelung aufweist, die die Rändelfläche bildet oder diese in radialer Richtung vergrößert, wobei der Außenflansch sich im fertig montierten Zustand in einen axialen Spalt zwischen dem ersten Arm des Basiselements und der axialen Innenseite des Halterungsabschnitts erstreckt.

Dieser Weiterbildungsvorschlag ist auch unabhängig von der Erfindung nach dem ersten Aspekt von Interesse.

Dementsprechend stellt die Erfindung nach einem unabhängigen zweiten Aspekt den folgenden Gegenstand bereit:
Ein hinteres Schaltwerk einer Fahrradkettenschaltung zur in Bezug auf eine Hinterradachse koaxialen Montage an einem Hinterbaurahmen eines Fahrrads, aufweisend:
   - ein Basiselement,
   - einen Schwenkmechanismus,
   - ein bewegliches Element, und
   - eine Kettenführungsanordnung;
wobei der Schwenkmechanismus das Basiselement mit dem beweglichen Element verbindet, und die durch eine Kraftspeicheranordnung in eine Kettenspannrichtung vorgespannte oder vorspannbare Kettenführungsanordnung um eine Drehachse drehbar mit dem beweglichen Element verbunden ist;
wobei das Basiselement ein erstes Anschlussende zur in Bezug auf die Hinterradachse koaxialen Montage an dem Hinterbaurahmen und ein zweites Anschlussende zur Kopplung mit dem Schwenkmechanismus umfasst;
wobei das erste Anschlussende einen ersten Arm und einen zweiten Arm aufweist, die in axialer Richtung voneinander beabstandet angeordnet und zur Montage des Schaltwerks an einem zugeordneten Halterungsabschnitt des Hinterbaurahmens mittels eines zugehörigen Adapters eingerichtet sind;
wobei sich zumindest in einem fertig montierten Zustand der erste Arm auf einer axialen Innenseite des Halterungsabschnitts und der zweite Arm auf einer axialen Außenseite des Halterungsabschnitts befinden;
wobei der Adapter einen Adapterbolzen und eine zugehörige, mit dem Adapterbolzen verschraubbare Adaptermutter umfasst und in dem fertig montierten Zustand ein Bolzenkopf des Adapterbolzens auf der axialen Außenseite des Halterungsabschnitts angeordnet ist und die mit dem Adapterbolzen in Schraubeingriff befindliche Adaptermutter auf der axialen Innenseite des Halterungsabschnitts angeordnet ist und der Bolzenkopf und die Adaptermutter durch axiale Gewindekräfte mit dem Halterungsabschnitt verspannt sind, und
wobei die Adaptermutter an einer dem Halterungsabschnitt zugekehrten axialen Seite mit einer Rändelfläche ausgeführt ist, die in dem fertig montierten Zustand mit einer zugeordneten Anlagefläche an der axialen Innenseite des Halterungsabschnitts eingreift.

Erfindungsgemäß ist dieser Gegenstand dadurch gekennzeichnet, dass die Adaptermutter mit einem Außenflansch ausgeführt ist, der an einer dem Halterungsabschnitt zugekehrten axialen Seite eine Rändelung aufweist, die die Rändelfläche bildet oder diese in radialer Richtung vergrößert, wobei der Außenflansch sich im fertig montierten Zustand in einen axialen Spalt zwischen dem ersten Arm des Basiselements und der axialen Innenseite des Halterungsabschnitts erstreckt.

Weiterbildend wird vorgeschlagen, dass der Außenflansch als sich ringförmig um einen eine Schrauböffnung für den Adapterbolzen aufweisenden Zentralbereich der Adaptermutter erstreckender Ringflansch ausgeführt ist, der an seiner dem Halterungsabschnitt zugekehrten axialen Seite eine sich ringförmig erstreckende Rändelung aufweist.

Als besonders bevorzugt wird vorgeschlagen, dass der Außenflansch einen Vornanschlag für einen zugeordneten Gegenanschlag des Basiselements bildet, um im fertig montierten Zustand auf das Basiselement in einer Vorwärts-Richtung wirkende Kräfte formschlüssig an der am Halterungsabschnitt festgespannten Adaptermutter abzustützen.

Dabei kann man vorteilhaft vorsehen, dass der Vornanschlag von einem radial vorstehenden Flanschbereich eines/des sich als Ringflansch ringförmig um einen/den eine Schrauböffnung für den Adapterbolzen aufweisenden Zentralbereich der Adaptermutter erstreckenden Außenflanschs gebildet ist.

Ferner wird als für manche Einsatzsituationen besonders vorteilhafte Weiterbildung vorgeschlagen, dass der Außenflansch einen Rückanschlag für einen zugeordneten Gegenanschlag des Basiselement bildet, um in einem/dem definierten vormontierten Zustand mit noch nicht festgespannten Adapter oder einem dem vormontierten Zustand entsprechenden Zustand nach Lockerung des zuvor festgespannten Adapters einen Schwenkwinkel des Basiselements relativ zu dem Halterungsabschnitt in einer Rückwärts-Richtung zu begrenzen.

Dabei kann man vorteilhaft vorsehen, dass der Rückanschlag von einem radial vorstehenden Flanschbereich eines/des sich als Ringflansch ringförmig um einen/den eine Schrauböffnung für den Adapterbolzen aufweisenden Zentralbereich der Adaptermutter erstreckenden Außenflanschs gebildet ist.

Allgemein wird in diesem Zusammenhang vorgeschlagen, dass wenigstens ein Flanschbereich von einem inneren ringförmigen Flanschbereich der Adaptermutter radial vorsteht und als Anschlag zum Zusammenwirken mit wenigstens einem Gegenanschlag des Basiselements dient, wobei der ringförmige Flanschbereich mit einer/der sich ringförmig erstreckenden Rändelung ausgeführt ist, die die Rändelfläche bildet oder diese in radialer Richtung vergrößert, und der als Anschlag dienende Flanschbereich ohne eine Rändelung ausgeführt ist.

Betreffend das Basiselement wird in diesem Zusammenhang daran gedacht, dass wenigstens ein von einer Außenseite des der ersten Arm axial in Richtung zum zweiten Arm vorstehender, gewünschtenfalls als gesonderter Anschlagbolzen ausgeführter Vorsprung des Basiselements vorgesehen ist, welcher als Gegenanschlag zum Zusammenwirken mit wenigstens einem Anschlag der Adaptermutter dient.

Es wird auf die Erfindungs- und Weiterbildungsvorschläge nach dem ersten und dem zweiten Aspekt Bezug genommen.

Vorteilhaft kann das Basiselement in dem fertig montierten Zustand an einem Einspannabschnitt seines ersten Arms zwischen dem Adapter und einer Statorbaugruppe einer einem hinteren Laufrad des Fahrrads zugehörigen Hinterradachsordnung axial eingespannt und reibschlüssig gegen Verdrehen fixiert sein.

Hierzu wird, zur Lösung wenigstens einer der angesprochenen Aufgaben weiterbildend vorgeschlagen, dass eine Kontrollanzeige vorgesehen ist, die wenigstens eines von einer momentan bestehenden Soll-Winkelpositionierung des Basiselements und einer momentan bestehenden, von der Soll-Winkelpositionierung abweichenden Fehl-Winkelpositionierung relativ zu wenigstens einem von der Adaptermutter, dem Halterungsabschnitt und der Statorbaugruppe erkennen lässt.

Dieser Weiterbildungsvorschlag ist auch unabhängig von dem Erfindungsvorschlag nach dem ersten Aspekt und unabhängig von dem Erfindungsvorschlag nach dem zweiten Aspekt von Interesse.

Dementsprechend stellt die Erfindung nach einem unabhängigen dritten Aspekt den folgenden Gegenstand bereit:
Ein hinteres Schaltwerk einer Fahrradkettenschaltung zur in Bezug auf eine Hinterradachse koaxialen Montage an einem Hinterbaurahmen eines Fahrrads, aufweisend:
   - ein Basiselement,
   - einen Schwenkmechanismus,
   - ein bewegliches Element, und
   - eine Kettenführungsanordnung;
wobei der Schwenkmechanismus das Basiselement mit dem beweglichen Element verbindet, und die durch eine Kraftspeicheranordnung in eine Kettenspannrichtung vorgespannte oder vorspannbare Kettenführungsanordnung um eine Drehachse drehbar mit dem beweglichen Element verbunden ist;
wobei das Basiselement ein erstes Anschlussende zur in Bezug auf die Hinterradachse koaxialen Montage an dem Hinterbaurahmen und ein zweites Anschlussende zur Kopplung mit dem Schwenkmechanismus umfasst;
wobei das erste Anschlussende einen ersten Arm und einen zweiten Arm aufweist, die in axialer Richtung voneinander beabstandet angeordnet und zur Montage des Schaltwerks an einem zugeordneten Halterungsabschnitt des Hinterbaurahmens mittels eines zugehörigen Adapters eingerichtet sind;
wobei sich zumindest in einem fertig montierten Zustand der erste Arm auf einer axialen Innenseite des Halterungsabschnitts und der zweite Arm auf einer axialen Außenseite des Halterungsabschnitts befinden;
wobei der Adapter einen Adapterbolzen und eine zugehörige, mit dem Adapterbolzen verschraubbare Adaptermutter umfasst und in dem fertig montierten Zustand ein Bolzenkopf des Adapterbolzens auf der axialen Außenseite des Halterungsabschnitts angeordnet ist und die mit dem Adapterbolzen in Schraubeingriff befindliche Adaptermutter auf der axialen Innenseite des Halterungsabschnitts angeordnet ist und der Bolzenkopf und die Adaptermutter durch axiale Gewindekräfte mit dem Halterungsabschnitt verspannt sind, und
wobei das Basiselement in dem fertig montierten Zustand an einem Einspannabschnitt seines ersten Arms zwischen dem Adapter und einer Statorbaugruppe einer einem hinteren Laufrad des Fahrrads zugehörigen Hinterradachsordnung axial eingespannt und reibschlüssig gegen Verdrehen fixiert ist.

Erfindungsgemäß ist dieser Gegenstand gekennzeichnet durch eine Kontrollanzeige, die wenigstens eines von einer momentan bestehenden Soll-Winkelpositionierung des Basiselements und einer momentan bestehenden, von der Soll-Winkelpositionierung abweichenden Fehl-Winkelpositionierung relativ zu wenigstens einem von der Adaptermutter, dem Halterungsabschnitt und der Statorbaugruppe erkennen lässt.

Vorteilhaft kann man vorsehen, dass die Kontrollanzeige ein erstes Anzeigeelement an einer in einer festen Relativwinkelbeziehung zum Basiselement stehenden gesonderten Komponente oder - vorzugweise - am Basiselement aufweist.

Hierzu wird weiter vorgeschlagen, dass die Kontrollanzeige ein zweites Anzeigeelement an einem von der Adaptermutter, dem Halterungsabschnitt und der Statorbaugruppe oder an einer in einer festen Relativwinkelbeziehung zu einem von der Adaptermutter, dem Halterungsabschnitt und der Statorbaugruppe stehenden Komponente aufweist.

Gemäß einer besonders bevorzugten Ausgestaltung wird vorgeschlagen, dass das zweites Anzeigeelement an einer in einer festen Relativwinkelbeziehung zu der Adaptermutter stehenden Komponente oder - vorzugsweise - an der Adaptermutter vorgesehen ist.

Dabei wird daran gedacht, dass das erste Anzeigeelement und das zweite Anzeigeelement miteinander fluchten, wenn die momentane Winkelpositionierung des Basiselements der Soll-Winkelpositionierung entspricht.

Man kann zweckmäßig vorsehen, dass die Soll-Winkelpositionierung des Basiselements einer Anschlag-Winkelposition des Basiselements relativ zu der Adaptermutter entspricht, wobei die Anschlag-Winkelposition des Basiselements durch einen gegenseitigen Anschlag oder eine gegenseitige Anlage eines Anschlags, vorzugsweise Vornanschlags, der Adaptermutter und eines zugeordneten Gegenanschlags des Basiselements definiert ist.

Allgemein wird für alle Aspekte der Erfindung weiterbildend vorgeschlagen, dass das hintere Schaltwerk mit einer Lagerelementanordnung ausgeführt ist, die wenigstens zwei Elementen von dem Adapterbolzen, dem zweiten Arm des Basiselements und dem Halterungsabschnitt zugeordnet ist, um eine gegenseitige Lagerung zu vermitteln.

Dabei wird als besonders zweckmäßig daran gedacht, dass die Lagerelementanordnung wenigstens eines von einer einem Schaftabschnitt des Adapterbolzens und einem Innenumfang einer Montageöffnung des Halterungsabschnitt zugeordneten Lagerbuchse, einem einer Außenseite des Halterungsabschnitts und dem zweiten Arm des Basiselements zugeordneten Lagerkragen oder Lagerring, und einer dem Bolzenkopf des Adapterbolzens und dem zweiten Arm des Basiselements zugeordneten Lagerbuchse oder einem diesen, also dem Bolzenkopf des Adapterbolzens und dem zweiten Arm des Basiselements zugeordneten Lagerring umfasst.

Die Erfindung stellt ferner auch ein Fahrrad bereit, umfassend einen Fahrradrahmen mit einem Hinterbaurahmen, einem hinteren Laufrad und eine ein hinteres Schaltwerk aufweisende Kettenschaltung, wobei das Fahrrad ferner die folgenden Merkmale aufweist:
- das hintere Laufrad ist mit einer eine Hinterradachsanordnung umfassenden Statoranordnung und einer Rotoranordnung ausgeführt, wobei die Rotoranordnung relativ zur Statoranordnung drehbar gelagert ist und eine Laufradnabe mit einem ein Ritzelpaket der Kettenschaltung tragenden Antreiber umfasst;
- der Hinterbaurahmen des Fahrradrahmens weist einen linken Halterungsabschnitt und einen rechten Halterungsabschnitt für eine innere Achse der Hinterradachsanordnung des hinteren Laufrads auf, welche einen vorbestimmten definierten Axialabstand längs einer geometrischen Achse der mittels der Halterungsabschnitte an dem Hinterbaurahmen montierten inneren Achse aufweisen und jeweils ein Gegenlager für eine an der inneren Achse angeordnete, zwischen den Halterungsabschnitten eingespannte und eine Baugruppe der Statoranordnung umfassende Komponentengruppe bilden;
- das hintere Schaltwerk ist in Bezug auf die geometrische Achse koaxial an dem Hinterbaurahmen montiert und umfasst:
   - ein Basiselement,
   - einen Schwenkmechanismus,
   - ein bewegliches Element, und
   - eine Kettenführungsanordnung;

wobei der Schwenkmechanismus das Basiselement mit dem beweglichen Element verbindet, und die durch eine Kraftspeicheranordnung in eine Kettenspannrichtung vorgespannte oder vorspannbare Kettenführungsanordnung um eine Drehachse drehbar mit dem beweglichen Element verbunden ist;
wobei das Basiselement ein erstes Anschlussende zur in Bezug auf die geometrische Achse koaxialen Montage an dem Hinterbaurahmen und ein zweites Anschlussende zur Kopplung mit dem Schwenkmechanismus umfasst;
wobei das erste Anschlussende einen ersten Arm und einen zweiten Arm aufweist, die in axialer Richtung voneinander beabstandet angeordnet und zur Montage des Schaltwerks an dem zugeordneten rechten Halterungsabschnitt des Hinterbaurahmens mittels eines zugehörigen Adapters eingerichtet sind, wobei der Adapter einen Adapterbolzen und eine zugehörige, mit dem Adapterbolzen verschraubbare Adaptermutter umfasst;
wobei sich der erste Arm auf einer axialen Innenseite des zugeordneten Halterungsabschnitts und der zweite Arm auf einer axialen Außenseite des zugeordneten Halterungsabschnitts befinden, und
wobei ein Bolzenkopf des Adapterbolzens auf der axialen Außenseite des Halterungsabschnitts angeordnet ist und die mit dem Adapterbolzen in Schraubeingriff befindliche Adaptermutter auf der axialen Innenseite des Halterungsabschnitts angeordnet ist.

Erfindungsgemäß ist das hintere Schaltwerk als erfindungsgemäßes hinteres Schaltwerk gemäß wenigstens einem der drei unabhängigen Aspekte der Erfindung ausgeführt, gewünschtenfalls unter Realisierung eines oder mehrerer Weiterbildungsvorschläge hierzu. Das hintere Schaltwerk kann am Fahrradrahmen fertig montiert sein.

Es wird dabei daran gedacht, dass der dem hinteren Schaltwerk zugeordnete rechte Halterungsabschnitt einen Vornanschlag für eine Anschlagformation der Adaptermutter des Adapters aufweist.

Hierzu wird weiter daran gedacht, dass in dem fertig montierten Zustand des hinteren Schaltwerks am Hinterbaurahmen des Fahrrads ein Drehwinkelabstand zwischen dem Vornanschlag des Halterungsabschnitts und der Anschlagformation der Adaptermutter besteht, welcher vorzugsweise 3 bis 15 Grad und höchstvorzugsweise 7 bis 9 Grad beträgt.

Die Erfindung wir im Folgenden anhand von in den Figuren gezeigten exemplarischen Ausführungsformen näher erläutert.
- Fig. 1: zeigt ein exemplarisches Fahrrad mit einem erfindungsgemäßen hinteren Umwerfer einer Kettenschaltung des Fahrrads, welcher koaxial zu einer Drehachse des hinteren Laufrads des Fahrrads an einem hinteren Rahmenauge des Hinterbaus des Fahrradrahmens montiert ist.
- Fig. 2: zeigt die Figuren 1 und 2 der DE 10 2018 001 253 A1 (DE'253).
- Fig. 3: zeigt die Figuren 4 und 7 der DE'253.
- Fig. 4: zeigt Fig. 8 der DE'253.
- Fig. 5: zeigt in Teilfigur a) eine Schnittansicht eines Basiselements eines hinteren Schaltwerks nach einem ersten Ausführungsbeispiel der Erfindung, welches ohne dessen Schwenkmechanismus, bewegliches Element und Kettenführungsanordnung dargestellt ist, und zwar in einem definierten vormontierten Zustand, in welchem es an einem rechten Rahmenauge eines Hinterbaus eines Fahrradrahmens angeordnet ist, und zeigt in Teilfigur b) eine Detailvergrößerung des Bereichs B der Teilfigur a).
- Fig. 6: zeigt die Anordnung der Fig. 5 in einer perspektivischen seitlichen Ansicht von einer rechten Außenseite her.
- Fig. 7: zeigt die Anordnung der Fig. 5 und Fig. 6 in einer weiteren perspektivischen Ansicht schräg von hinten mit geschnitten dargestelltem Rahmenauge.
- Fig. 8: zeigt das hintere Schaltwerk in einer weiteren perspektivischen Ansicht schräg von vorne ohne das Rahmenauge.
- Fig. 9: ist eine Ansicht auf eine Innenseite des Rahmenauges für die Ausführungsform der Fig. 5 bis 8.
- Fig. 10: zeigt in einer Darstellung entsprechend Fig. 9 eine Ausführungsvariante des ersten Ausführungsbeispiels.
- Fig. 11: zeigt die Anordnung der Fig. 8 aus einer anderen Perspektive ohne Darstellung des Adapterbolzens.
- Fig. 12: zeigt in einer Darstellung entsprechend Fig. 11 die dargestellten Komponenten in einem anderen Zustand.
- Fig. 13: zeigt die Komponenten der Fig. 5 in einer perspektivischen Darstellung mit Sichtrichtung schräg vom hinten auf die Innenseite des Rahmenauges, in einer Normal-Position oder Soll-Position des Basiselements am Rahmenauge.
- Fig. 14: zeigt die Komponenten der Fig. 13 aus einer etwas anderen Sichtrichtung in einer Fehlstellung des Basiselements am Rahmenauge.
- Fig. 15: zeigt Komponenten des ersten Ausführungsbeispiels in einer Explosionsdarstellung.
- Fig. 16: zeigt die Explosionsansicht der Fig. 15 in einer geschnittenen Darstellung samt dem geschnitten dargestellten Rahmenauge.
- Fig. 17: zeigt eine abgewandelte Adaptermutter eines zweiten Ausführungsbeispiels in einer perspektivischen, teilgeschnittenen Ansicht.
- Fig. 18: zeigt die Adaptermutter der Fig. 17 samt dem zugehörigen, darin eingeschraubten Adapterbolzen.
- Fig. 19: zeigt den den Adapterbolzen und die Adaptermutter umfassenden Adapter samt dem Basiselement und weiteren zugehörigen Komponenten einschließlich einer schematisch dargestellten Hinterradachsanordnung.
- Fig. 20: zeigt die Komponenten der Fig. 19 samt dem geschnitten dargestellten Hinterbau des Fahrradrahmens.
- Fig. 21: entspricht einer vergrößerten Darstellung des rechten Rahmenauges mit dem Adapter der Fig. 20 gemäß einer Ausführungsvariante.

In der nachfolgenden Erfindungsbeschreibung wie auch teilweise in Bezug auf die zugehörigen Figuren verwendete Orts- bzw. Richtungsangaben wie "links", "rechts", "vorne", "hinten", "oben", "unten" usw. entsprechen der Fahrerperspektive auf einem Fahrrad.

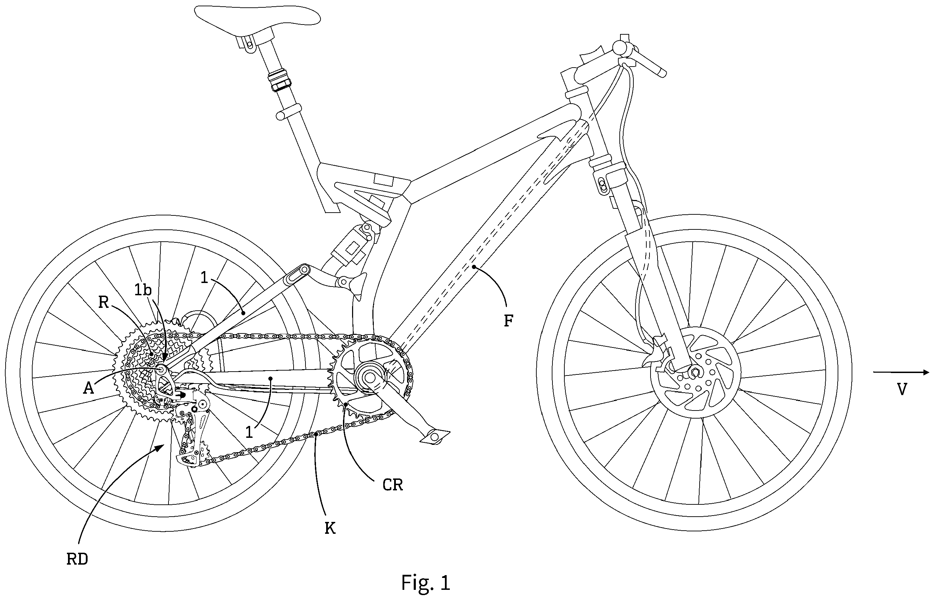

Figur 1 zeigt exemplarisch ein Fahrrad mit einem an sich üblichen Fahrradantrieb. Der Fahrradantrieb umfasst ein vorderes Kettenrad CR, ein hinteres Ritzelpaket R und eine Kette K, die mittels des hinteren Umwerfers RD von einem Ritzel zum nächsten bewegt werden kann. Die im Folgenden verwendeten Richtungsangaben rechts/links und vorne/hinten beziehen sich auf ein Fahrrad in Fahrtrichtung V, entsprechen also der Fahrerperspektive auf dem Fahrrad. Der Fahrradrahmen F hat am Hinterbaurahmen 1 typischerweise ein linkes und ein rechtes hinteres Ausfallende oder Rahmenauge, zwischen denen das Hinterrad montiert ist. Das Hinterrad dreht sich zusammen mit dem Ritzelpaket R um die Hinterradachse A. Axial bezieht sich auf die Hinterradachse A bzw. die Drehachse A der Mehrfach-Ritzelanordnung R oder eine hierzu parallele Richtung. Das größte Ritzel liegt axial weiter innen als die kleineren Ritzel. Die Zähne sind radial außen an den Ritzeln angeordnet. Der hintere Umwerfer weist ein sogenanntes Basiselement (B-Knuckle) auf, welches am Hinterbau 1 bzw. Hinterbaurahmen 1 des Fahrradrahmens F, genauer an dessen rechten Ausfallende 1b, montiert ist. Ein sogenanntes bewegliches Element (P-Knuckle), an welchem ein Kettenkäfig um eine Drehwelle schwenkbar gelagert ist, ist über einen Schwenkmechanismus mit dem Basiselement verbunden. Der Schwenkmechanismus des hinteren Umwerfers kann als Schrägparallelogramm ausgeführt sein.

Das hier gezeigte Schaltwerk RD eines speziellen, relativ neuen Typs ist ohne Verwendung eines gesonderten Schaltauges am rechten Ausfallende 1b des Hinterbaurahmens 1 befestigt. Das Basiselement (B-Knuckle) des Schaltwerks ist für eine zur Drehachse A koaxiale Montage am Ausfallende 1b mittels eines inneren und äußeren Arms oder Armabschnitts des Basiselements ausgeführt, die auf der Innenseite und der Außenseite des Ausfallendes 1b an diesem fest gehalten sind, wie an sich aus der Offenlegungsschrift DE 10 2018 001 253 A1 und hiermit korrespondierenden Schriften wie der EP 3 388 324 A2 und US 2018/0265169 A1 bekannt.

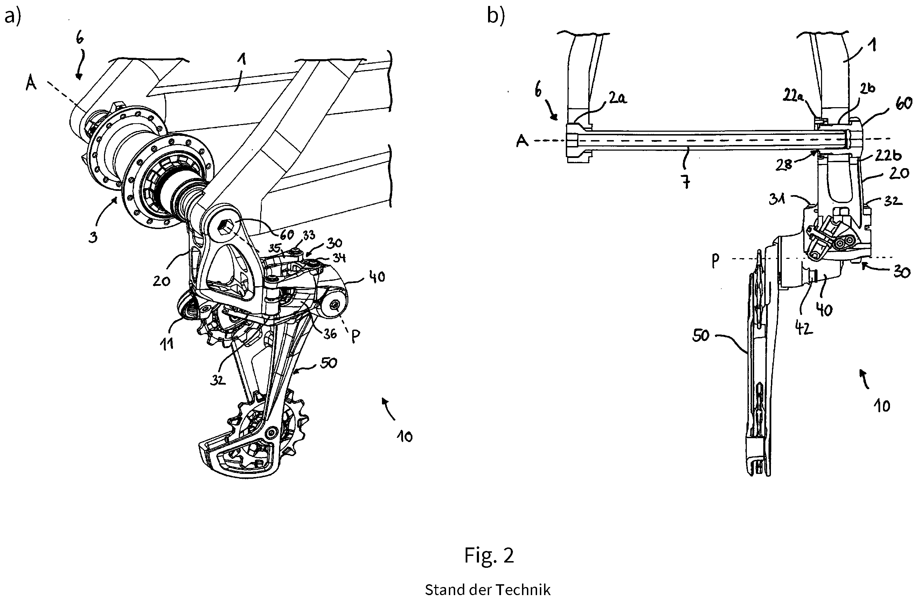

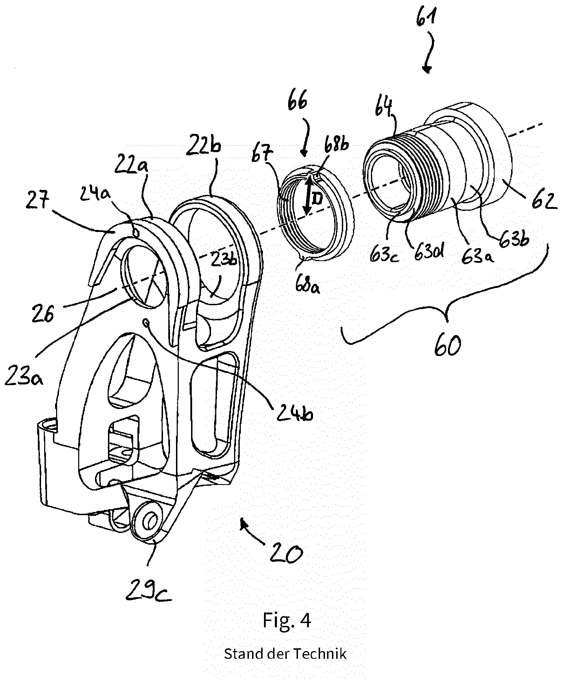

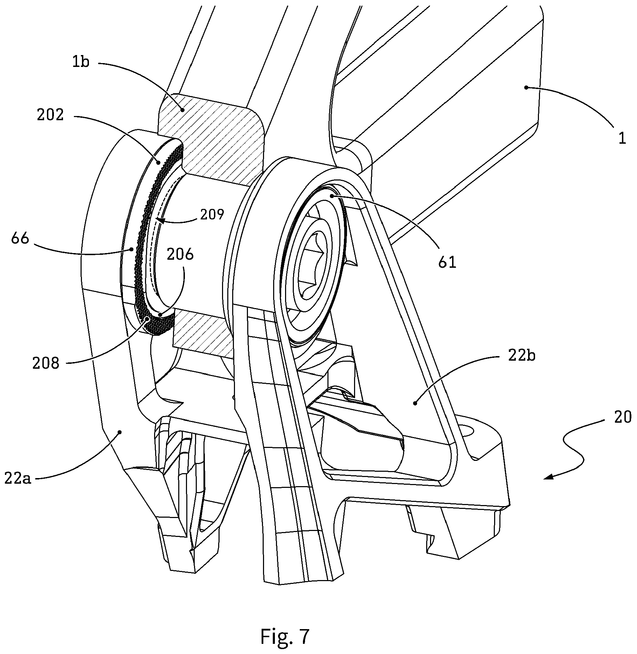

In der oben schon angesprochenen grundlegenden, als DE 10 2018 001 253 A1 (DE'253) veröffentlichten Patentanmeldung der SRAM Deutschland GmbH ist das koaxial zur Hinterachse eines Fahrrads montierbare hintere Schaltwerk und dessen Montage am Fahrradrahmen im Detail beschrieben. Das Schaltwerk wird über einen Adapter 60 am hierfür ausgestalteten Rahmenauge oder Ausfallende des Hinterbaus 1 des Fahrradrahmens F fixiert, vgl. vor allem Fig. 2 bis 7 und insbesondere Fig. 8 in der DE'253. Im vorliegenden Figurensatz ist Fig. 1 der DE'253 als Fig. 2 a) enthalten, ist Fig. 2 der der DE'253 als Fig. 2 b) enthalten, ist Fig. 4 der DE'253 als Fig. 3 a) enthalten, ist Fig. 7 der DE'253 als Fig. 3 b) enthalten und ist Fig. 8 der DE'253 als Fig. 4 enthalten.

Figur 2 a) zeigt eine perspektivische Ansicht des bekannten hinteren Schaltwerks 10 gemäß der DE'253. Das hintere Schaltwerk 10 ist koaxial an der Hinterradachse 6 montiert. Zur besseren Übersichtlichkeit sind das Hinterrad und das Ritzelpaket nicht dargestellt. Zu sehen ist die zwischen den beiden Ausfallenden des Hinterbaurahmens 1 angeordnete Hinterradnabe 3 und das, das rechte Ausfallende umgreifende Schaltwerk 10. Das Basiselement 20 ist mittels des Adapters 60 koaxial mit der Achse A am Hinterbaurahmen 1 montiert.

Figur 2 b) zeigt einen Schnitt entlang der Achse A des in Figur Fig. 2 a) dargestellten Schaltwerks 10 in der Rückansicht. Die geometrische Achse A erstreckt sich entlang der Hinterradachse 6. Einfachheitshalber ist in dieser Darstellung nur eine Steckachse 7 und nicht die übrigen Teile der Achs- und Nabenanordnung gezeigt. Das Basiselement 20 ist mittels des Adapters 60 am rechten Ausfallende befestigt. Dazu durchgreift der Adapter 60 die rechte Rahmenöffnung 2b. Die Steckachse 7 ist in die linke Rahmenöffnung 2a eingesteckt und mit dem Adapter 60 verschraubt. Der Adapter 60 dient gleichzeitig als Konter für die Steckachse 7. Wenn die Steckachse 7 angezogen wird, schraubt sie sich weiter in den Adapter 60 und klemmt gegenüber dem Hinterbau 1.

Figur 3 a) zeigt einen perspektivischen Teilschnitt des mit Hilfe des Adapters 60 am Hinterbaurahmen 1 montierten Basiselements 20 und Teile der Nabenanordnung. Der erste Arm 22a und der zweite Arm 22b sind jeweils auf einer Seite des Hinterbaurahmens 1 positioniert. Zur Montage des hier nicht gezeigten Hinterrads wird dieses zusammen mit der Nabenanordnung (hier ist nur eine Hohlachse oder Nabenachse 5 gezeigt) und eine Nabenendkappe 4 entlang einer Nabenführung 27 auf der Innenseite des Basiselements 20 geführt. Die Nabenführung 27 ist als Bund mit aufeinander zulaufenden Führungsflächen ausgebildet. Die Nabenendkappe 4 liegt in ihrer Endposition radial an der Nabenführung 27 an. In axialer Richtung stößt die Nabenendkappe 4 gegen eine axiale Nabenanschlagsfläche 26 auf der Innenseite des Basiselements 20. Die Nabenendkappe 4 ist geschnitten dargestellt.

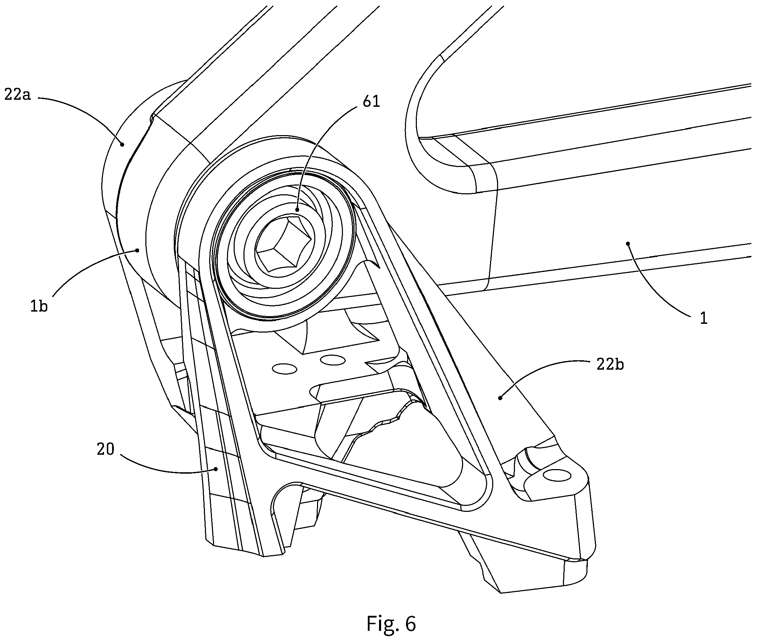

Figur 3 b) zeigt einen vergrößerten Teilschnitt des mit dem Adapter 60 am Hinterbaurahmen 1 montierten Basiselements 20. Auch der Adapter 60 ist geschnitten dargestellt. Der Bolzenkopf 62 und die Mutter 66 sind größer als die Rahmenöffnung 2b bemessen. Wenn der Adapter 60 festgezogen ist, liegen der Bolzenkopf 62 und die Mutter 66 reibschlüssig am Hinterbaurahmen 1 an. Die Mutter 66 weist eine in Fig. 6 der DE'253 erkennbare Rändelfläche 69 auf, um eine besonders feste reibschlüssige Verbindung und ggf., je nach Ausgestaltung und Material der Ausfallenden im Anlagebereich für die Mutter, zusätzlich eine formschlüssige Verbindung zum Hinterbaurahmen 1 herzustellen und einem Verdrehen des Schaltwerks 10 nach vorne (gegen den Uhrzeigersinn) entgegenzuwirken. Wie in Figur 4 zu erkennen, hat der Bolzenkörper 63 einen Anlagebereich 63a, der an der Rahmenöffnung 2b mit wenig Spiel anliegt und einen Ausgleichsbereich 63b, der gegenüber der Rahmenöffnung 2b mehr Spiel hat. Der Ausgleichsbereich 63b ermöglicht, dass sich der Adapter 60 in der Rahmenöffnung 2b entlang der Achse A ausrichtet. Der Bolzen 61 hat in der Rahmenöffnung 2b Spiel und kann darin etwas verkippen, falls die Rahmenöffnung nicht genau mit der Achse A fluchtet.

In Fig. 4 wurde gegenüber der ursprünglichen Fig. 8 der DE'253 ein Doppelpfeil sowie ein diesem zugeordnetes Bezugszeichen D ergänzt, der einen wirksamen Abstützradius und damit einen wirksamen Abstützdurchmesser anzeigt, für die miteinander zusammenwirkenden Anschlagsflächen 68a und 68b der Adaptermutter 66 einerseits und der von innen axial vorstehenden Stiften oder Bolzen des inneren Arms 22a des Basiselements 20 gebildeten Anschlagsflächen 24a und 24b des Basiselements 20 anderseits, die aneinander zur Anlage kommen.

Der Adapter 60 hat zwei Aufgaben: 1) Die Klemmung am Hinterbaurahmen 1 wird durch die Schraubverbindung zwischen Bolzen 61 und Mutter 66 hergestellt. Wichtig ist, dass der Adapter 60 gegenüber dem Rahmen 1 festlegbar ist und auf diesen in axialer Richtung anpassbar ist. beispielsweise kann bei einem dünneren Rahmenauge 1b die Schraubverbindung weiter angezogen werden als bei einem dickeren Rahmenauge 1b. 2) Der Adapter 60 ist gegenüber dem Basiselement 20 im Uhrzeigersinn nur begrenzt verdrehbar und stellt damit eine Verdrehsicherung und einen Vorwärtsanschlag dar. Dazu sind an der Mutter 66 zwei Anschläge 68a, 68b angeordnet, die mit zwei Stiften 24a, 24b am Basiselement 20 zusammenwirken, vgl. Fig. 3 b). Eine Verdrehung des Schaltwerks 10 nach vorne (gegen den Uhrzeigersinn) ist aufgrund der Verdrehsicherung zwischen Adapter 60 und Basiselement 20 nur begrenzt möglich. Die Verdrehsicherung ersetzt die übliche B-Schraube und schützt vor einem ungewollten Verdrehen des Schaltwerks nach vorne. Aus der durch den Anschlag der Stifte 24a, 24b an den Anschlägen 68a, 68b definierten Schwenkstellung des Basiselements 20 am Hinterbaurahmen 1 resultiert eine entsprechende Spannung der durch die Kettenführungsanordnung 50 geführten Kette und ein entsprechender Abstand des obersten Kettenführungsröllchens von einem Referenzritzel des Ritzelpakets (sog. "Chain Gap", als "Kettenlücke" übersetzbar).

Die DE'253 schlägt die folgenden Montageschritte für die Montage und Einstellung des hinteren Schaltwerks am Hinterbau des Fahrradrahmens vor:
i) Das Schaltwerk 10 wird mittels des Basiselements 20 und dem Adapter 60 am Hinterbaurahmen 1 vormontiert. Dazu umgreift das Basiselement 20 das rechte Ausfallende des Hinterbaurahmens 1 und der Adapter 60 wird in die Rahmenöffnung 2b und die Zentrieröffnungen 23a, 23b in das Basiselement 20 eingesetzt und verschraubt. Der Adapter 60 wird soweit verschraubt, dass er zusammen mit dem Basiselement 20 noch drehbar am Hinterbaurahmen 1 gehalten wird (vgl. Figuren 6 und 7 der DE'253).
   Nach dem ersten Montageschritt sind der Adapter 60 und das Basiselement 20 in axialer und radialer Richtung gegenüber dem Hinterbaurahmen 1 vorpositioniert, aber noch nicht festgezogen. Adapter 60 und Basiselement 20 sind gegenüber dem Hinterbaurahmen 1 um die Achse A drehbar.
ii) Das Hinterrad mit der gesamten Nabenanordnung wird eingesetzt und die Steckachse 7 eingeschraubt aber noch nicht ganz festgezogen (vgl. Figuren 1 bis 3 der DE'253, ohne Darstellung des Hinterrads). Im noch nicht festgezogenen Zustand lässt sich das Schaltwerk 10 noch um die Hinterradachse A drehen.
iii) Der Adapter 60 wird angezogen. Dabei wird der Bolzen 61 solange mit der Mutter 66 im UZS gegenüber dem Basiselement 20 gedreht, bis die Anschläge 68a, 68b der Mutter 66 auf die Gegenanschläge 24a, 24b des Basiselements 20 treffen. Aufgrund der Anschläge wird das Basiselement 20 und das gesamte Schaltwerk 10 beim Weiterdrehen solange mitgenommen, bis die Kette gespannt ist. In der gespannten Position ist sowohl das Basiselement 20, als auch die Mutter 66 festgelegt, so dass sich der Bolzen 61 solange in das Innengewinde 67 der Mutter 66 schraubt, bis sich der Adapter 60 am Hinterbaurahmen 1 festgezogen hat.
   Um über die von dem Außengewinde 64 des Adapterbolzens 61 und das Innengewinde 67 der Adaptermutter 66 gebildeten Gewindepaarung hinreichende Mitnahmedrehkräfte von dem Adapterbolzen 61 auf die Adaptermutter 66 übertragen zu können, kann und sollte diese Gewindepaarung mit einer vorzugsweise werkseitigen Schraubensicherung versehen sein.
   Optional kann eine Einstellhilfe zum Einsatz kommen. Denkbar wäre eine Einstellarretierung, wie sie in Figur 10 der DE'253 gezeigt ist. Die Arretierung 42/58 legt die um die Achse P drehbare Kettenführungsanordnung 50 in einer bestimmten Winkelposition fest und gibt damit den gewünschten Abstand zwischen dem oberen Kettenröllchen 51 und einem Referenzritzel vor. Dazu wird das Schaltwerk 10 in einen Referenzgang bzw. auf ein Referenzritzel geschalten, die Kettenführung 50 arretiert und das Basiselement 20 zusammen mit dem gesamten Schaltwerk 10 soweit um die Hinterradachse A nach hinten verdreht, bis die ideale Kettenspannung erreicht ist.
iv) In der eingestellten Position wird die Steckachse 7 festgezogen und die Arretierung gelöst. Durch das Festziehen der Steckachse 7 wird der innere Arm 22a zwischen der Nabenendkappe 4 und dem Adapter 60 verklemmt. Dadurch richtet sich der Arm 22a zusammen mit dem gesamten Basiselement 20 und dem Schaltwerk 10 orthogonal zur Nabenendkappe 4 bzw. zur Hinterradachse A aus. Toleranzen und erhebliche Ungenauigkeiten des Hinterbaurahmens, der Ausfallenden sowie des beim Stand der Technik erforderlichen Schaltwerkshangers spielen für diese Ausrichtung keine Rolle mehr.

Zu weiteren Einzelheiten der Konstruktion und Art und Weise der Montage des bekannten Schaltwerks 10 an einem Fahrrad-Rahmen wird ausdrücklich auf den kompletten Inhalt der Offenlegungsschrift DE 10 2018 001 253 A1 oder einer der hiermit korrespondierenden Veröffentlichungen der gleichen Patentfamilie verwiesen. So werden darin auch die vielfältigen Vorteile bzgl. Robustheit, Präzision der Kettenführung und des Schaltvorgangs sowie Vereinfachung des Montageprozesses ausführlich erläutert, vgl. insbesondere Absätze [0013], [0041], [0057], [0064], [0090 iv], [0097], [0100] in der DE'253. Die Funktion des einen Bolzen oder Adapterbolzen 61 und eine Mutter oder Adaptermutter 66 aufweisenden Adapters 60 spielt in diesem Zusammenhang eine wesentliche Rolle, wie sich auch aus den vorstehenden Erläuterungen dieser bekannten Lösung ergibt.

Die hier beschriebene Erfindung betrifft nun vor allem Aspekte des Adapters und dessen Schnittstellen zu Hinterbaurahmen und Basiselement 20, welches in der Branche auch als B-Knuckle bezeichnet wird, vgl. Figuren 1 bis 10 in der DE'253.

In der folgenden Beschreibung von erfindungsgemäßen Ausführungsformen werden dieselben oder analoge Bezugszeichen wie in der Beschreibung und den Figuren der der DE'253 verwendet, in der folgenden Weise: Für Elemente, die in Wesentlichen identisch oder geringfügig abgewandelt den entsprechenden Elementen der bekannten Lösung gemäß DE'253 entsprechen, werden die selben Bezugszeichen wie in der DE'253 verwendet. Für Elemente, die eine analoge Funktion wie Elemente der bekannten Lösung gemäß DE'253 erfüllen, aber sich strukturell davon unterscheiden, werden die Bezugszeichen aus der DE'253, vermehrt um den Zahlenwert 100, verwendet. Für Elemente, die kein Vorbild bei der bekannten Lösung gemäß DE'253 haben oder in der DE'253 nicht mit Bezugszeichen bezeichnet sind, werden hingegen neue Bezugszeichen im Zahlenraum beginnend ab 200 verwendet. In der folgenden Beschreibung verweisen Bezugszeichen aus dem Zahlenraum 0 bis 99, die sich nicht in den Figuren des vorliegenden Figurensatzes finden, auf in den Figuren der DE'253 dargestellte Elemente.

Nach einem ersten Erfindungsthema geht es um die Gewährleistung einer benötigten Einstellbarkeit eines Basiselements 20 des hinteren Schaltwerks am Fahrradrahmen vermittels des Adapters im Zuge der Montage, und hierzu unter anderem um ein sicheres Anschlagen einer Anschlagsflächen oder mehreren Anschlagsflächen 168 der Mutter bzw. Adaptermutter 66 (vgl. die Anschläge 68a, 68b der Adaptermutter 66 gemäß DE'253) an einer Anschlagsflächen oder mehreren Anschlagsflächen 124 des Basiselements 20 (vgl. die Anschlagsflächen 24a, 24b des Basiselements 20 gemäß DE'253).

Wenn im Folgenden von Anschlagsflächen der Mutter bzw. Adaptermutter 66 und Anschlagsflächen des Basiselements 20 die Rede ist, soll dies auch die Möglichkeit miterfassen, dass die Adaptermutter 66 nur eine entsprechende Anschlagsfläche aufweist und dass das Basiselement nur eine entsprechende Anschlagsfläche aufweist, sofern sich aus dem jeweiligen Kontext nicht klar eine Mehrzahl von Anschlagsflächen des Basiselements oder/und der Adaptermutter ergibt.

Der Bolzen 61 wird während des Montageprozesses über die Adaptermutter 66 mit dem Rahmenauge verspannt. Während der Bolzen 61 angezogen wird, ist es zur korrekten Montage des Schaltwerks erforderlich, dass sich die Mutter 66 so lange mitdreht, bis die Anschlagsflächen 168, 124 (vgl. 68a, 68b, 24a, 24b gem. DE'253) von Mutter und Basiselement einander kontaktieren, um sodann beim weiteren Anziehen des Bolzens 61 das Basiselement 20 und damit das koaxial um die Hinterachse schwenkbare Schaltwerk durch die Adaptermutter 66 rotatorisch mitzunehmen, bis die Kette gespannt ist. Es hat sich gezeigt, dass nachstehend beschriebene Randbedingungen auftreten können, die sich ungünstig auf diesen Abschnitt der Einstellprozedur auswirken.
a) Abrasion/Entfernen der herkömmlich werksseitig vorgesehenen Schraubensicherung im Gewinde 67, 64 zwischen Mutter und Bolzen und/oder Fetten dieser Verbindung durch den Nutzer.
   Das beim Anziehen des Bolzens im Gewinde zwischen Mutter und Bolzen entstehende und zur ordnungsgemäßen Mitnahme der Adaptermutter 66 bei der vorstehend genannten und in der DE'253 beschriebenen Schaltwerksmontage bzw. Schaltwerkseinstellung erforderlichen Mitnahmemoment kann hierdurch stark reduziert werden. Dann ist eine Mitnahme der Adaptermutter 66 durch den Bolzen 61 beim Anziehen des Bolzens 61, und damit eine entsprechende Mitnahme des Basiselements 20 und des gesamten Schaltwerks, und damit dessen korrekte Justage, nicht mehr gewährleistet.
b) Vorzeitiges Kontaktieren/Greifen der Rändelfläche 69 am Rahmenauge beim vorstehend beschriebenen Anziehen des Bolzens 61.
Hierdurch kann die zur ordnungsgemäßen Schaltwerksmontage bzw. Schaltwerkseinstellung erforderliche Mitnahme und Rotation der Mutter 66 und damit des Schaltwerks um die Hinterachse bei der Schaltwerksmontage bzw. Schaltwerkseinstellung gehemmt werden. Reicht das in der Gewindepaarung von Mutter 66 und Bolzen 61 erzeugte Mitnahmemoment durch den Bolzen auf die Mutter 66 nicht aus, diesen Reibungswiderstand der Rändelfläche am Rahmenauge zu überwinden, so wird die Mutter in nicht korrekter Winkelposition mit dem Rahmenauge verspannt. Die "korrekte Winkelposition" der Adaptermutter in diesem Zusammenhang ist diejenige Winkelposition, in welcher das Basiselement 20 und damit das Schaltwerk so weit koaxial um die Hinterachse aus der Fahrerperspektive nach hinten geschwenkt ist, dass die vorgesehene Kettenspannung und der erforderliche Chain Gap (Abstand der oberen Kettenführungsrolle zu einem Referenzritzel der Ritzelkassette) erreicht sind. Einzelheiten zur Einstellung des Chain Gap eines Fahrrad-Antriebsstrangs können der vorgenannten DE'253 in Absatz [0090 iv], sowie ausführlicher der am 25.02.2021 veröffentlichten Offenlegungsschrift DE 10 2020 210 354 A1 der deutschen Patentanmeldung Nr. 10 2020 210 354.2 entnommen werden.

Die Erfindung stellt zu diesen Problemen mehrere sich ergänzende konkrete Lösungen bereit, die zum Teil auch als alternative Lösungsvorschläge anzusehen sind. Es können aber auch alle diese Lösungsvorschläge gemeinsam realisiert werden.

Nach einem Erfindungsvorschlag wird verhindert, dass beim Festziehen des Adapterbolzens 61 gegenüber der Adaptermutter 66 die Rändelfläche der Adaptermutter deren zugehörige Anlagefläche am Rahmenauge kontaktiert, bevor die Anschlagsposition der Anschlagsflächen 168 und 124 (vgl. 68a, 68b, 24a, 24b gemäß DE'253) von Adaptermutter und Basiselement 20 aneinander erreicht ist.

Nach einem anderen Erfindungsvorschlag wird das Mitnahmedrehmoment zwischen Adapterbolzen und Adaptermutter erhöht.

Nach einem weiteren Erfindungsvorschlag wird das während der Schaltwerksmontage bzw. -justage unerwünschte, weil die Rotation der Adaptermutter bis zum Erreichen deren korrekter Rotations- und Anschlagsposition am Basiselement 20 unterbindende Haltemoment zwischen Adaptermutter 66 und Basiselement verringert.

Eine Ausführungsform der Erfindung sieht vor, ein Federelement vorzugsweise in einer Nut in die Adaptermutter zu integrieren. Die Nut ist bevorzugt im Bereich der Rändelfläche 69 bzw. Kontaktfläche der Adaptermutter hin zur Kontaktfläche des Rahmenauges vorgesehen, die zur Aufnahme eines entsprechenden, vorzugsweise axial wirkenden Federelements geeignet ist.

Das Federelement gemäß der in unten näher behandelten Figuren dargestellten Ausführungsform steht in axialer Richtung über die Rändelfläche der Adaptermutter vor dergestalt, dass das Federelement beim Anziehen des Adapterbolzens die Kontaktfläche des Rahmenauges kontaktiert, bevor die Rändelfläche der Adaptermutter die Kontaktfläche des Rahmenauges berühren kann.

Auf diese Weise wird sichergestellt, dass das Federelement beim Anziehen des Adapterbolzens zunächst teilweise vorgespannt wird solange, bis die Rändelung der Adaptermutter an der Kontaktfläche des Rahmenauges greifen kann. Wird also der Bolzen beim Montage- bzw. Einstellvorgang des Schaltwerks angezogen, so wird durch die Feder zunächst ein Luftspalt zwischen der Kontaktfläche des Rahmenauges und der Rändelfläche gewährleistet. Beim weiteren Anziehen des Adapterbolzens wird das Federelement weiter vorgespannt, und der Luftspalt wird sukzessive reduziert. Mit zunehmender Vorspannung des Federelements erhöht sich die von Adapterbolzen und Adaptermutter erzeugte axiale Klemmkraft, wodurch auch das Mitnahmedrehmoment vom Adapterbolzen auf die Adaptermutter durch zunehmende Reibung im Gewinde ansteigt.

Alternativ oder zusätzlich kann nach einer anderen Ausführungsform ein Reibschluss-Mitnahmeelement vorgesehen werden, welches zwischen dem Adapterbolzen 61 und der Adaptermutter 66 wirksam ist und beispielweise nach dem Wirkprinzip einer selbsthemmenden Mutter funktioniert, um für ein Mitdrehen der Adaptermutter zu sorgen, wenn der Adapterbolzen verdreht wird.

Wird also das Federelement oder das Reibschluss-Mitnahmeelement vorgesehen oder werden das Federelement und das Reibschluss-Mitnahmeelement beide vorgesehen, dann steht im Allgemeinen ausreichend Mitnahmemoment an der Adaptermutter 66 zur Verfügung, um den Rotationsanschlag zwischen den Anschlagsflächen bzw. Anschlagselementen 168 und 124 (vgl. 68a, 68b, 24a, 24b gemäß DE'253) von Adaptermutter und Basiselement 20 sicher zur erreichen, bevor die Rändelung der Adaptermutter an der Kontaktfläche des Rahmenauges greift.

So lässt sich sicherstellen, dass die Adaptermutter 66 bei der Schaltwerksmontage bzw. Schaltwerksjustage in der korrekten Rotationsposition und dabei gleichzeitig an den Anschlagsflächen bzw. der Anschlagsfläche 124 des Basiselements 20 anliegend am Rahmenauge fixiert wird. Die korrekte Rotationsposition der Adaptermutter und damit des Schaltwerks um die Hinterachse gewährleistet sodann die gewünschte bzw. vorgeschriebene Kettenspannung und dem gewünschten bzw. vorgeschriebenen, korrekten Chain Gap zwischen der oberen Kettenführungsrolle und dem Referenzritzel der Ritzelkassette.

Angemerkt sei, dass im Falle des Vorsehens nur des Reibschluss-Mitnahmeelements die Adaptermutter trotzdem mit einer für die Aufnahme des Federelements geeigneten Nut ausgeführt sein kann, etwa um die Teile-Vielfalt zu reduzieren, wenn Ausführungsformen mit dem Federelement und Ausführungsformen ohne das Federelement produziert werden sollen oder um eine einfache Möglichkeit für die Nachrüstung des Federelements im Bedarfsfall zu schaffen.

Um den beschriebenen Einstellprozess bei der Schaltwerksmontage bzw. Schaltwerksjustage auch bei besonders widrigen Randbedingungen korrekt ausführen zu können, können vorteilhaft auch weitere, im Folgenden angesprochene Lösungsvorschläge realisiert werden, deren Merkmale mit Bezug auf die beigefügten Figuren unter näher beschrieben sind und auch als von den zuvor angesprochenen Lösungsvorschlägen unabhängige eigenständige Lösungsvorschläge anzusehen sind.

So kann eine radiale Nut der Adaptermutter im Überlappungsbereich der Adaptermutter mit dem linken Arm des Basiselementes als Aufnahme für ein Ringelement dienen. Dieses Ringelement dient als Gleitlager, um beim Anziehen des Adapterbolzens ein geringes Haltemoment zwischen Adaptermutter und Basiselement zu gewährleisten, und ist aus einem entsprechend geeignetem Gleitlagerwerkstoff (z.B. POM) gefertigt.

In einer besonderen Ausführungsform wird das Ringelement dimensional so ausgeführt, dass dessen Außendurchmesser eine Presspassung mit dem Innendurchmesser des Basiselements im Überlappungsbereich zwischen Ringelement und linkem Arm des Basiselements eingeht. Der Innendurchmesser des Ringelements hat wiederum eine Spielpassung mit dem Außendurchmesser der Adaptermutter im Nutbereich. Auch eine demgegenüber umgekehrte Zuordnung des Innendurchmessers und des Außendurchmessers zu einer Presspassung und einer Spielpassung des Ringelements kommt in Betracht. Angemerkt sei ferner, dass die radiale Nut alternativ auch in dem linken (inneren) Arm des Basiselements ausgeführt sein könnte.

Mit dieser Anordnung fungiert das Ringelement als Gleitlager für die Adaptermutter im Basiselement, wobei zusätzlich noch eine axiale Fixierung der Adaptermutter im Basiselement realisiert wird. Diese Integration erleichtert den Montageprozess und verhindert, dass die Adaptermutter im demontierten Zustand des Schaltwerks abhanden kommt.

In einer besonders bevorzugten Ausführungsform wird das axiale Spiel, also der axiale Spalt in der radialen Nut zwischen dem einen Ende der radialen Nut der Adaptermutter und einem Eingriffsvorsprung am Ringelement, mit dem dieses in die radiale Nut der Adaptermutter eingreift, derart ausgeführt, dass sich dieser axiale Spalt beim Anziehen des Bolzens schließt, bevor die Rändelfläche der Adaptermutter am deren Anlagefläche am Rahmenauge greift.

Hierdurch wird beim weiteren Anziehen des Bolzens das Ringelement über die axiale Gleitfläche zwischen Mutter und Ringelement aus der Presspassung zwischen Ringelement und Basiselement ein kleines Stück herausgezogen. Die zur Überwindung der axialen Haltekraft dieser Presspassung benötigte Kraft wird über das Gewinde zwischen Adapterbolzen und Adaptermutter bereitgestellt, und impliziert damit in diesem Gewinde erhöhte Reibkräfte. Die entsprechende Zunahme des Mitnahmemomentes in diesem Moment des Anzugsprozesses an der Adaptermutter hilft wiederum, den Rotationsanschlag der Anschlagsflächen 168 der Adaptermutter 66 an den Anschlagsflächen 124 des Basiselements sicher zu erreichen.

Nach einem zweiten Erfindungsthema geht es um die Erzielung eines hohen Haltemoments zwischen Adaptermutter und Rahmenauge.

Im montierten Zustand sind Adaptermutter und Adapterbolzen durch deren axiale Gewindekräfte fest mit dem Rahmenauge verspannt. Über den Rotationsanschlag der Anschlagsflächen 168 der Adaptermutter 66 und der Anschlagsflächen 124 des Basiselements werden im Betrieb erhebliche Kräfte vom Basiselement auf die Mutter übertragen und von dieser weiter in den Hinterbaurahmen abgeleitet.

Dabei darf sich die im Einstellprozess korrekt ausgerichtete Winkelposition der Adaptermutter gegenüber dem Rahmenauge nicht verstellen, um korrekten Betrieb des Schaltwerks zu gewährleisten. Es hat sich gezeigt, dass ein hohes Haltemoment zwischen Mutter und Rahmenauge von großer Bedeutung ist.

Weiterhin ist es wichtig, das für dieses Haltemoment notwendige Anzugsmoment im Adapterbolzen vergleichsweise gering zu halten. Hierdurch soll der Einstellprozess im Notfall auch im Feld mit entsprechend minimalistisch dimensioniertem Werkzeug (sog. Multitool) ausgeführt werden können. Zum anderen besteht bei hohen axialen Klemmkräften zwischen Adapterbolzen und Adaptermutter die Gefahr, gewichtsoptimierte Rahmen aus Carbon oder anderen Leichtbauwerkstoffen zu beschädigen. Auch bei der Auslegung von Bolzen und Mutter lässt sich Gewicht einsparen, wenn die aufzunehmenden Vorspannkräfte reduziert werden können.

Zur Lösung dieses Problems schlägt die Erfindung vor, dass an der Adaptermutter 66 ein Außenflansch vorgesehen wird. Dieser Flansch ist derart ausgeprägt, dass er sich in einen dafür vorgesehenen Spaltbereich zwischen dem Innenarm des Basiselements und dem Rahmenauge erstreckt.

Mit dieser Anordnung kann ein größerer wirksamer Durchmesser der Adaptermutter zur Aufnahme des Haltemoments zwischen Rahmenauge und Adaptermutter realisiert werden. Weiterhin wird durch diese Durchmesser- und Flächenvergrößerung der Kontaktfläche im Flanschbereich der Adaptermutter der Flächenverlust durch die Federnut (wenn vorgesehen) für das ggf. vorgesehene Federelement kompensiert.

Es hat sich sogar gezeigt, dass eine weitere Reduktion der Rändelfläche im Bereich radial innerhalb der Federnut vorteilhaft sein kann. Ausschlaggebend hierfür ist die axiale Vorspannkraft und die Ausprägung der Rändelung. Bei gegebener Rändelgeometrie und axialer Vorspannkraft kann ein Flächenwert ermittelt werden, der bei einem definierten Rahmenmaterial zu optimalen Eingriffsbedingungen führt.

Vorzugsweise wird die ermittelte Rändelfläche dann am radial äußeren Bereich der verfügbaren Kontaktfläche aufgebracht, um den maximalen wirksamen Durchmesser für das Haltemoment zu nutzen. Die Erfindung ist dafür geeignet, Leichtbaurahmen aus Composite-Werkstoffen mit koaxialen Schaltwerken auszustatten, und dennoch den fehlerfreien Betrieb auch im extremen Gelände zu gewährleisten.

Nach einem dritten Erfindungsthema geht es um die Erzielung eines hohen Haltemoments zwischen Mutter und Basiselement in Anschlagsrichtung.

Bei den angesprochenen Betriebsbedingungen im Gelände werden hohe Impulskräfte vom Basiselement 20 des Schaltwerks in das System aus Fahrrad-Antriebsstrang und Rahmen-Hinterbau eingeleitet. Entsprechend muss auch die Schnittstelle zwischen Basiselement und Adaptermutter hohe Kräfte aufnehmen.

Die Erfindung löst diese Aufgabe, indem der für diese Kraft- bzw. Drehmomentübertragung vom Basiselement 20 des Schaltwerks auf die Adaptermutter 66 und von dort über die Rändelfläche der Adaptermutter auf das Rahmenauge und damit den Rahmen-Hinterbau wirksame Abstützdurchmesser im Vergleich zum Stand der Technik z.B. gemäß der DE'253 deutlich erhöht wird. Hierfür wird der Flanschbereich der Adaptermutter genutzt bzw. nach radial außen über die Rändelfläche der Adaptermutter hinaus erweitert. Entsprechend der durch das Rahmenauge bzw. die Rahmenschnittstelle vorgegebenen Randbedingungen wird der Gegenanschlag 124 am Basiselement 20 im vorderen Bereich der Stützstruktur am Innenarm angebracht.

Die Rahmenschnittstelle bietet in diesem Bereich zusätzlichen Freiraum, der für die Montage von Adaptern für nicht-koaxiale Schaltwerke verwendet werden kann, wie diese beispielsweise aus der DE 10 2018 206 104 A1 (DE'104) und der DE 10 2018 222 834 A1 (DE'834) bekannt sind. Dieser Bauraum wird einerseits dafür genutzt, die Kontaktfläche bzw. das Anschlagelement 124 möglichst weit radial außen zu positionieren. Andererseits wird dieser Flanschbereich der Adaptermutter derart ausgebildet, dass nur ein begrenzter Winkelbereich hin bis zum möglichen Anschlag des Flanschbereichs der Adaptermutter am Vornanschlag der Rahmenschnittstelle zur Verfügung steht. Damit kann dieser Vornanschlag am Rahmen genutzt werden, um beim Lösen des Bolzens, z.B. zur Demontage des Schaltwerks, eine Haltekraft für die Adaptermutter bereitzustellen.

Im Gegensatz zum Stand der Technik, beispielsweise der vorgenannten DE'834, kann der Winkelbereich bis zum Anschlag des Flanschbereichs der Adaptermutter am Vornanschlag der Rahmenschnittstelle deutlich kleiner ausgeführt werden, da dieser Winkelbereich bei der Anordnung gemäß der vorliegenden Erfindung nicht im Zusammenhang mit dem Schwenkbereich des Schaltwerks nach hinten steht.

Hieraus ergeben sich zwei Vorteile. Einerseits wird durch den reduzierten Winkelbereich der Abrieb an der Anlagefläche des Rahmenauges für die Adaptermutter reduziert, der durch das Mitdrehen der Adaptermutter beim Lösen des Adapterbolzens durch die Rändelung der Adaptermutter entstehen kann. Andererseits muss beim Einstellprozess des Schaltwerks auf diese Weise nur ein geringer, begrenzter Winkelbereich überwunden werden, was zum schnellen und sicheren Erreichen der korrekten Anschlagsposition des Flanschbereichs der Adaptermutter am Anschlagelement 124 des Schaltwerks-Basiselements beiträgt.

Nach einem vierten Erfindungsthema geht es um alternative Ausgestaltungen der Adaptermutter. Die Anschlagsmutter kann vorteilhaft mit einem zweiten Anschlag ausgeführt sein, als Alternative zur Ausführung der Adaptermutter mit nur einem ersten Anschlag.

Nach der Erfindung besteht die Möglichkeit, eine Adaptermutter entweder mit einem oder mit zwei Anschlagsbereichen einzusetzen. Diese Adaptermuttern können einfach gegeneinander ausgetauscht werden, und das Schaltwerk kann so für den jeweiligen Anwendungsbereich optimiert werden.

Der Vorteil einer Adaptermutter mit einem Anschlagsbereich ist neben der Gewichtsersparnis vor allem der große Schwenkbereich des Schaltwerks nach hinten. Hierdurch wird der Ausbau des Laufrades erleichtert und lässt sich sogar dann durchführen, wenn das Schaltwerk unter einem der größeren Ritzel der Ritzelkassette positioniert ist. Bei Defekten im Rennbetrieb kann diese Funktionalität wertvolle Sekunden einsparen.

Die Ausführung der Adaptermutter mit zwei Anschlagsbereichen begrenzt dagegen den Schwenkbereich des Schaltwerks nach hinten. Der schnelle Ausbau des Laufrades ist damit üblicherweise nur möglich, wenn das Schaltwerk im Bereich der kleineren Ritzel der Ritzelkassette positioniert ist. Die Begrenzung des Schwenkbereiches nach hinten hilft andererseits jedoch Schäden zu vermeiden, die durch gewaltsames Zurückschwenken des Schaltwerks entstehen können. Derartige Situationen können auftreten, wenn die Kette im Schaltwerkskäfig, z.B. durch Verklemmen eines Fremdkörpers, blockiert. Durch weiteres Pedalieren wird dann das Schaltwerk durch die Kettenkraft nach hinten geschwenkt. Dies ist von besonderer Bedeutung auch bei Pedelecs bzw. e-Bikes, bei denen die Antriebskraft besonders hoch sein kann, oder bei denen die Motorsteuerung ein solches Verklemmen eines Fremdkörpers im Schaltwerk oft nicht rechtzeitig erkennt, wodurch es zu Schaltwerks-Abrissen kommen kann.

Nach einem fünften Erfindungsthema geht es um die leichte Erkennbarkeit einer Fehlstellung des Schaltwerks am Rahmenauge und um eine Hilfestellung dafür, die Stellung des Schaltwerks (wieder) richtig einzustellen. Hierzu stellt die Erfindung einen sog. "Crash-Indicator" (auch als "B-Gap Kontroll-Anzeige" bezeichenbar) bereit.

In der vorgenannten Patentanmeldung DE'253 ist eine Funktionalität des Schaltwerkes beschrieben, die Schaltwerk und Rahmen vor allem bei Stürzen oder frontalen Stößen durch Kontakt mit Hindernissen im Fahrbetrieb vor Schäden schützen kann.

Durch die reibschlüssige koaxiale Fixierung des Basiselements zwischen Adapterbolzen und Nabenendkappe 4 Beziehung S. 104, vgl. z.B. Fig. 24a der DE'253, kann das Schaltwerk, im Gegensatz zu herkömmlichen, nicht koaxial zur Hinterachse montierten Schaltwerken nicht frei nach hinten geschwenkt werden.

Weiterhin sind die Komponenten bei der aus der DE'253 bekannten Schaltwerksanordnung derart ausgelegt, dass zur Überwindung dieser reibschlüssigen Verbindung eine entsprechend verhältnismäßig hohe Kraft benötigt wird, um im normalen Betrieb so die korrekte Positionierung des Schaltwerkes zu gewährleisten.

Im Falle hoher Belastungen aus frontaler Richtung wird dieser Reibschluss jedoch überwunden, bevor es zu strukturellen Beschädigungen am Schaltwerk kommt. Durch diese Anordnung kann über den gesamten möglichen Schwenkwinkel des Schaltwerks nach hinten kontrolliert Energie abgebaut werden, beispielsweise bei Kollisionen des Schaltwerks mit Fremdkörpern während der Fahrt oder bei Stürzen, und damit das Schaltwerk vor Schäden geschützt werden.

Um jedoch nach derartigen Ereignissen die korrekte Positionierung des Schaltwerks wiederherzustellen, muss das Schaltwerk manuell in die ursprüngliche Anschlagsposition zwischen den Anschlagsflächen 168 und 124 (vgl. 68a, 68b, 24a, 24b gemäß DE'253) von Adaptermutter 66 und Basiselement 20 aneinander gebracht werden.

Es hat sich dabei einerseits gezeigt, dass insbesondere im extremen Geländebetrieb entsprechende Kollisionen und damit Schwenkwinkeländerungen des Schaltwerks relativ zum Hinterbau vom Nutzer oft unbemerkt bleiben. Andererseits treten jedoch häufig auch Fälle auf, bei denen das Schaltwerk sogar bei einem Sturz nicht aus der korrekten Anschlagsposition zwischen den Anschlagsflächen 168 und 124 (vgl. 68a, 68b, 24a, 24b gemäß DE'253) von Adaptermutter 66 und Basiselement 20 bewegt wird.

Aus diesen Situationen ergibt sich einerseits die Problemstellung, dass eine inkorrekte Positionierung des Schaltwerks vom Nutzer unbemerkt bleiben kann, was die Performance und Schaltqualität des Antriebsstrangs beeinträchtigt. Andererseits wird von Nutzern nach Stürzen oft unnötig versucht, das gar nicht verstellte Schaltwerk wieder zu repositionieren.

Die Erfindung löst diese beiden Problemstellungen mit einer für den Nutzer vorzugsweise gut sichtbaren Kontroll-Anzeige beispielsweise mit zwei Anzeigeelementen, eines vorzugsweise am Basiselement, und das andere vorzugsweise an der Adaptermutter. Die Kontroll-Anzeige visualisiert bei miteinander fluchtenden Anzeigeelementen die korrekte Positionierung des Anschlagelements 124 des Basiselements am zugehörigen Vornanschlag 168 der Adaptermutter 66, und damit die insbesondere in Bezug auf Kettenspannung und Chain-Gap korrekte Schwenkwinkelposition des Schaltwerks.

Wird das Schaltwerk nach hinten ausgelenkt, so entsteht eine sichtbare Distanz zwischen dem Anzeigeelement am Basiselement und dem rahmenfest stationären Anzeigeelement an der Adaptermutter. Diese Distanz zeigt an, dass eine manuelle Repositionierung des Schaltwerks erforderlich ist, und kann dem Anwender auch Aufschluss über die vom Schaltwerk aufgenommene Stoßenergie geben. Damit kann der Anwender das Kollisionsereignis einordnen, und gegebenenfalls über weitere Funktionskontrollen oder Wartungsmaßnahmen entscheiden.

Bei der anschließenden Repositionierung wird das Schaltwerk so weit nach vorne geschwenkt, bis die Anschlagsposition zwischen den Anschlagsflächen bzw. Anschlagselementen 168 und 124 von Adaptermutter 66 und Basiselement 20 wieder erreicht ist, und damit auch die Anzeigeelemente wieder fluchten.

Diesem Einstellvorgang wird damit der haptischen Kontrolle (Widerstand durch den Anschlag der Anschlagsflächen bzw. Anschlagselementen 168 und 124 aneinander) noch eine visuelle Kontrolle hinzugefügt. Diese Redundanz wird in der Praxis vom Anwender positiv wahrgenommen.

Nach den im Folgenden noch detaillierter anhand von bevorzugten Ausführungsbeispielen erläuterten Erfindungs- und Weiterbildungsvorschlägen werden unter anderem die folgenden Vorteile erreicht:
- Reduktion von Fehlmontagen der Schaltwerk-Adaptermutter
- Reduktion von Fehlmontagen des Schaltwerks bezüglich Rotationswinkel/Chain-Gap
- Erhalt und Reproduzierbarkeit der Schaltwerks-Einstellung auch bei Unterwartung oder Überwartung
- erhöhtes Haltemoment zur Aufrechterhaltung von Chain-Gap-Einstellung und Kettenspannung
- reduzierbare Klemmkraft und geringere Flächenpressung zum Schutz von Leichtbaurahmen
- verringerter Lack-/Materialabrieb am Rahmenauge bei De- und Montage des Schaltwerks
- reduziertes Anzugsmoment zur Einstellung des Schaltwerks z.B. im Feld
- unverlierbare Adaptermutter
- zwei austauschbare Varianten der Adaptermutter (z.B. "Extreme/Race" und "Protect/Normal")
- visuelle Crashanzeige am Schaltwerk
- visuelle Anzeige, ob ein Crash das Schaltwerk betroffen hat, und wie schwer dieser das Schaltwerk ggf. betroffen hat

Im Folgenden werden zwei bevorzugte Ausführungsbeispiele des erfindungsgemäßen Schaltwerks 10 und damit eines entsprechenden Fahrrads anhand der Figuren 5 bis 21 näher erläutert. In diesen Figuren sind nur das Basiselement und der Hinterbau 1 des Fahrradrahmens F mit zugehörigen Komponenten dargestellt. Der Schwenkmechanismus, das bewegliche Element und die Kettenführungsanordnung können wie bei der bekannten Lösung gem. DE 10 2018 001 253 A1 (DE'253) ausgeführt sein, die als Ausgangspunkt für die Beschreibung der erfindungsgemäßen Ausführungsformen anzusehen ist. Es werden nur die Unterschiede dieser Ausführungsbeispiele gegenüber der DE'253 erläutert.

Fig. 5 zeigt in der Teilfigur 5 a) eine geschnittene Darstellung der rechten Seite des Rahmen-Hinterbaus 1 des Fahrrad-Rahmens F samt des Basiselements 20 mit dessen inneren bzw. linken Arm 22a und dessen rechten bzw. äußeren Arm 22b. Das Basiselement ist analog zur bekannten Lösung der DE '253 mittels eines Adapters 60 am Rahmenauge 1b des Hinterbaus 1 befestigt. Der Adapter weist den bekannten Adapterbolzen 61 und die bekannte Adaptermutter 66 auf, die im gegenseitigen Schaubeingriff stehen. Die Adaptermutter 66 ist mit einem Außenflansch 202 ausgeführt. Alle dargestellten Komponenten sind geschnitten dargestellt. Der Hinterbau 1 ist in seinem auch als Ausfallende statt Rahmenauge bezeichenbaren, in den Figuren erkennbaren Bereich 1b mit einer rechten Rahmenöffnung 2b ausgeführt, die als ein Rahmenauge im engeren Sinne aufgefasst werden kann und in die der Adapterbolzen 61 eingeführt ist. Hier wird aber das gesamte Ausfallende, einschließlich einem die Rahmenöffnung 2b umgebenden Rahmenbereich als Rahmenauge bezeichnet. Allgemein kann man von einer Rahmenschnittstelle sprechen, oder auch von einem Halterungsabschnitt 1b des Rahmens.

Die Adaptermutter 66 weist an einer dem Hinterbaurahmen 1 zugekehrten axialen Innenseite im Radialbereich des Außenflansches 202 eine Nut 204 auf, in die ein Federelement 206 aufgenommen ist. Das Federelement ist nur in der Teilfigur 5 b) mit dem Bezugszeichen 206 bezeichnet. Im Radialbereich außerhalb der Federnut 204 weist der Außenflansch 202 an seiner dem Rahmenauge zugekehrten Fläche eine ringförmige Rändelfläche 208 auf.

Das vorzugsweise als Stahlfeder ausgeführte Federelement 206 steht axial aus der Federnut 204 vor, also vor der Rändelfläche 208. Das Federelement 206 sorgt durch seine entsprechende Vorspannung in diese axial vorstehende Stellung dafür, dass in einem vormontierten Zustand wie in Fig. 5 dargestellt, in dem der Adapterbolzen 61 noch nicht festgezogen ist, die Rändelfläche 208 auf Abstand von der zugeordneten Anlagefläche des Rahmenauges 1b gehalten wird, sodass vor dem Anziehen des Adapterbolzens ein axialer Luftspalt 210 zwischen dem Rahmenauge und der Rändelfläche der Mutter aufrechterhalten wird. Ein vorzeitiges reibschlüssiges oder gar formschlüssiges Greifen der Rändelfläche 208 am Rahmenauge wird so verhindert. Es wirkt dann an dieser Stelle maximal die Reibung zwischen dem Federelement 206 und der Innenseite des Ausfallendes. Hierdurch wird erreicht, dass die richtige bzw. gewünschte Winkelstellung des Basiselements 20 durch entsprechende Verdrehung des Adapterbolzens 61 in seiner Festziehrichtung eingestellt werden kann.

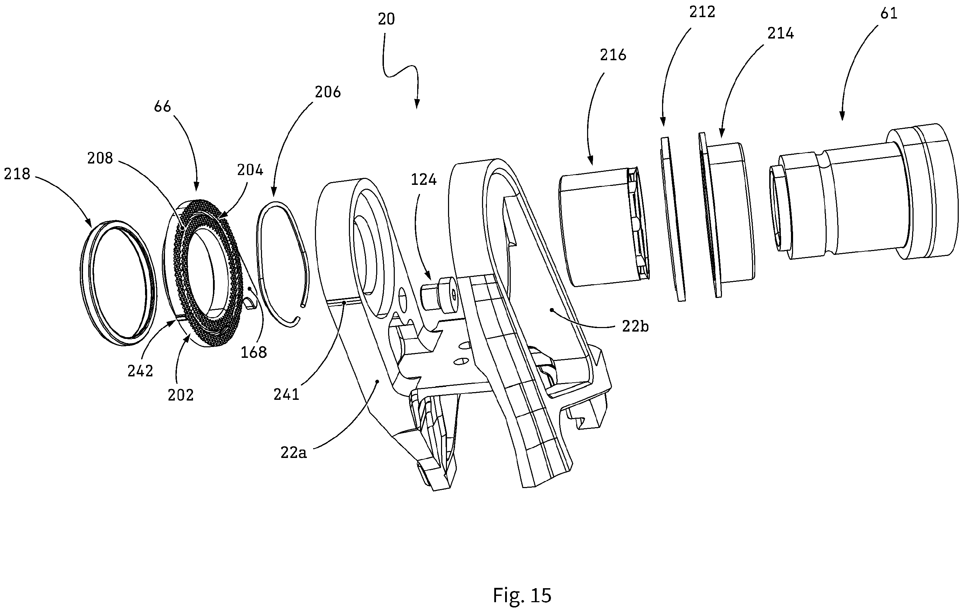

Bezugnehmend auch auf die Explosionsdarstellung der Fig. 15 können der Rahmenöffnung 2b, dem Adapterbolzen 61 und dem oberen Bereich des zweiten Arms 22b Lagerelemente zugeordnet sein, beispielsweise ein axial wirksamer Lagerkragen 212, eine radial und axial wirksame Lagerbuchse 214 und eine radial wirksame Lagerbuchse 216. Diese Lagerelemente können zweckmäßig aus einem steifen und belastbaren Gleitlagerwerkstoff hergestellt sein und dienen vorwiegend dem Toleranzausgleich zwischen den beteiligten gegeneinander beweglichen Bauteilen und der Spielreduktion zwischen Adapterbolzen und Rahmenauge bzw. zwischen Basiselement und Adapterbolzen. So wird auch für einen spielfreien Sitz des rechten Schaltwerkarms 22b beim Einstellvorgang gesorgt. Über dies werden empfindliche Rahmenoberflächen und Materialien geschützt. Auf solche Lagerelemente kann aber auch verzichtet werden.

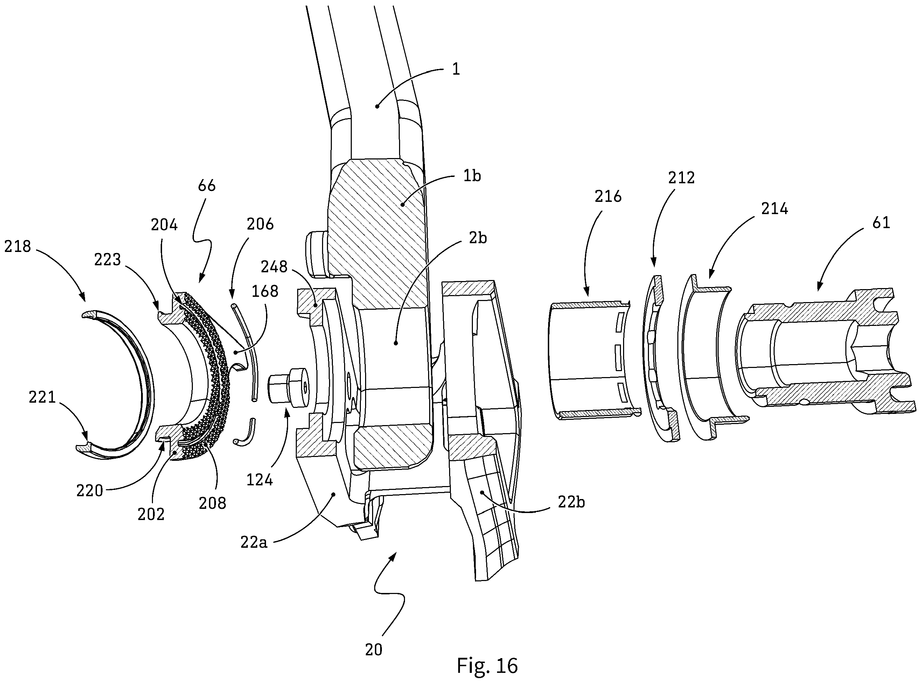

Die dargestellte Ausführungsform zeichnet sich ferner durch ein spezielles Ringelement 218 aus, welche in einem axialen und radialen Zwischenbereich zwischen der Adaptermutter 66 und dem inneren Arm 22a des Basiselements angeordnet ist, und zwar zwischen einander zugekehrten axialen Flächen des Innenarms 22a und der Adaptermutter 66 und einer äußeren Umfangsfläche der Adaptermutter 66 und einer inneren Umfangsfläche des Innenarms 22a. Das Ringelement 218 greift mit einem radial vorstehenden Ringbundabschnitt 221 (vgl. Fig. 16) in eine radiale Ringnut 220 der Adaptermutter 66 im Überlappungsbereich der Adaptermutter mit dem linken Arm 22a ein. Diese Ringnut 220 dient als Aufnahme für das Ringelement 218, um die Adaptermutter am inneren Arm 22a und damit im Basiselement 20 zu fixieren.

Das Ringelement 218 ist an seinem Außenumfang vermittels einer Presspassung 219 an einem Innenumfang eines axial vorstehenden Bundbereichs 248 (vgl. Fig. 16) des inneren Arms 22a gehalten und weist an seinem Innenumfang eine Spielpassung mit der Adaptermutter 66 auf.

Das Ringelement 218 kann aus einem geeigneten Gleitlagerwerkstoff hergestellt sein und stellt eine axiale Gleitfläche im axialen Überlappungsbereich der Adaptermutter mit dem linken Arm 22a des Basiselements 20 zur Verfügung. Es wird also quasi ein Gleitlager bereitgestellt, welches zwischen der Adaptermutter 66 und dem Basiselement 20 wirksam ist, um die Reibung zwischen diesen Komponenten zu reduzieren. Dies hat zur Folge, dass von den in den Adapterbolzen 61 eingeleiteten Drehkräfte in der Festziehrichtung, genauer der in Folge dieser Kräfte auf die Adaptermutter 66 ausgeübten Kräfte, ein größer Anteil für die Einstellung der Winkelstellung des Basiselements 20 am Ausfallende zur Verfügung steht.

Wie in der Teilfigur 5 b) zu erkennen, existiert in dem dargestellten vormontierten Zustand ein axialer Spalt 224 zwischen dem nach radial innen vorstehenden Ringbund 221 des Ringelements 218 und einem nach radial außen vorstehenden, die Nut 220 in Richtung zum inneren Arm 22a begrenzenden Ringbund 223 (vgl. Fig. 16) der Adaptermutter 66. Es besteht also im dargestellten vormontierten Zustand axiales Spiel zwischen dem Ringbund des Ringelements 218 und dem Ringbund der Adaptermutter 66, das im Zuge des Festziehens des Adapterbolzens aufgebraucht wird. Die Anordnung ist vorzugsweise derart, dass in der letzten Phase des Festziehens des Bolzens 61 in der Adaptermutter 66, wenn das Federelement 206 durch die innere Oberfläche des Ausfallendes 1b komplett in die Federnut 204 hineingedrängt wird, die beiden Ringbünde aneinander anstoßen und das Ringelement 218 durch die Adaptermutter 66 axial etwas aus seiner Presspassung 219 mit dem inneren Arm 22a herausgezogen, also durch die Adaptermutter 66 eine gewisse axiale Strecke mitgenommen wird.

Wie in Fig. 7, 8 11 und 12 genauer zu erkennen, kann die Rändelfläche 208 nur außerhalb der das Federelement 206 aufnehmenden Nut 204 vorgesehen sein. Eine ohne Rändelung ausgeführte Axialringstirnfläche der Adaptermutter radial innerhalb der Nut 120 ist hier mit 209 bezeichnet. Dieser dem Rahmenauge zugekehrte Flächenbereich der Adaptermutter kann aber ebenfalls mit einer Rändelung ausgeführt werden, wie in den Figuren 15 bis 21 dargestellt.

In beiden Fällen wird für ein hohes Haltelement zwischen der Rändelung der Adaptermutter 66 und dem Hinterbaurahmen 1 gesorgt, wenn der Adapterbolzen 61 festgezogen ist. Erreicht wird dies durch den gegenüber der bekannten Lösung der DE'253 deutlich größeren wirksamen Radius der Rändelung und Vergrößerung der Rändelfläche, aufgrund des Außenflansches 202, der sich in einem Axialbereich zwischen dem Innenarm 22a und der Anlagefläche am Rahmenauge 1b erstreckt.

Es bestehen grundsätzlich diverse Möglichkeiten, wie die Schnittstelle 125 zwischen dem Basiselement 20 und der Adaptermutter 66 ausgestaltet sein könnte, um eine Übertragung von Dreh-Verstellkräften von der Adaptermutter 66 auf das Basiselement 20 auf Basis von auf den Adapterbolzen 61 ausgeübten Drehkräften in der Festziehrichtung zu ermöglichen. Eine besonders zweckmäßige Ausgestaltung ist in Fig. 8 zu erkennen. Der innere Arm 22a des Basiselements ist mit einem axial vorstehenden Vorsprung ausgeführt, und zwar im vorderen Bereich einer Stützstruktur am Innenarm, welcher eine Anschlagfläche 124 bereitstellt.

Vorliegend ist der Vorsprung von einem vorzugsweise gesonderten, etwa als Anschlagbolzen ausgeführten Anschlagelement gebildet, welches der Einfachheit halber ebenfalls mit 124 bezeichnet ist. Dieser Anschlagfläche 124 bzw. diesem Anschlagelement 124 ist ein radial vorstehender Flanschbereich 168 des Außenflansches 202 der Adaptermutter 66 zugeordnet, der die der Anschlagfläche 124 zugeordnete Anschlagfläche der Adaptermutter bildet. Der Einfachheit halber wird für diesen Flanschbereich und die von ihm bereitgestellte Anschlagfläche das gleiche Bezugszeichen 168 verwendet. Der Flanschbereich 168 und das Anschlagelement 124 bzw. die von diesen bereitgestellten Anschlagflächen bilden zusammen die angesprochene Schnittstelle 125 zwischen Basiselement und der Adaptermutter, die in Fig. 8 durch den gestrichelten Kreis 125 hervorgehoben und identifiziert ist.

Der Flanschbereich 168 ist vorzugsweise derart geformt, dass nur ein begrenzter Winkelbereich α hin bis zum Anschlag an einer Begrenzung der Rahmenschnittstelle zur Verfügung steht. Hierdurch wird insbesondere die Abnutzung bzw. Beschädigung der Rahmenoberfläche durch die Rändelflächen der Adaptermutter bei etwaigem gewaltsamen Verdrehen des Schaltwerks nach vorne begrenzt, und gegenüber dem Stand der Technik reduziert

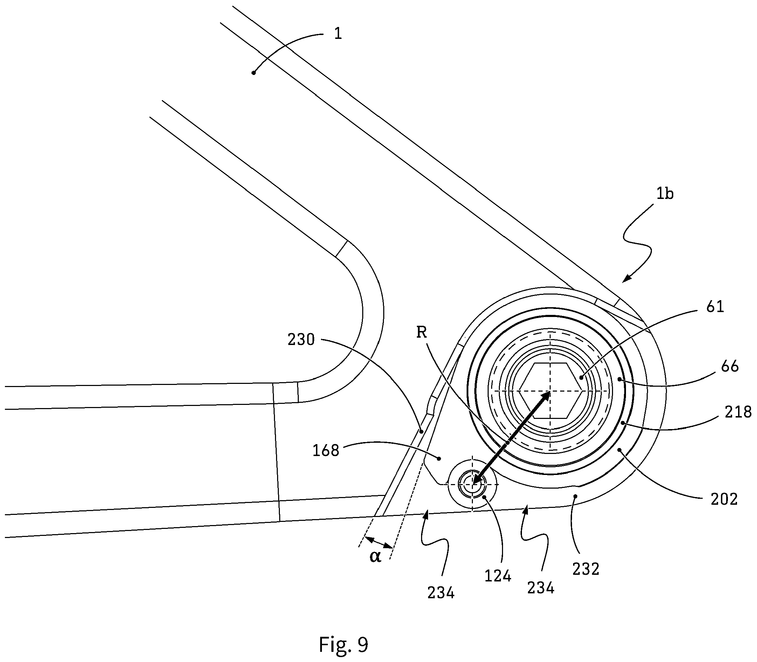

Der angesprochene Voranschlag der Rahmenschnittstelle ist in Fig. 9 zu erkennen und mit 230 bezeichnet. Es besteht ein begrenzter Winkelbereich α zwischen dem als Anschlag dienenden Flanschbereich 168 der Adaptermutter 66 und diesem Vornanschlag 230 des Hinterbaurahmens, beispielsweise zwischen 3 und 15 Grad, bevorzugt zwischen 7 bis 9 Grad. In der Darstellung der Fig. 9 und 10 beträgt dieser durch einen Doppelpfeil und zwei gestrichelte radiale Verlängerungen gekennzeichnete Winkelabstand α 8 Grad.

Fig. 9 ist eine Darstellung entsprechend einer Sicht auf die Innenseite des Ausfallendes 1b ohne den daran gehaltenen Innenarm 22a des Basiselements, allerdings mit dessen Anschlagelement 124a und dem am inneren Arm 22a im Presssitz befindlichen Ringelement 218.

Die rahmenseitige Anlagefläche für die Adaptermutter 66 am Rahmenauge 1b ist mit 232 bezeichnet. Wie bei 234 zu erkennen, existiert Freiraum zur Montage von Adaptern für nicht-koaxiale Schaltwerke, etwa von sogenannten Schaltaugen wie aus Patentanmeldungen der SRAM Deutschland GmbH bekannt, die speziell an die Montagesituation eines eigentlich für die koaxiale Montage des hinteren Schaltwerks vorgesehenen Hinterbaurahmens angepasst sind.

Anzumerken ist, dass durch die Ausführung der Adaptermutter 66 mit dem Anschlagflanschabschnitt 168 und des Basiselements mit dem Anschlagelement 124 ein vergleichsweise großer Abstützradius R und damit Abstützdurchmesser in Bezug auf die in Fig. 2 a) dargestellte geometrische Achse A erreicht wird. Dieser Abstützradius ist durch den Doppelpfeil R repräsentiert und deutlich größer als der in Fig. 4 durch den hinzugefügten Doppelpfeil D angezeigte Abstützradius der bekannten Konstruktion gemäß der DE'253.

Fig. 10 entspricht in der Darstellung der Fig. 9 und zeigt eine Ausführungsvariante der Adaptermutter 66. Diese weist einen zweiten Anschlagbereich auf, der analog zum Anschlag 168 durch einen radial vorstehenden Abschnitt 240 des Außenflansches 202 gebildet ist und zur Begrenzung des Schwenkbereiches des Schaltwerks 10 nach hinten dient. Dieser Anschlag 240 kann ebenfalls mit dem Anschlagelement 124 des Basiselements 20 zusammenwirken.

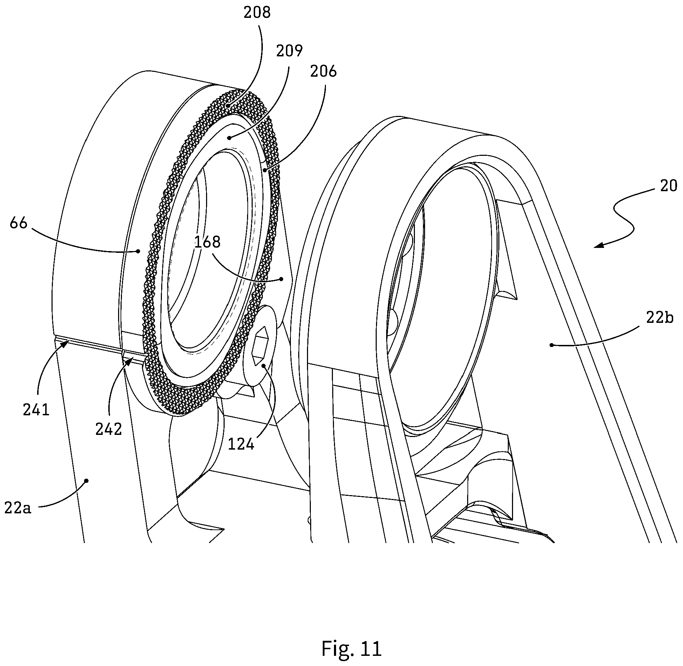

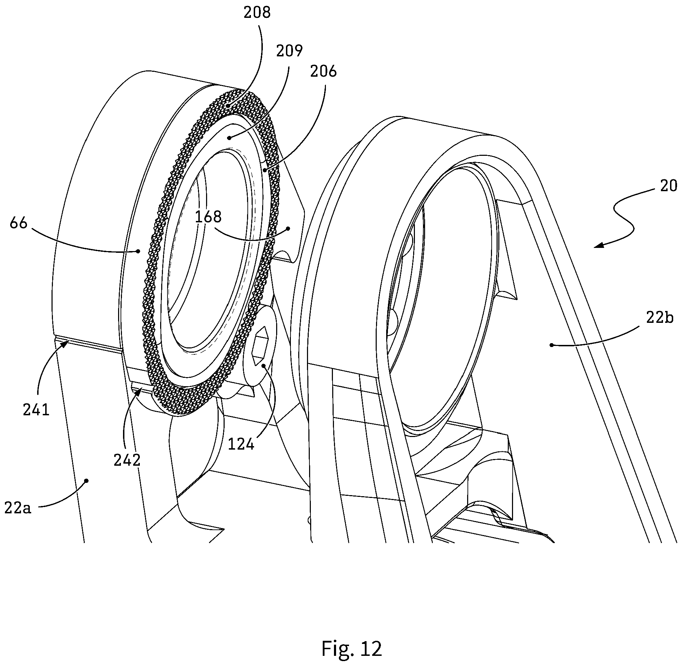

Die Figuren 11 und 12 zeigen noch einmal die Adaptermutter 66 der Figur 5 bis 9 in ihrer am inneren Arm 22a gehaltenen Stellung, und zwar in Fig. 11 im Anschlageingriff ihres Anschlagflansches 168 an dem Anschlagelement 124a des Basiselements 20 und in Fig. 12 in einem Montagezustand, bei dem dieser Anschlageingriff zwischen den Anschlägen 168 und 124 noch nicht hergestellt ist. Ein solcher Zustand kann auftreten im Zuge der Montage des Basiselements am Hinterbaurahmen 1. Durch Ausüben von Drehkräften auf die Adaptermutter 66 durch Drehen des Adapterbolzens 61 in der Festziehrichtung vermittels eines geeigneten Werkzeugs wird zuerst der Anschlagflansch 168 der Adaptermutter 66 an dem Anschlagelement 124 des Basiselements 20 zur Anlage gebracht, und danach können dann durch weiteres Verdrehen des Adapterbolzens 61 in der Festziehrichtung vermittels der Adaptermutter 66 Einstell-Drehkräfte auf das Basiselement 20 ausgeübt werden, um dieses in die Soll-Winkelposition am Ausfallende 1b mit der gewünschten Spannung der Kette der Kettenschaltung zu bringen.

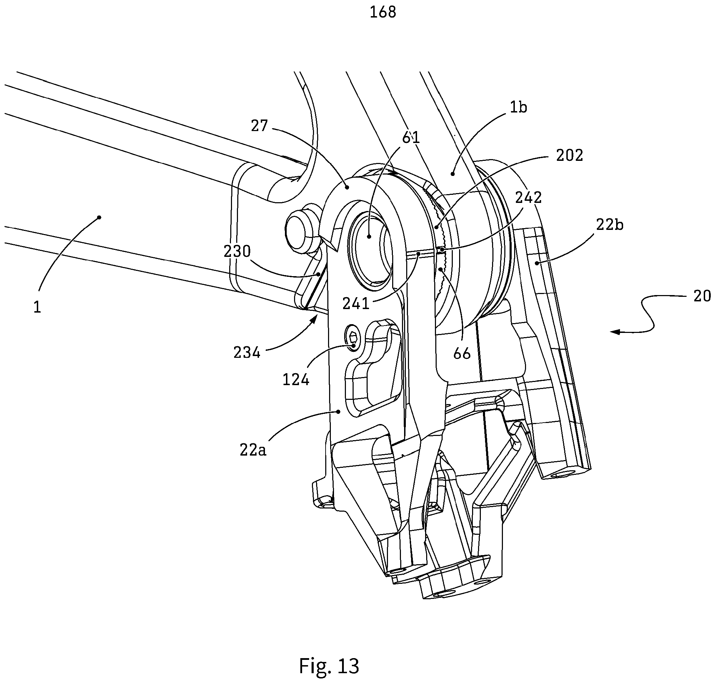

Fig. 13 zeigt das am Rahmenhinterbau, genauer dem Ausfallende oder Rahmenauge 1b richtig und fest montierte Basiselement 20, so wie es als Teil des kompletten Schaltwerks mit dem zugehörigen Schwenkmechanismus, dem beweglichen Element und der Kettenführung koaxial zur Hinterradachse am Rahmenhinterbau 1 montiert wäre. Der innere Arm 22a ist dann zwischen einer inneren Seite der Adaptermutter 66 und einer Statorbaugruppe der Hinterradradachsanordnung festgeklemmt und reibschlüssig in seiner Winkelstellung fixiert. Eine erkennbare Stützstruktur des Basiselements ist mit 234 bezeichnet. Zu erkennen ist, dass der Anschlag 124 des inneren Arms 22a von einem gesonderten, in eine Schrauböffnung des Innenarms eingeschraubten Anschlagbolzen gebildet ist. Zu erkennen ist auch eine schon in Fig. 5 an sich erkennbare Nabenführung 27 auf der Innenseite des inneren Arms 22a des Basiselements 20.

Fig. 13 zeigt also die Winkel-Normalposition oder Winkel-Sollposition des Basiselements 20 relativ zu der Adaptermutter 66 und damit dem Rahmenauge 1b. Wie dargelegt, wird das Schaltwerk 10 zusammen mit der Adaptermutter 66 so lange nach hinten verdreht, bis der Kettendurchhang verschwindet und nach weiterem Anziehen des Adapterbolzens 61 unter Drehmitnahme der Adaptermutter 66 und der resultierenden Drehmitnahme des Schaltwerks 10 im Uhrzeigersinn der gewünschte bzw. vom Hersteller vorgesehene Chain Gap erreicht ist. Dies entspricht der angesprochenen Normalposition oder Sollposition des Basiselements 20 relativ zu der Adaptermutter 66 und damit dem Rahmenauge 1b, in der auch die Adaptermutter 66 eine Winkel-Normalposition oder Winkel-Sollposition relativ zum Rahmenauge einnimmt, die im der fertig montierten Zustand vermittels der Hinterradachsanordnung des Hinterrads des Fahrrads am Rahmenauge 1b reibschlüssig fixiert ist.

Dass das Basiselement diese Normalposition oder Sollposition einnimmt, kann sehr einfach durch eine visuelle und/oder haptische Markierung 241 auf dem inneren Arm 22a des Basiselements und eine zugeordnete visuelle und/oder haptische Markierung 242 auf dem Außenumfang des Außenflansches 202 der Adaptermutter 66 erkannt werden, die in der Darstellung gemäß Fig.13 axial fluchten.

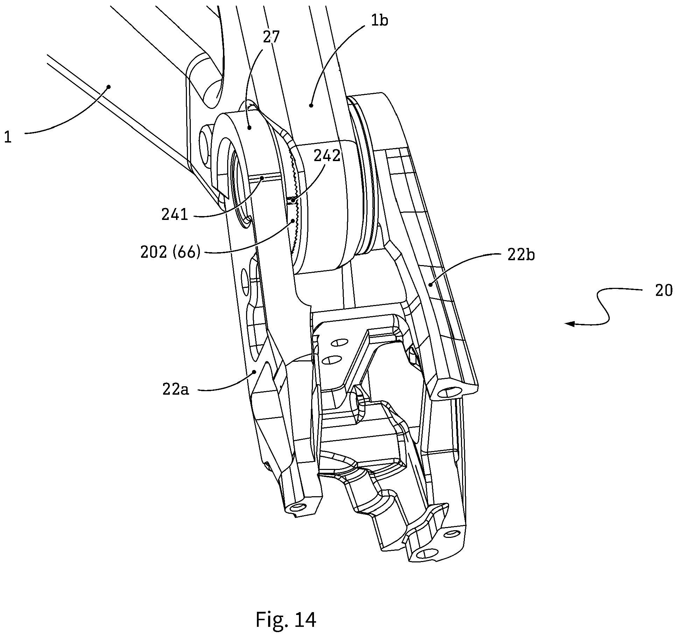

Das Basiselement könnte durch einen Sturz oder Schläge auf das Basiselement 20 aus dieser Sollposition bzw. Normalposition verstellt werden, was die Markierungen einfach erkennen lassen, bzw. anzeigen würden. Die Markierungen bilden also einen sogenannten "crash indicator". Fig. 14 zeigt das Basiselement in einer aus seiner Sollposition bzw. Normalposition unter Reibungsenergieaufnahme verschwenkten Stellung, etwa im Folge eines Sturzes, also gewissenmaßen in einer "gecrashten Position".

Das Basiselement 20 ist gegenüber der Stellung gemäß Fig. 13 nach hinten geschwenkt. Dieser hat zur Folge, dass die Markierung 241 am Innenarm 22a gegenüber der Markierung 242 am Außenumfang des Außenflansches 22 der Adaptermutter 66 nach vorne verschwenkt ist. Die Winkelposition der Adaptermutter 66 entspricht aufgrund der reibschlüssigen Fixierung der Adaptermutter 66 am Rahmenauge 1b weiter ihrer zuvor eingestellten Normalposition oder Sollposition.

Ein Radfahrer, der den Crash erlitten hat, kann nun einfach die Sollposition des Basiselements 20 am Rahmenauge wieder einstellen, indem er die in den Adapterbolzen 61 eingeschraubte und damit in Verbindung mit der Statoranordnung der Hinterachsanordnung den inneren Arm 22a festklemmende Steckachse 7 lockert, dann das Basiselement wieder in die Schwenkposition gemäß Fig. 13 zurückstellt und dann die Steckachse wieder festzieht und damit die axiale Klemmung des inneren Arms 22a wiederherstellt.

Fig. 15 zeigt eine Explosionsdarstellung des Basiselements 20 mit den zugeordneten, vorstehend im Detail beschriebenen Komponenten. Dargestellt ist allerdings eine Ausführungsvariante mit einer geringfügig anders ausgeführten Adaptermutter 66. Anstelle der Ringfläche 209 ohne Rändelung radial innerhalb der Federnut 204 ist nun auch dieser innere Ringbereich der dem Rahmenauge 1b zugekehrten Anlagefläche der Adaptermutter 66 gerändelt.

Zu erkennen ist auch die Gestalt des Federelements 206, welches als im Wesentlichen ringförmig ausgeführtes Federelement mit einer axialen Wellung und eine Lücke zwischen zwei einander zugekehrten Federenden ausgeführt ist. Dementsprechend kann auch die Federnut 204 als hieran angepasstes Kreisbogensegment ausgeführt sein, also mit einer vorliegend gerändelten Lücke zwischen zwei einander benachbarten Nutenden. Es kommt aber auch im Betracht, die Federnut 204 als Ringnut auszuführen.

Fig. 16 zeigt die Komponenten der Fig. 15 in einer geschnittenen Explosionsdarstellung samt dem Ausfallende bzw. dem Rahmenauge 1b. In dieser geschnittenen Darstellung ist die Nut 220 der Adaptermutter 66 für das Ringelement 218 (bzw. das ringförmige Gleitelement 218) gut zu erkennen. Ferner ist ein ringförmiger Eingriffsbund oder Eingriffsvorsprung 221 am Innenumfang des Ringelements 218 gut zu erkennen. Der axial vorstehende Bundbereich 248 des Innenarms 22a ist, wie im Zusammenhang mit Fig. 5 erläutert, der radialen Nut 220 der Adaptermutter 66 im Überlappungsbereich der Adaptermutter mit dem linken Arm 22a zugeordnet und bildet mit diesem einen axialen Überlappungsbereich der Adaptermutter mit dem linken Arm des Basiselements.

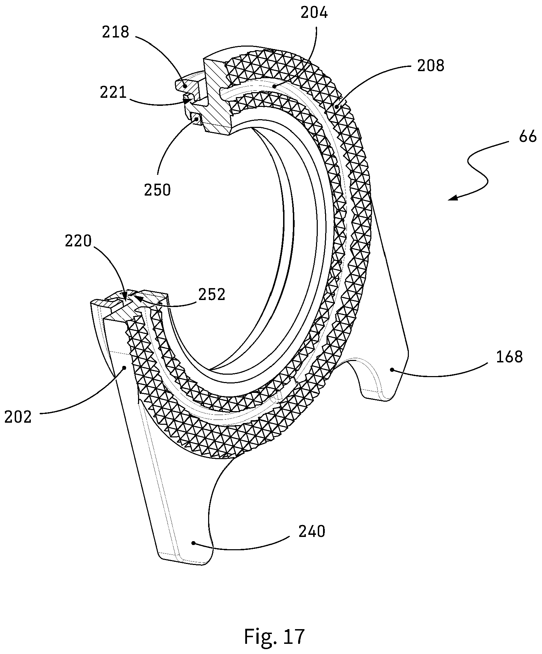

Es wird nun anhand der Fig. 17 bis 21 ein zweites Ausführungsbeispiel der vorliegenden Erfindung beschrieben, in dem nur die Unterschiede gegenüber dem ersten Ausführungsbeispiel der Figuren 5 bis 16 erläutert werden.

Fig. 17 zeigt die Adaptermutter 66, die im Wesentlichen der Adaptermutter 66 des ersten Ausführungsbeispiels gemäß Fig. 10 entspricht, also zwei Anschlag-Außenflanschbereiche 168 und 240 aufweist. Hiervon abweichend ist auch der Anlageflächenbereich radial innerhalb der Federnut 204 gerändelt, wie bei der Ausführungsvariante der Fig. 15 und 16.

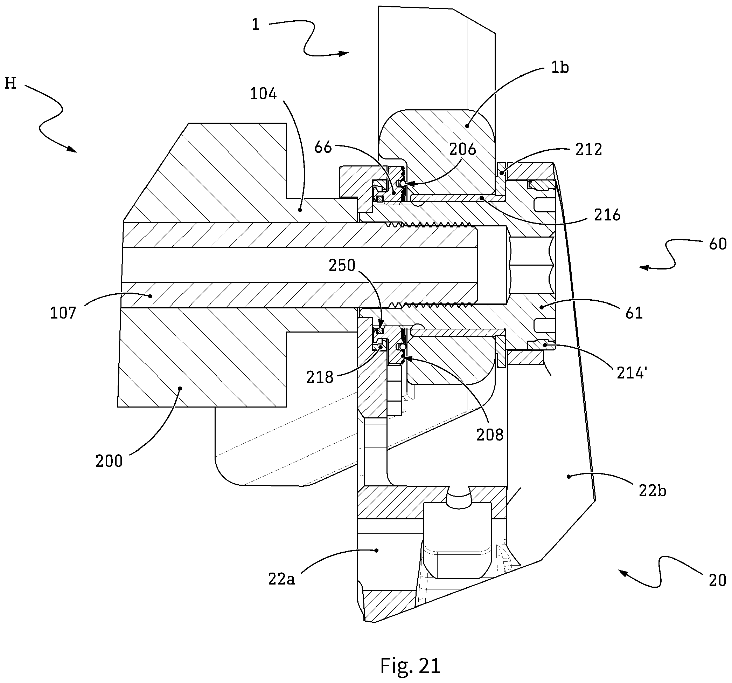

Die zweite Ausführungsform zeichnet sich gegenüber die erste Ausführungsform aber dadurch aus, dass das als Abstandelement 206 dienende Federelement 206 bevorzugt weggelassen ist, sodass dementsprechend auch die Federnut 204 an der Anlagefläche der Adaptermutter 66 weggelassen sein könnte. Man kann die Federnut 204 aber trotzdem vorsehen, um die Teilevielfalt zu reduzieren, wenn eine Ausführungsform mit dem Federelement 206 und eine Ausführungsform ohne das Federelement 206 bereitgestellt werden sollen. Ferner bietet im Falle einer Ausführungsform ohne das Federelement 206 die vorhandene Federnut 204 die Option einer Nachrüstung des Federelements, sollte sich dies als zweckmäßig erweisen. Die Figuren 17 bis 21 offenbaren sowohl eine Ausführungsform mit dem Federelement 206 als auch eine Ausführungsform ohne Federelement 206. Die erstere Ausführungsform ist in Fig. 21 dargestellt.

Ein wesentlicher Unterschied des zweiten Ausführungsbeispiels gegenüber dem ersten Ausführungsbeispiel liegt in einem vorzugsweise ringförmigen Eingriffselement 250, welches einen mitteilbaren reibschlüssigen Mitnahmeeingriff zwischen der Adaptermutter 66 und dem Adapterbolzen 61 vermittelt, um auf Grundlage von in den Adapterbolzen 61 eingeleiteten Drehkräften erhöhte Drehkräfte auf die Adaptermutter 66 ausüben zu können. Fig. 17 zeigt das Eingriffselement 250 aufgenommen in eine Ringnut 252 der Adaptermutter, die radial innerhalb der Ringnut 220 für das Gleitelement 218 angeordnet und nach radial innen offen ist. Dieses Eingriffselement oder dieser Eingriffsring 250 kann auch als Klemmring bezeichnet werden und ist typischerweise aus Kunststoff, beispielsweise Polyamid hergestellt. Der Klemmring 250 wirkt in der Art und Weise eines entsprechenden Klemmrings oder Klemmteils einer selbstsichernden Mutter oder Stoppmutter, die als Schraubensicherung dient.

Beim Einführen und Einschrauben des Adapterbolzens 61 in die Adaptermutter 66 wird dieser Klemmring plastisch und elastisch verformt, wobei der elastische Anteil im Prinzip eine radial wirkende kraftschlüssige Sicherung gegen ein Lösen der Adaptermutter 66 vom Adapterbolzen 61 bewirkt. Hier relevant ist aber nicht diese kraftschlüssige Sicherung, sondern die durch den elastischen Anteil bewirkte reibschlüssige Kopplung der Adaptermutter 66 mit dem Adapterbolzen 61.

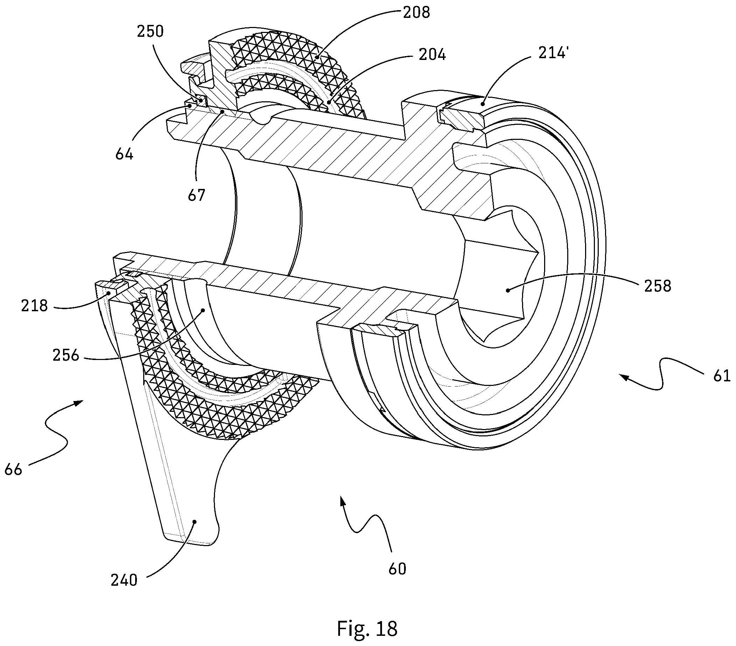

Fig. 18 zeigt den Adapterbolzen 61 in seinem in die Adaptermutter 66 eingeschraubten Zustand. Zu erkennen ist auch ein schematisch dargestelltes Außengewinde 64 des Adapterbolzens, welches sich von einer Ringnut 256 am Außenumfang des Adapterbolzens bis zum inneren Ende des Adapterbolzens 61 erstreckt, sowie ein schematisch dargestelltes Innengewinde 67 der Adaptermutter 66. Dieses Außengewinde und dieses Innengewinde sind betreffend das erste Ausführungsbeispiel auch in den Teilfiguren von Fig. 5 als schematisch dargestellt erkennbar, in den anderen zuvor behandelten Figuren aber nicht explizit dargestellt.

Der Klemmring 250 sorgt also dafür, dass durch Verdrehen des Adapterbolzens 61 in der Festziehrichtung (oder natürlich alternativ entgegen der Festziehrichtung) mittels eines in eine Werkzeugeingriffsöffnung 258 eingeführten Werkzeugs erhöhte Drehmitnahmekräfte auf die Adaptermutter 66 ausübbar sind, sodass das Vorsehen des als Abstandelement dienenden Federelements 206 in der Regel entbehrlich sein wird. Man wird gegebenenfalls auch auf den Gleitring 218 zwischen der Adaptermutter 66 und dem inneren Arm 22a des Basiselements 20 verzichten können, soweit es um das Ausüben hinreichender Drehkräfte auf das Basiselement vermittels des Adapterbolzens 61 und der Adaptermutter 66 zur Justage der Kettenspannung geht.

Die Ausführungsform der Fig. 18 unterscheidet sich von dem ersten Ausführungsbeispiel auch durch einen Lagerring 214' anstelle der Lagerbuchse 214.

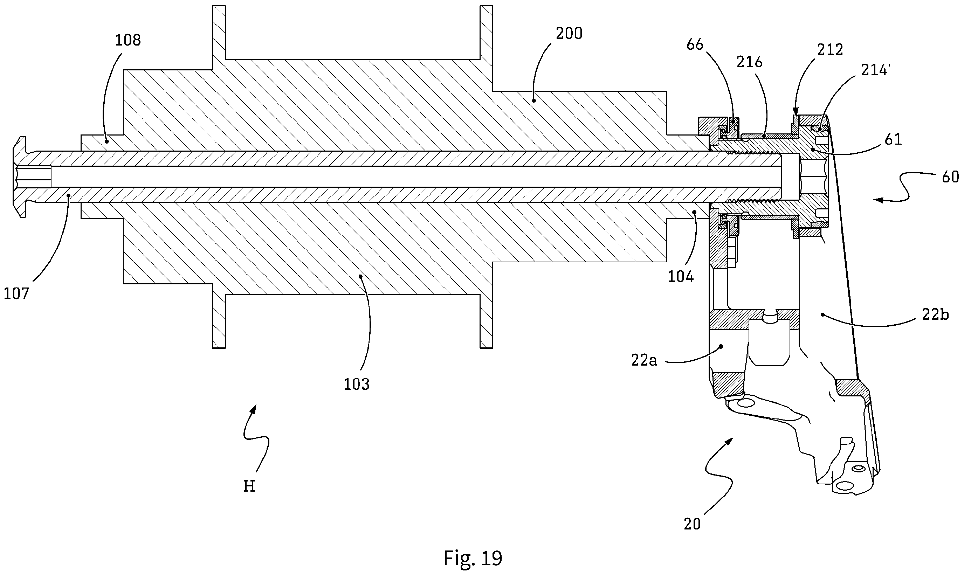

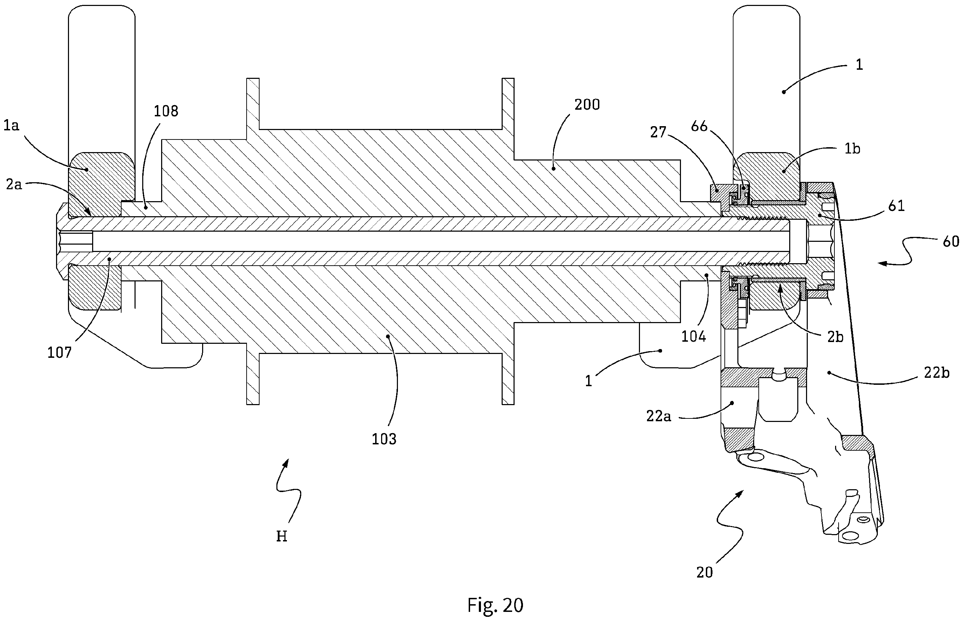

Fig. 19 zeigt die Komponenten der Fig. 18 samt dem Basiselement 20 und einer zugehörigen, im Wesentlichen schematisch dargestellt Hinterradachsanordnung umfassend eine in den Adapterbolzen 61 eingeschraubten Steckachse 7, die sich durch eine stationäre Komponenten 104, 107, 108 und rotatorische Komponenten 103, 200 umfassende Baugruppe H erstreckt. Fig. 20 entspricht dieser Darstellung. Zusätzlich sind das linke Ausfallende 1a und das rechte Ausfallende 1b bzw. das linke Rahmenauge 1a und das rechte Rahmenauge 1b des Hinterbaus 1 des Fahrradrahmens F dargestellt. Wie zu erkennen, ist das Federelement 206 nicht vorgesehen. Fig. 21 zeigt demgegenüber in einer vergrößerten Darstellung die Ausführungsvariante, bei der das Federelement 206 und der Klemmring 250 beide vorhanden sind.

Ein hinteres Schaltwerk einer Fahrradkettenschaltung, welches zur in Bezug auf eine Hinterradachse A koaxialen Montage an einem Halterungsabschnitt 1b eines Hinterbaus 1 eines Fahrradrahmens F eines Fahrrads unter Verwendung eines einen Adapterbolzen 61 und eine Adaptermutter 66 umfassenden Adapters 60 vorgesehen ist und ein zweiarmiges Basiselement 20, einen Schwenkmechanismus 30, ein bewegliches Element 40, und eine Kettenführungsanordnung 50 aufweist, zeichnet sich nach einem Erfindungsaspekt durch wenigstens ein einen mittelbaren reibschlüssigen Eingriff zwischen der Adaptermutter 66 einerseits und wenigstens einem von a) einem inneren ersten Arm 22a des Basiselements 20, b) einer axialen Innenseite des Halterungsabschnitts 1b und c) dem Adapterbolzen 61 andererseits vermittelndes Eingriffselement 206 / 218 / 250 aus, welches in einem definierten vormontierten Zustand im Sinne einer Vergrößerung einer vermittels des Adapterbolzens 61 und der Adaptermutter 66 auf das Basiselement 20 ausübbaren Folge-Drehkraft wirkt.

## Patentansprüche

1. Hinteres Schaltwerk (10) einer Fahrradkettenschaltung zur in Bezug auf eine Hinterradachse (A) koaxialen Montage an einem Hinterbaurahmen (1) eines Fahrrads, aufweisend:
- ein Basiselement (20),
- einen Schwenkmechanismus (30),
- ein bewegliches Element (40), und
- eine Kettenführungsanordnung (50);
wobei der Schwenkmechanismus (30) das Basiselement (20) mit dem beweglichen Element (40) verbindet, und die durch eine Kraftspeicheranordnung in eine Kettenspannrichtung vorgespannte oder vorspannbare Kettenführungsanordnung (50) um eine Drehachse (P) drehbar mit dem beweglichen Element (40) verbunden ist;
wobei das Basiselement (20) ein erstes Anschlussende (21) zur in Bezug auf die Hinterradachse (A) koaxialen Montage an dem Hinterbaurahmen (1) und ein zweites Anschlussende (29) zur Kopplung mit dem Schwenkmechanismus (30) umfasst;
wobei das erste Anschlussende (21) einen ersten Arm (22a) und einen zweiten Arm (22b) aufweist, die in axialer Richtung voneinander beabstandet angeordnet und zur Montage des Schaltwerks (10) an einem zugeordneten Halterungsabschnitt (1b) des Hinterbaurahmens (1) mittels eines zugehörigen Adapters (60) eingerichtet sind;
wobei sich in einem definierten vormontierten Zustand und in einem fertig montierten Zustand der erste Arm (22a) auf einer axialen Innenseite des Halterungsabschnitts (1b) und der zweite Arm (22b) auf einer axialen Außenseite des Halterungsabschnitts (1b) befinden;
wobei der Adapter einen Adapterbolzen (61) und eine zugehörige, mit dem Adapterbolzen (61) verschraubbare Adaptermutter (66) umfasst und in dem definierten vormontierten Zustand und in dem fertig montierten Zustand ein Bolzenkopf (62) des Adapterbolzens (61) auf der axialen Außenseite des Halterungsabschnitts (1b) angeordnet ist und die mit dem Adapterbolzen (61) in Schraubeingriff befindliche Adaptermutter (66) auf der axialen Innenseite des Halterungsabschnitts (1b) angeordnet ist; und
wobei in dem definierten vormontierten Zustand durch Verdrehen des Adapterbolzen (61) in einer Festziehrichtung eine Drehkraft auf die Adaptermutter (66) ausübbar ist, auf deren Grundlage über wenigstens eine Mitnahmeformation der Adaptermutter (66) und wenigstens eine zugeordnete Gegen-Mitnahmeformation des Basiselements (20) eine Folge-Drehkraft auf das im definierten vormontierten Zustand relativ zum Halterungsabschnitt (1b) verdrehbare Basiselement (20) in einer der Festziehdrehrichtung entsprechenden ersten Drehrichtung ausübbar ist, welche entgegen einer auf das Basiselement (20) ausgeübten Gegen-Drehkraft wirkt, die unter Vermittlung einer durch die Kettenführungsanordnung (50) geführten Fahrradkette der Fahrradkettenschaltung in einer zur ersten Drehrichtung entgegengesetzten zweiten Richtung auf das das Basiselement (20) ausgeübt wird;
**gekennzeichnet durch** wenigstens ein einen mittelbaren reibschlüssigen Eingriff zwischen der Adaptermutter (66) einerseits und wenigstens einem von a) dem ersten Arm (22a) des Basiselements (20), b) der axialen Innenseite des Halterungsabschnitts (1b) und c) dem Adapterbolzen (61) andererseits vermittelndes Eingriffselement (206; 218; 250), welches im Sinne einer Vergrößerung der auf das Basiselement ausübbaren Folge-Drehkraft wirkt.

2. Hinteres Schaltwerk nach Anspruch 1, **gekennzeichnet durch** wenigstens ein für die Vermittlung eines mittelbaren reibschlüssigen Eingriffs zwischen der Adaptermutter (66) einerseits und dem Adapterbolzen (61) andererseits ausgeführtes und angeordnetes Eingriffselement (250), welches in dem definierten vormontierten Zustand im Sinne einer Vergrößerung der auf die Adaptermutter ausübbaren Drehkraft wirkt.

3. Hinteres Schaltwerk nach Anspruch 1 oder 2, **gekennzeichnet durch** wenigstens ein für die Vermittlung eines mittelbaren reibschlüssigen Eingriffs zwischen der Adaptermutter (66) einerseits und wenigstens einem von a) dem ersten Arm (22a) des Basiselements (20) und b) der axialen Innenseite des Halterungsabschnitts (1b) andererseits ausgeführtes und angeordnetes Eingriffselement (206; 218), welches in dem definierten vormontierten Zustand ein momentanes Verhältnis zwischen einer auf den Adapterbolzen (61) in der Festziehrichtung ausgeübten und diesen relativ zum Halterungsabschnitt (1b) verdrehenden Ursprungs-Drehkraft und der resultierenden Folge-Drehkraft im Sinne einer Vergrößerung der Folge-Drehkraft beeinflusst.

4. Hinteres Schaltwerk nach einem der Ansprüche 1 bis 3, **gekennzeichnet durch** wenigstens ein für die Vermittlung eines mittelbaren reibschlüssigen Eingriffs ausgeführtes Eingriffselement (250), welches in dem definierten vormontierten Zustand zwischen der Adaptermutter (66) und dem Adapterbolzen (61) eingespannt ist und die Adaptermutter (66) mit dem Adapterbolzen (61) reibschlüssig koppelt, um eine reibschlüssige Drehmitnahme der Adaptermutter (66) durch den Adapterbolzen (61) vorzusehen.

5. Hinteres Schaltwerk nach einem der Ansprüche 1 bis 4, **gekennzeichnet durch** wenigstens ein für die Vermittlung eines mittelbaren reibschlüssigen Eingriffs ausgeführtes Eingriffselement (218), welches in dem definierten vormontierten Zustand ein dem ersten Arm (22a) des Basiselements (20) und der Adaptermutter (66) zugeordnetes, auftretende Reibung zwischen dem ersten Arm (22a) des Basiselements (20) und der Adaptermutter (66) reduzierendes Gleitlager bereitstellt, um einer Verdrehung der Adaptermutter (66) in der ersten Drehrichtung entgegenwirkende Gegenkräfte zu reduzieren.

6. Hinteres Schaltwerk nach einem der Ansprüche 1 bis 5, **gekennzeichnet durch** wenigstens ein für die Vermittlung eines mittelbaren reibschlüssigen Eingriffs ausgeführtes und an der Adaptermutter (66) gehaltenes und als axiales Abstandselement dienendes Eingriffselement (206), welches einer/der vorzugsweise als Rändelfläche (208) ausgeführten Anlagefläche der Adaptermutter (66) und einer Anlagefläche (232) an der axialen Innenseite des Halterungsabschnitts (1b) zugeordnet ist und im definierten vormontierten Zustand als zwischen diesen wirksames Abstandelement wirkt, welches die Anlagefläche der Adaptermutter (66) und die Anlagefläche (232) des Halterungsabschnitts (1b) beim Verdrehen des Adapterbolzens (61) in der Festziehdrehrichtung über einen vorgesehenen Drehwinkelbereich des Adapterbolzens (61) axial beabstandet hält, bevor bei weiterem Verdrehen des Adapterbolzens (61) in der Festziehdrehrichtung die Anlagefläche der Adaptermutter (66) mit der zugeordneten Anlagefläche (232) des Halterungsabschnitts in Anlageeingriff gelangt.

7. Hinteres Schaltwerk nach einem der Ansprüche 1 bis 6, **dadurch gekennzeichnet, dass** ein Außenflanschabschnitt (168) der Adaptermutter (66) die Mitnahmeformation der Adaptermutter (66) bildet und ein von einer Außenseite des ersten Arms (22a; 22a'; 22b") axial in Richtung zum zweiten Arm (22b; 22b") vorstehender, gewünschtenfalls als gesonderter Anschlagbolzen ausgeführter Vorsprung (124) des Basiselements (20) die Gegen-Mitnahmeformation bildet.

8. Hinteres Schaltwerk nach einem der vorhergehenden Ansprüche, **dadurch gekennzeichnet, dass** in dem fertig montierten Zustand der Bolzenkopf (62) und die Adaptermutter (66) durch axiale Gewindekräfte mit dem Halterungsabschnitt (1b) verspannt sind;
wobei die Adaptermutter (66) an einer dem Halterungsabschnitt (1b) zugekehrten axialen Seite mit einer Rändelfläche (208) ausgeführt ist, die in dem fertig montierten Zustand mit einer/der zugeordneten Anlagefläche (232) an der axialen Innenseite des Halterungsabschnitts (1b) eingreift; und wobei die Adaptermutter (66) mit einem Außenflansch (202) ausgeführt ist, der an einer dem Halterungsabschnitt (1b) zugekehrten axialen Seite eine Rändelung aufweist, die die Rändelfläche (208) bildet oder diese in radialer Richtung vergrößert, wobei der Außenflansch sich im fertig montierten Zustand in einen axialen Spalt zwischen dem ersten Arm (22a) des Basiselements (20) und der axialen Innenseite des Halterungsabschnitts (1b) erstreckt.

9. Hinteres Schaltwerk nach Anspruch 8, **dadurch gekennzeichnet, dass** der Außenflansch als sich ringförmig um einen eine Schrauböffnung für den Adapterbolzen (61) aufweisenden Zentralbereich der Adaptermutter (66) erstreckender Ringflansch ausgeführt ist, der an seiner dem Halterungsabschnitt (1b) zugekehrten axialen Seite eine sich ringförmig erstreckende Rändelung aufweist.

10. Hinteres Schaltwerk nach Anspruch 8 oder 9, **dadurch gekennzeichnet, dass** der Außenflansch (202) einen Vornanschlag (168) für einen zugeordneten Gegenanschlag (124) des Basiselements (20) bildet, um im fertig montierten Zustand auf das Basiselement (20) in einer VorwärtsRichtung wirkende Kräfte formschlüssig an der am Halterungsabschnitt (1b) festgespannten Adaptermutter (66) abzustützen.

11. Hinteres Schaltwerk nach einem der Ansprüche 8 bis 10, **dadurch gekennzeichnet, dass** der Außenflansch (202) einen Rückanschlag (240) für einen zugeordneten Gegenanschlag (124) des Basiselement (20) bildet, um in dem definierten vormontierten Zustand mit noch nicht festgespannten Adapter (60) oder einem dem vormontierten Zustand entsprechenden Zustand nach Lockerung des zuvor festgespannten Adapters (60) einen Schwenkwinkel des Basiselements (20) relativ zu dem Halterungsabschnitt (1b) in einer Rückwärts-Richtung zu begrenzen.

12. Hinteres Schaltwerk nach einem der vorhergehenden Ansprüche, **dadurch gekennzeichnet, dass** das Basiselement (20) in dem fertig montierten Zustand an einem Einspannabschnitt seines ersten Arms (22a) zwischen dem Adapter (60) und einer Statorbaugruppe einer einem hinteren Laufrad des Fahrrads zugehörigen Hinterradachsordnung axial eingespannt und reibschlüssig gegen Verdrehen fixiert ist, wobei eine Kontrollanzeige (241, 242) vorgesehen ist, die wenigstens eines von einer momentan bestehenden Soll-Winkelpositionierung des Basiselements (20) und einer momentan bestehenden, von der Soll-Winkelpositionierung abweichenden Fehl-Winkelpositionierung relativ zu wenigstens einem von der Adaptermutter (66), dem Halterungsabschnitt (1b) und der Statorbaugruppe erkennen lässt.

13. Hinteres Schaltwerk nach Anspruch 12, **dadurch gekennzeichnet, dass** die Kontrollanzeige ein erstes Anzeigeelement (241) an einer in einer festen Relativwinkelbeziehung zum Basiselement (20) stehenden gesonderten Komponente oder - vorzugweise - am Basiselement (20) aufweist.

14. Hinteres Schaltwerk nach Anspruch 12 oder 13, **dadurch gekennzeichnet, dass** die Kontrollanzeige ein zweites Anzeigeelement (242) an einem von der Adaptermutter (66), dem Halterungsabschnitt (1b) und der Statorbaugruppe oder an einer in einer festen Relativwinkelbeziehung zu einem von der Adaptermutter (66), dem Halterungsabschnitt (1b) und der Statorbaugruppe stehenden Komponente aufweist.

15. Fahrrad, umfassend einen Fahrradrahmen (F) mit einem hinteren Laufrad und eine ein hinteres Schaltwerk (10) aufweisende Kettenschaltung:
wobei das Fahrrad ferner die folgenden Merkmale aufweist:
- das hintere Laufrad ist mit einer eine Hinterradachsanordnung (104, 107, 108) umfassenden Statoranordnung (104, 107, 108) und einer Rotoranordnung (103, 200) ausgeführt, wobei die Rotoranordnung relativ zur Statoranordnung drehbar gelagert ist und eine Laufradnabe (103) mit einem ein Ritzelpaket (R) der Kettenschaltung tragenden Antreiber (200) umfasst;
- ein Hinterbaurahmen (1) des Fahrradrahmens (F) weist einen linken Halterungsabschnitt und einen rechten Halterungsabschnitt (1b) für eine innere Achse (107) der Hinterradachsanordnung des hinteren Laufrads auf, welche einen vorbestimmten definierten Axialabstand längs einer geometrischen Achse (A) der mittels der Halterungsabschnitte an dem Hinterbaurahmen (1) montierten inneren Achse aufweisen und jeweils ein Gegenlager für eine an der inneren Achse angeordnete, zwischen den Halterungsabschnitten eingespannte und eine Baugruppe der Statoranordnung umfassende Komponentengruppe (4, 5, 8) bilden;
- das hintere Schaltwerk (10, RD) ist in Bezug auf die geometrische Achse (A) koaxial an dem Hinterbaurahmen (1) montiert und umfasst:
- ein Basiselement (20),
- einen Schwenkmechanismus (30),
- ein bewegliches Element (40), und
- eine Kettenführungsanordnung (50);
wobei der Schwenkmechanismus (30) das Basiselement (20) mit dem beweglichen Element (40) verbindet, und die durch eine Kraftspeicheranordnung in eine Kettenspannrichtung vorgespannte oder vorspannbare Kettenführungsanordnung (50) um eine Drehachse (P) drehbar mit dem beweglichen Element (40) verbunden ist;
wobei das Basiselement (20) ein erstes Anschlussende (21) zur in Bezug auf die geometrische Achse (A) koaxialen Montage an dem Hinterbaurahmen (1) und ein zweites Anschlussende (29) zur Kopplung mit dem Schwenkmechanismus (30) umfasst;
wobei das erste Anschlussende (21) einen ersten Arm (22a) und einen zweiten Arm (22b) aufweist, die in axialer Richtung voneinander beabstandet angeordnet und zur Montage des Schaltwerks (10) an dem zugeordneten rechten Halterungsabschnitt (1b) des Hinterbaurahmens (1) mittels eines zugehörigen Adapters (60) eingerichtet sind, wobei der Adapter einen Adapterbolzen (61) und eine zugehörige, mit dem Adapterbolzen (61) verschraubbare Adaptermutter (66) umfasst; wobei sich der erste Arm (22a) auf einer axialen Innenseite des zugeordneten Halterungsabschnitts (1b) und der zweite Arm (22b; 22b') auf einer axialen Außenseite des zugeordneten Halterungsabschnitts (1b) befinden, und
wobei ein Bolzenkopf (62) des Adapterbolzens (61) auf der axialen Außenseite des Halterungsabschnitts (1b) angeordnet ist und die mit dem Adapterbolzen (61) in Schraubeingriff befindliche Adaptermutter (66) auf der axialen Innenseite des Halterungsabschnitts (1b) angeordnet ist;
**dadurch gekennzeichnet, dass** das hintere Schaltwerk (10) gemäß einem der vorhergehenden Ansprüche ausgeführt und am Hinterbaurahmen (1) fertig montiert ist.

## Claims

1. Rear gear shift (10) of a bicycle chain shift mechanism for the coaxial attachment, in terms of a rear axis (A), on a rear tail (1) of a bicycle, having:
- a base element (20),
- a pivoting mechanism (30),
- a movable element (40), and
- a chain guide assembly (50);
wherein the pivoting mechanism (30) connects the base element (20) to the movable element (40), and the chain guide assembly (50), which is or can be pretensioned by a force-accumulating assembly in a chain-tensioning direction, is connected to the movable element (40) so as to be rotatable about a rotation axis (P);
wherein the base element (20) comprises a first connecting end (21) for the coaxial attachment, in terms of the rear axis (A), on the rear tail (1), and a second connecting end (29) for coupling to the pivoting mechanism (30);
wherein the first connecting end (21) has a first arm (22a) and a second arm (22b) which are disposed in the axial direction so as to be mutually spaced apart and are specified, by means of an associated adapter (60), for assembling the gear shift (10) on an assigned mounting portion (1b) of the rear tail (1) ;
wherein, in a defined pre-assembled state and in a completely assembled state, the first arm (22a) is situated on an axial internal side of the mounting portion (1b) and the second arm (22b) is situated on an axial external side of the mounting portion (1b);
wherein the adapter comprises an adapter bolt (61) and an associated adapter nut (66) that is able to be screwed to the adapter bolt (61) and, in the defined pre-assembled state and in the completely assembled state, a bolt head (62) of the adapter bolt (61) is disposed on the axial external side of the mounting portion (1b), and the adapter nut (66) that is in screwed engagement with the adapter bolt (61) is disposed on the axial internal side of the mounting portion (1b); and
wherein, in the defined pre-assembled state, a rotational force is able to be exerted on the adapter nut (66) by rotating the adapter bolt (61) in a tightening direction, a consequential rotational force based on said rotational force by way of at least one entrainment formation of the adapter nut (66) and at least one associated mating entrainment formation of the base element (20) being able to be exerted on the base element (20) which in the defined pre-assembled state is rotatable relative to the mounting portion (1b) in a first rotating direction corresponding to the tightening direction, said consequential rotational force acting counter to a counter rotational force exerted on the base element (20) and, with the facilitation of a bicycle chain of the bicycle chain shift mechanism guided by the chain guide assembly (50), being exerted on the base element (20) in a second direction counter to the first rotating direction;
**characterized by** at least one engagement element (206; 218; 250) which facilitates an indirect frictional engagement between the adapter nut (66), on the one hand, and at least one of a) the first arm (22a) of the base element (20), b) the axial internal side of the mounting portion (1b) and c) the adapter bolt (61), on the other hand, and acts in the sense of a reinforcement of the consequential rotational force being able to be exerted on the base element.

2. Rear gear shift according to Claim 1, **characterized by** at least one engagement element (250) which is embodied and disposed so as to facilitate an indirect frictional engagement between the adapter nut (66), on the one hand, and the adapter bolt (61), on the other hand and acts, in the defined pre-assembled state, in the sense of a reinforcement of the rotational force being able to be exerted on the adapter nut.

3. Rear gear shift according to Claim 1 or 2, **characterized by** at least one engagement element (206; 218) which is embodied and disposed so as to facilitate an indirect frictional engagement between the adapter nut (66), on the one hand, and at least one of a) the first arm (22a) of the base element (20) and b) the axial internal side of the mounting portion (1b), on the other hand, and influences, in the defined pre-assembled state, in the sense of a reinforcement of the consequential rotational force a momentary ratio between an origin rotational force which is exerted on the adapter bolt (61) in the tightening direction and rotates the latter relative to the mounting portion (1b) and the resulting consequential rotational force.

4. Rear gear shift according to one of Claims 1 to 3, **characterized by** at least one engagement element (250) which is embodied so as to facilitate an indirect frictional engagement and is clamped, in the defined pre-assembled state, between the adapter nut (66) and the adapter bolt (61) and couples in a friction-fitting manner the adapter nut (66) to the adapter bolt (61) so as to provide a friction-fitting rotational entrainment of the adapter nut (66) by the adapter bolt (61).

5. Rear gear shift according to one of Claims 1 to 4, **characterized by** at least one engagement element (218) which is embodied so as to facilitate an indirect frictional engagement and provides, in the defined pre-assembled state, a friction bearing that is assigned to the first arm (22a) of the base element (20) and to the adapter nut (66) and reduces friction arising between the first arm (22a) of the base element (20) and the adapter nut (66), so as to reduce counter forces acting counter to a rotation of the adapter nut (66) in the first rotating direction.

6. Rear gear shift according to one of Claims 1 to 5, **characterized by** at least one engagement element (206) which is embodied so as to facilitate an indirect frictional engagement and is held on the adapter nut (66) and serves as an axial spacer element and is assigned to a/the contact face of the adapter nut (66) and to a contact face (232) on the axial inner side of the mounting portion (1b), said contact face preferably being embodied as a knurled face (208), and acts, in the defined pre-assembled state, as an effective spacer element between said contact faces which keeps the contact face of the adapter nut (66) and the contact face (232) of the mounting portion (1b) so as to be axially spaced apart when the adapter bolt (61) is rotated in the tightening direction beyond a provided angular rotating range of the adapter bolt (61), before the contact face of the adapter nut (66) comes into abutting engagement with the assigned contact face (232) of the mounting portion when the adapter bolt (61) is further rotated in the tightening direction.

7. Rear gear shift according to one of Claims 1 to 6, **characterized in that** an external flange portion (168) of the adapter nut (66) forms the entrainment formation of the adapter nut (66), and a protrusion (124) of the base element (20) forms the mating entrainment formation, said protrusion projecting from an external side of the first arm (22a; 22a'; 22b'') axially in the direction towards the second arm (22b; 22b'') and being embodied optionally as a separate detent bolt.

8. Rear gear shift according to one of the preceding claims, **characterized in that**, in the completely assembled state, the bolt head (62) and the adapter nut (66) are braced with the mounting portion (1b) by axial thread forces;
wherein the adapter nut (66) is embodied on an axial side that faces the mounting portion (1b) with a knurled face (208) which, in the completely assembled state, engages with a/the assigned contact face (232) on the axial internal side of the mounting portion (1b); and
wherein the adapter nut (66) is embodied with an external flange (202) which has on an axial side that faces the mounting portion (1b) a knurling that forms the knurled face (208) or enlarges the latter in the radial direction, wherein the external flange extends in the completely assembled state into an axial gap between the first arm (22a) of the base element (20) and the axial internal side of the mounting portion (1b).

9. Rear gear shift according to Claim 8, **characterized in that** the external flange is embodied as an annular flange that extends in an annular manner about a central region of the adapter nut (66) which has a screw opening for the adapter bolt (61) and, on the axial side of said external flange that faces the mounting portion (1b) has a knurling extending in an annular manner.

10. Rear gear shift according to Claim 8 or 9, **characterized in that** the external flange (202) forms a front detent (168) for an assigned counter detent (124) of the base element (20) so as to support, in the completely assembled state, in a form-fitting manner on the adapter nut (66), tightly tensioned on the mounting portion (1b), forces that act on the base element (20) in a forward direction.

11. Rear gear shift according to one of Claims 8 to 10, **characterized in that** the external flange (202) forms a rear detent (240) for an assigned counter detent (124) of the base element (20) so as to limit, in the defined pre-assembled state in which the adapter (60) is not yet tightly tensioned or in a state that corresponds to the pre-assembled state in which the previously tightly tensioned adapter (60) has been loosened, a pivoting angle of the base element (20) relative to the mounting portion (1b) in a rearward direction.

12. Rear gear shift according to one of the preceding claims, **characterized in that** the base element (20), in the completely assembled state, on a clamping portion of the first arm (22a) thereof between the adapter (60) and a stator module of a rear axle assembly associated with a rear road wheel of the bicycle is axially clamped and fixed in a friction-fitting manner against rotation, wherein a verification mark (241, 242) that permits at least one of a momentarily existing nominal angular positioning of the base element (20) and a momentarily existing erroneous angular positioning, deviating from the nominal angular positioning, relative to at least one of the adapter nut (66), the mounting portion (1b) and the stator module to be identified is provided.

13. Rear gear shift according to Claim 12, **characterized in that** the verification mark has a first display element (241) on a separate component or - preferably - on the base element (20) that is at a fixed relative angular relation relative to the base element (20).

14. Rear gear shift according to Claim 12 or 13, **characterized in that** the verification mark has a second display element (242) on one of the adapter nut (66), the mounting portion (1b) and the stator module or on a component that is at a fixed relative angular relation relative to one of the adapter nut (66), the mounting portion (1b) and the stator module.

15. Bicycle comprising a bicycle frame (F) having a rear road wheel and a chain shift mechanism having a rear gear shift (10):
wherein the bicycle furthermore has the following features:
- the rear road wheel is embodied with a stator assembly (104, 107, 108) comprising a rear axle assembly (104, 107, 108) and a rotor assembly (103, 200), wherein the rotor assembly is mounted so as to be rotatable relative to the stator assembly and comprises a road wheel hub (103) having a driver (200) that supports a sprocket pack (R) of the chain shift mechanism;
- a rear tail (1) of the bicycle frame (F) has a left mounting portion and a right mounting portion (1b) for an internal axle (107) of the rear axle assembly of the rear road wheel, said left mounting portion and said right mounting portion having a predetermined defined axial spacing along a geometric axis (A) of the internal axle mounted on the rear tail (1) by means of the mounting portions and forming in each case a counter bearing for a component group (4, 5, 8) that is disposed on the internal axle, clamped between the mounting portions and comprising a module of the stator assembly;
- the rear gear shift (10, RD) is mounted in terms of the geometric axis (A) coaxially on the rear tail (1) and comprises:
- a base element (20),
- a pivoting mechanism (30),
- a movable element (40), and
- a chain guide assembly (50);
wherein the pivoting mechanism (30) connects the base element (20) to the movable element (40), and the chain guide assembly (50), which is or can be pretensioned by a force-accumulating assembly in a chain-tensioning direction, is connected to the movable element (40) so as to be rotatable about a rotation axis (P);
wherein the base element (20) comprises a first connecting end (21) for the coaxial attachment, in terms of the geometric axis (A), on the rear tail (1), and a second connecting end (29) for coupling to the pivoting mechanism (30); wherein the first connecting end (21) has a first arm (22a) and a second arm (22b) which are disposed in the axial direction so as to be mutually spaced apart and are specified, by means of an associated adapter (60), for assembling the gear shift (10) on the assigned right mounting portion (1b) of the rear tail (1), wherein the adapter comprises an adapter bolt (61) and an associated adapter nut (66) that is able to be screwed to the adapter bolt (61) ;
wherein the first arm (22a) is situated on an axial internal side of the assigned mounting portion (1b) and the second arm (22b; 22b') is situated on an axial external side of the assigned mounting portion (1b), and
wherein a bolt head (62) of the adapter bolt (61) is disposed on the axial external side of the mounting portion (1b), and the adapter nut (66) that is in screwed engagement with the adapter bolt (61) is disposed on the axial internal side of the mounting portion (1b);
**characterized in that** the rear gear shift (10) is embodied according to one of the preceding claims and is completely assembled on the rear tail (1).

## Revendications

1. Dérailleur arrière (10) d'un changement de vitesses à dérailleur de bicyclette pour le montage coaxial, par rapport à un axe de roue arrière (A), sur un cadre structural arrière (1) d'une bicyclette, présentant :
- un élément de base (20),
- un mécanisme de pivotement (30),
- un élément mobile (40), et
- un ensemble de guidage de chaîne (50) ;
le mécanisme de pivotement (30) reliant l'élément de base (20) à l'élément mobile (40), et l'ensemble de guidage de chaîne (50) précontraint ou pouvant être précontraint dans une direction de tension de chaîne par le biais d'un ensemble accumulateur de force étant relié à l'élément mobile (40) de manière à pouvoir tourner autour d'un axe de rotation (P) ;
l'élément de base (20) comprenant une première extrémité de raccordement (21) pour le montage coaxial, par rapport à l'axe de roue arrière (A), sur le cadre structural arrière (1) et une deuxième extrémité de raccordement (29) pour l'accouplement au mécanisme de pivotement (30);
la première extrémité de raccordement (21) présentant un premier bras (22a) et un deuxième bras (22b), qui sont disposés de manière espacée l'un de l'autre dans la direction axiale et sont conçus pour le montage du dérailleur (10) sur une partie de support (1b) associée du cadre structural arrière (1) au moyen d'un adaptateur (60) associé ;
dans un état prémonté défini et dans un état complètement monté, le premier bras (22a) se trouvant sur un côté intérieur axial de la partie de support (1b) et le deuxième bras (22b) se trouvant sur un côté extérieur axial de la partie de support (1b) ;
l'adaptateur comprenant un boulon d'adaptateur (61) et un écrou d'adaptateur (66) associé pouvant être vissé sur le boulon d'adaptateur (61) et, dans l'état prémonté défini et dans l'état complètement monté, une tête de boulon (62) du boulon d'adaptateur (61) étant disposée sur le côté extérieur axial de la partie de support (1b) et l'écrou d'adaptateur (66) se trouvant en prise par vissage avec le boulon d'adaptateur (61) étant disposé sur le côté intérieur axial de la partie de support (1b) ; et
dans l'état prémonté défini, par rotation du boulon d'adaptateur (61) dans un sens de serrage à fond, une force de rotation pouvant être exercée sur l'écrou d'adaptateur (66), force sur la base de laquelle, par le biais d'au moins une formation d'entraînement de l'écrou d'adaptateur (66) et d'au moins une formation d'entraînement conjuguée associée de l'élément de base (20), une force de rotation subséquente peut être exercée sur l'élément de base (20) pouvant tourner par rapport à la partie de support (1b) dans l'état prémonté défini, dans un premier sens de rotation correspondant au sens de rotation de serrage à fond, laquelle force de rotation subséquente agit à l'encontre d'une force de rotation conjuguée exercée sur l'élément de base (20), laquelle force de rotation conjuguée est exercée sur l'élément de base (20) dans un deuxième sens opposé au premier sens de rotation par l'intermédiaire d'une chaîne de bicyclette, guidée par le biais de l'ensemble de guidage de chaîne (50), du changement de vitesses à dérailleur de bicyclette ;
**caractérisé par** au moins un élément d'entrée en prise (206 ; 218 ; 250) transmettant une entrée en prise par friction directe entre l'écrou d'adaptateur (66) d'une part et au moins un parmi a) le premier bras (22a) de l'élément de base (20), b) le côté intérieur axial de la partie de support (1b) et c) le boulon d'adaptateur (61) d'autre part, lequel élément d'entrée en prise agit dans le sens d'une augmentation de la force de rotation subséquente pouvant être exercée sur l'élément de base.

2. Dérailleur arrière selon la revendication 1, **caractérisé par** au moins un élément d'entrée en prise (250) réalisé et disposé pour la transmission d'une entrée en prise par friction directe entre l'écrou d'adaptateur (66) d'une part et le boulon d'adaptateur (61) d'autre part, lequel élément d'entrée en prise agit dans le sens d'une augmentation de la force de rotation pouvant être exercée sur l'écrou d'adaptateur dans l'état prémonté défini.

3. Dérailleur arrière selon la revendication 1 ou 2, **caractérisé par** au moins un élément d'entrée en prise (206 ; 218) réalisé et disposé pour la transmission d'une entrée en prise par friction directe entre l'écrou d'adaptateur (66) d'une part et au moins un parmi a) le premier bras (22a) de l'élément de base (20) et b) le côté intérieur axial de la partie de support (1b) d'autre part, lequel élément d'entrée en prise, dans l'état prémonté défini, influence un rapport instantané entre une force de rotation d'origine exercée sur le boulon d'adaptateur (61) dans le sens de serrage à fond et faisant tourner celui-ci par rapport à la partie de support (1b) et la force de rotation subséquente résultante dans le sens d'une augmentation de la force de rotation résultante.

4. Dérailleur arrière selon l'une des revendications 1 à 3, **caractérisé par** au moins un élément d'entrée en prise (250) réalisé pour la transmission d'une entrée en prise par friction directe, lequel élément d'entrée en prise, dans l'état prémonté défini, est serré entre l'écrou d'adaptateur (66) et le boulon d'adaptateur (61) et accouple par friction l'écrou d'adaptateur (66) au boulon d'adaptateur (61), afin de de fournir un entraînement en rotation à friction de l'écrou d'adaptateur (66) par le biais du boulon d'adaptateur (61) .

5. Dérailleur arrière selon l'une des revendications 1 à 4, **caractérisé par** au moins un élément d'entrée en prise (218) réalisé pour la transmission d'une entrée en prise par friction directe, lequel élément d'entrée en prise, dans l'état prémonté défini, produit un palier lisse associé au premier bras (22a) de l'élément de base (20) et à l'écrou d'adaptateur (66), réduisant une friction survenant entre le premier bras (22a) de l'élément de base (20) et l'écrou d'adaptateur (66), afin de réduire des forces conjuguées s'opposant à une rotation de l'écrou d'adaptateur (66) dans le premier sens de rotation.

6. Dérailleur arrière selon l'une des revendications 1 à 5, **caractérisé par** au moins un élément d'entrée en prise (206) réalisé pour la transmission d'une entrée en prise par friction directe et retenu sur l'écrou d'adaptateur (66) et servant d'élément d'espacement axial, lequel est associé à une/la surface d'appui, réalisée de préférence sous forme de surface moletée (208), de l'écrou d'adaptateur (66) et à une surface d'appui (232) sur le côté intérieur axial de la partie de support (1b) et, dans l'état prémonté défini, agit en tant qu'élément d'espacement actif entre celles-ci, lequel maintient de manière axialement espacée la surface d'appui de l'écrou d'adaptateur (66) et la surface d'appui (232) de la partie de support (1b) lors de la rotation du boulon d'adaptateur (61) dans le sens de rotation de serrage à fond sur une plage angulaire de rotation prévue du boulon d'adaptateur (61), avant que la surface d'appui de l'écrou d'adaptateur (66) ne vienne en prise par appui avec la surface d'appui (232) associée de la partie de support en cas de rotation supplémentaire du boulon d'adaptateur (61) dans le sens de rotation de serrage à fond.

7. Dérailleur arrière selon l'une des revendications 1 à 6, **caractérisé en ce qu'**une partie de bride extérieure (168) de l'écrou d'adaptateur (66) forme la formation d'entraînement de l'écrou d'adaptateur (66) et une saillie (124) de l'élément de base (20), faisant saillie à partir d'un côté extérieur du premier bras (22a ; 22a' ; 22b") axialement en direction du deuxième bras (22b ; 22b"), éventuellement réalisée sous forme de boulon de butée séparé, forme la formation d'entraînement conjuguée.

8. Dérailleur arrière selon l'une des revendications précédentes, **caractérisé en ce que**, dans l'état complètement monté, la tête de boulon (62) et l'écrou d'adaptateur (66) sont serrés sur la partie de support (1b) par des forces de filetage axiales ;
l'écrou d'adaptateur (66), sur un côté axial tourné vers la partie de support (1b), étant doté d'une surface moletée (208) qui, dans l'état complètement monté, vient en prise avec une/la surface d'appui (232) associée sur le côté intérieur axial de la partie de support (1b) ; et
l'écrou d'adaptateur (66) étant doté d'une bride extérieure (202) qui présente un moletage sur un côté axial tourné vers la partie de support (1b), lequel moletage forme la surface moletée (208) ou agrandit celle-ci dans la direction radiale, la bride extérieure s'étendant, dans l'état complètement monté, dans un espace axial entre le premier arbre (22a) de l'élément de base (20) et le côté intérieur axial de la partie de support (1b).

9. Dérailleur arrière selon la revendication 8, **caractérisé en ce que** la bride extérieure est réalisée sous forme de bride annulaire s'étendant de manière annulaire autour d'une région centrale de l'écrou d'adaptateur (66) présentant une ouverture filetée pour le boulon d'adaptateur (61), laquelle bride annulaire présente, sur son côté axial tourné vers la partie de support (1b), un moletage s'étendant de manière annulaire.

10. Dérailleur arrière selon la revendication 8 ou 9, **caractérisé en ce que** la bride extérieure (202) forme une butée avant (168) pour une butée conjuguée (124) associée de l'élément de base (20), afin de supporter, par complémentarité de forme, sur l'écrou d'adaptateur (66) serré fixement sur la partie de support (1b), des forces agissant sur l'élément de base (20) dans un sens vers l'avant dans l'état complètement monté.

11. Dérailleur arrière selon l'une des revendications 8 à 10, **caractérisé en ce que** la bride extérieure (202) forme une butée arrière (240) pour une butée conjuguée (124) associée de l'élément de base (20), afin de limiter un angle de pivotement de l'élément de base (20) par rapport à la partie de support (1b) dans un sens vers l'arrière dans l'état prémonté défini où l'adaptateur (60) n'est pas encore serré fixement ou dans un état correspondant à l'état prémonté après le desserrage de l'adaptateur (60) préalablement serré fixement.

12. Dérailleur arrière selon l'une des revendications précédentes, **caractérisé en ce que** l'élément de base (20) est serré axialement et fixé par friction de manière à empêcher une rotation dans l'état complètement monté sur une partie de serrage de son premier bras (22a) entre l'adaptateur (60) et un module de stator d'un ensemble d'axe de roue arrière associé à une roue mobile arrière de la bicyclette, un affichage de contrôle (241, 242) étant prévu, lequel permet d'identifier au moins un positionnement parmi un positionnement angulaire de consigne, existant momentanément, de l'élément de base (20) et un positionnement angulaire erroné, existant momentanément, différant du positionnement angulaire de consigne, par rapport à au moins un élément parmi l'écrou d'adaptateur (66), la partie de support (1b) et le module de stator.

13. Dérailleur arrière selon la revendication 12, **caractérisé en ce que** l'affichage de contrôle présente un premier élément d'affichage (241) sur un composant séparé se trouvant dans une relation angulaire relative fixe par rapport à l'élément de base (20), ou, de préférence, sur l'élément de base (20).

14. Dérailleur arrière selon la revendication 12 ou 13, **caractérisé en ce que** l'affichage de contrôle présente un deuxième élément d'affichage (242) sur un élément parmi l'écrou d'adaptateur (66), la partie de support (1b) et le module de stator ou sur un composant se trouvant dans une relation angulaire relative fixe par rapport à un élément parmi l'écrou d'adaptateur (66), la partie de support (1b) et le module de stator.

15. Bicyclette, comprenant un cadre de bicyclette (F) comportant une roue mobile arrière et un changement de vitesses à dérailleur présentant un dérailleur arrière (10) ;
la bicyclette présentant en outre les caractéristiques suivantes :
- la roue mobile arrière est dotée d'un ensemble de stator (104, 107, 108) comprenant un ensemble d'axe de roue arrière (104, 107, 108) et d'un ensemble de rotor (103, 200), l'ensemble de rotor étant monté de manière rotative par rapport à l'ensemble de stator et comprenant un moyeu de roue mobile (103) comportant un dispositif d'entraînement (200) supportant un groupe de pignons (R) du changement de vitesse à dérailleur ;
- un cadre structural arrière (1) du cadre de bicyclette (F) présente une partie de support gauche et une partie de support droite (1b) pour un axe intérieur (107) de l'ensemble d'axe de roue arrière de la roue mobile arrière, lesquelles présentent une distance axiale définie prédéterminée le long d'un axe géométrique (A) de l'axe intérieur monté sur le cadre structural arrière (1) au moyen des parties de support et forment respectivement un appui conjugué pour un groupe de composants (4, 5, 8) disposé sur l'axe intérieur, serré entre les parties de support et comprenant un module de l'ensemble de stator ;
- le dérailleur arrière (10, RD) est monté sur le cadre structural arrière (1) de manière coaxiale par rapport à l'axe géométrique (A) et comprend :
- un élément de base (20),
- un mécanisme de pivotement (30),
- un élément mobile (40), et
- un ensemble de guidage de chaîne (50) ;
le mécanisme de pivotement (30) reliant l'élément de base (20) à l'élément mobile (40), et l'ensemble de guidage de chaîne (50) précontraint ou pouvant être précontraint dans une direction de tension de chaîne par le biais d'un ensemble accumulateur de force étant relié à l'élément mobile (40) de manière à pouvoir tourner autour d'un axe de rotation (P) ;
l'élément de base (20) comprenant une première extrémité de raccordement (21) pour le montage coaxial, par rapport à l'axe géométrique (A), sur le cadre structural arrière (1) et une deuxième extrémité de raccordement (29) pour l'accouplement au mécanisme de pivotement (30) ;
la première extrémité de raccordement (21) présentant un premier bras (22a) et un deuxième bras (22b), qui sont disposés de manière espacée l'un de l'autre dans la direction axiale et sont conçus pour le montage du dérailleur (10) sur la partie de support droite (1b) associée du cadre structural arrière (1) au moyen d'un adaptateur (60) associé ; l'adaptateur comprenant un boulon d'adaptateur (61) et un écrou d'adaptateur (66) associé pouvant être vissé sur le boulon d'adaptateur (61) ;
le premier bras (22a) se trouvant sur un côté intérieur axial de la partie de support (1b) associée et le deuxième bras (22b ; 22b') se trouvant sur un côté extérieur axial de la partie de support (1b) ;
une tête de boulon (62) du boulon d'adaptateur (61) étant disposée sur le côté extérieur axial de la partie de support (1b) et l'écrou d'adaptateur (66) se trouvant en prise par vissage avec le boulon d'adaptateur (61) étant disposé sur le côté intérieur axial de la partie de support (1b) ;
**caractérisé en ce que** le dérailleur arrière (10) est réalisé selon l'une des revendications précédentes et est monté complètement sur le cadre structural arrière (1).
